(19) Europäisches Patentamt / European Patent Office / Office européen des brevets

(11) **EP 4 019 888 B1**

(12) **EUROPEAN PATENT SPECIFICATION**

(45) Date of publication and mention of the grant of the patent:
**24.04.2024 Bulletin 2024/17**

(21) Application number: **21216011.3**

(22) Date of filing: **20.12.2021**

(51) International Patent Classification (IPC):
***G01B 7/012*** *(2006.01)*

(52) Cooperative Patent Classification (CPC):
**G01B 7/012**

(54) **INDUCTIVE POSITION DETECTION CONFIGURATION FOR INDICATING A MEASUREMENT DEVICE STYLUS POSITION AND INCLUDING COIL MISALIGNMENT COMPENSATION**

KONFIGURATION ZUR INDUKTIVEN POSITIONSERFASSUNG ZUR ANZEIGE EINER MESSVORRICHTUNGSFÜHLERSTIFTPOSITION EINSCHLIESSLICH SPULENFEHLAUSRICHTUNGSKOMPENSATION

CONFIGURATION DE DÉTECTION DE POSITION INDUCTIVE POUR INDIQUER UNE POSITION DE STYLET D'UN DISPOSITIF DE MESURE ET COMPRENANT UNE COMPENSATION DE DÉSALIGNEMENT DE BOBINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2020 US 202017135672**
**28.12.2020 US 202017135665**

(43) Date of publication of application:
**29.06.2022 Bulletin 2022/26**

(73) Proprietor: **Mitutoyo Corporation**
**Kawasaki-shi, Kanagawa 213-8533 (JP)**

(72) Inventor: **HAMNER, Christopher Richard**
**Kirkland 98034 (US)**

(74) Representative: **MERH-IP Matias Erny Reichl Hoffmann**
**Patentanwälte PartG mbB**
**Paul-Heyse-Strasse 29**
**80336 München (DE)**

(56) References cited:
**DE-A1-102011 052 609    US-A1- 2020 141 717**

**Description**

BACKGROUND

Technical Field

This disclosure relates to precision metrology, and more particularly to inductive type sensing configurations for use in probes used with coordinate measuring machines.

Description of the Related Art

Coordinate measurement machines (CMM's) can obtain measurements of inspected workpieces. One exemplary prior art CMM described in U.S. Patent No. 8,438,746 includes a probe for measuring a workpiece, a movement mechanism for moving the probe, and a controller for controlling the movement. A CMM including a surface scanning probe is described in U.S. Patent No. 7,652,275. As disclosed therein, a mechanical contact probe or an optical probe may scan across the workpiece surface.
A CMM employing a mechanical contact probe is also described in U.S. Patent No. 6,971,183. The probe disclosed therein includes a stylus having a surface contact portion, an axial motion mechanism, and a rotary motion mechanism. The axial motion mechanism includes a moving member that allows the contact portion to move in a central axis direction (also referred to as a Z direction or an axial direction) of the measuring probe. The rotary motion mechanism includes a rotating member that allows the contact portion to move perpendicular to the Z direction. The axial motion mechanism is nested inside the rotary motion mechanism. The contact portion location and/or workpiece surface coordinates are determined based on the displacement of the rotating member and the axial displacement of the axial motion moving member.
Inductive sensing technologies are known to be environmentally robust, and have various desirable sensing properties. It is known to use precision LVDT's or the like to measure displacements or positions of various internal elements in mechanical contact probes similar to those referred to above. However, LVDT's and other known inductive type sensors that are sufficiently accurate for use in CMM probes may be rather large or awkward to incorporate, and the associated motion mechanisms and/or displacement detector arrangements may be relatively expensive and/or susceptible to various "cross coupling" errors (e.g., due to the general configuration and/or mechanism and/or detector imperfections, etc.). US Patent No. 4,810,966, (the '966 patent) discloses an inductive sensor configuration that is relatively planar and relatively economical, and which can detect the three-dimensional position of a nearby conductive target. However, the configurations disclosed in the '966 patent have several design deficiencies relative to providing the accuracy and/or form factors necessary for successful adaptation for use in a CMM scanning probe. In short, the configurations of the '966 patent lack the sophistication and features necessary for providing reasonable levels of accuracy in modern metrology instruments such as a CMM probe. Other issues associated with the use of known inductive sensing systems such as those outlined above in a CMM probe may include signal/response non-linearities that are inherent in the displacement response of the system, position errors resulting from less than perfect assembly and alignment, and signal drift due to environmental effects on mechanical and electrical components (e.g., due to temperature changes, etc.).
US 2020/141717 A1 shows an inductive position detector for stylus position measurement in a scanning probe comprising a coil board configuration located along a central axis in the probe with a motion volume extending on opposite sides of the coil board configuration. The coil board configuration includes N top rotary sensing coils and a top axial sensing coil configuration, and N bottom rotary sensing coils and a bottom axial sensing coil configuration. A pair of stylus-coupled conductive disruptors move along Z (axial) and X-Y (rotary) directions in the motion volume. A generating coil of the coil board configuration generates a changing magnetic flux (e.g., encompassing all or at least part of the disruptors), and coil signals indicate the disruptors and/or stylus positions. Areas of the conductive disruptors may be larger than an area of the generating coil in some implementations, and the conductive disruptors may each comprise a plurality of concentric conductive loops, and spirals.
DE 10 2011 052609 A1 shows a method which involves measuring a deflection of a stylus with a linear variable differential transformer hybrid coil arranged at a probe head. An analog/digital converter is provided to convert the measured signal. A control unit is set to provide a primary voltage to the hybrid coil. A raw signal of secondary coils is linked with an offset voltage. The characteristic sizes of the offset voltage are varied by the control unit, until an input voltage at the analog/digital converter falls below a predetermined value.
A need exists for an improved inductive sensing configuration for use in a CMM probe (e.g., wherein the displacement detector configurations may be less susceptible to errors such as those noted above, and/or may be relatively less expensive, etc.).

BRIEF SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

A scanning probe responsive in responsive in 3 axes is provided for use in a measuring machine (e.g., a CMM). The scanning probe includes a stylus suspension portion, a stylus position detection portion, and signal processing and control circuitry.

The stylus suspension portion is attached to a frame of the scanning probe, and includes a stylus coupling portion that is configured to be rigidly coupled to a stylus, and a stylus motion mechanism that is configured to enable axial motion of the stylus coupling portion along an axial direction, and rotary motion of the stylus coupling portion about a rotation center.

The stylus position detection portion is arranged along a central axis that is parallel to the axial direction and nominally aligned with the rotational center, and is based on inductive sensing principles. The stylus position detection portion includes a coil board configuration, at least one misalignment compensation element, and a disruptor configuration. The coil board configuration comprises a field generating coil configuration that comprises at least one field generating coil, a top axial sensing coil configuration (TASCC) that comprises at least one top axial sensing coil, a bottom axial sensing coil configuration (BASCC) that comprises at least one bottom axial sensing coil, N top rotary sensing coils (TRSC), and N bottom rotary sensing coils (BRSC), where N is an integer greater than 3. The coil board configuration comprises a printed circuit board with a plurality of layers in which coils of the coil board configuration are located.

The at least one misalignment compensation element is configured to compensate a signal offset that results from a misalignment of at least one coil of the coil board configuration. A misalignment of at least one coil may result from a registration error in a layer to layer registration as part of a fabrication process.

The disruptor configuration comprises a conductive disruptor element that provides a disruptor area and is located along the central axis in a disruptor motion volume. The disruptor element is coupled to the stylus suspension portion by a coupling configuration, and moves in the disruptor motion volume relative to an undeflected position in response to a deflection of the stylus suspension portion. The disruptor element may be described as moving over operating motion ranges +/- Rz along the axial direction in response to the axial motion, and over respective operating motion ranges +/- Rx and +/- Ry along orthogonal X and Y directions that are orthogonal to the axial direction in response to the rotary motion. The field generating coil configuration generates a changing magnetic flux generally along the axial direction in the disruptor motion volume in response to a coil drive signal.

The signal processing and control circuitry is operably connected to the coils of the stylus position detection portion to provide the coil drive signal, and is configured to input signals from the receiver coil portion comprising respective signal components provided by the respective rotary and axial sensing coils. It is further configured to output signals indicative of the axial position and the rotary position of the disruptor element or the stylus relative to the frame or housing of the scanning probe.

In some implementations, the at least one misalignment compensation element may be added to the coil board configuration based at least in part on a determination of a signal offset resulting from the misalignment of the at least one coil, and for which the at least one compensation element is added to reduce the signal offset. In some such implementations, the at least one misalignment compensation element comprises a first misalignment compensation element, and the first misalignment compensation element is added at a first location in the coil board configuration based at least in part on a determination that the addition of the first misalignment compensation element at the first location reduces the signal offset. The first location may be selected from a plurality of possible locations based on a determination that the positioning of the first misalignment compensation element at the first location results in a greater reduction in the signal offset than would result from a positioning of the first misalignment compensation element at other locations of the plurality of possible locations.

In some such implementations, the at least one misalignment compensation element comprises one or more pads or pins, which, in operation, increase or decrease a magnetic field through at least one coil and which correspondingly reduce the signal offset. The one or more pads or pins may comprise a plurality of pins positioned on one side of the coil board configuration with respect to a plane including the central axis, wherein the pins are generally parallel to the central axis.

In some such implementations, the at least one misalignment compensation element comprises one or more conductive shorts, which, in operation, adjust a size of a coil of the coil board configuration.

In some implementations, the field generating coil configuration comprises a top field generating coil configuration and a bottom field generating coil configuration, and the at least one misalignment compensation element comprises one or more conductive shields positioned proximate to the top field generating coil configuration and one or more conductive shields positioned proximate to the bottom field generating coil configuration. In some such implementations, the one or more conductive shields positioned proximate to the top field generating coil configuration comprise an inner conductive shield configuration having an area generally corresponding to an area of an inner portion of the top rotary sensing coils, and an outer conductive shield configuration having an area generally corresponding to an area of an outer portion of the top rotary sensing coils. The one or more conductive shields positioned proximate to the bottom field generating coil configuration similarly comprise an inner conductive shield configuration having an area generally corresponding to an area of an inner portion of the bottom rotary sensing coils, and an outer conductive shield configuration having an area generally corresponding to an area of an outer portion of the bottom rotary sensing coils.

In some implementations, a method comprises moving a scanning probe as disclosed herein along a surface of a workpiece and generating three-dimensional position information based on inductive sensing signals generated by the scanning probe as the scanning probe is moved along the surface of the workpiece.

In some implementations, a system comprises a scanning probe as disclosed herein, a drive mechanism and an attachment portion configured to couple the drive mechanism to the scanning probe.

Previously known inductive sensors utilizing nominally planar sensing elements have been far too inaccurate for application in precision scanning probes. In contrast, inductive sensors utilizing nominally planar sensing elements configured according to the various principles disclosed herein provide a robust set of signals and may be used to provide sufficient accuracy for application in precision scanning probes. In particular, implementations and/or configurations such as those outlined above may provide signal components that are particularly advantageous with regard to eliminating or allowing correction of certain signal errors and/or signal cross coupling errors that have previously limited the accuracy of position determination in known economical three-dimensional position indicators based on inductive sensing. In various implementations, the signal components that are provided by the various receiver coils are particularly advantageous in that they may be processed using relatively fast and simple signal processing in order to provide robust and highly accurate three-dimensional position indications.

The invention is defined in the appended claims.

BRIEF DESCRIPTION OF THE DRAWINGS

FIGURE 1 is a diagram showing various typical components of a measuring system including a CMM utilizing a scanning probe such as that disclosed herein;

FIGURE 2 is a block diagram showing various elements of a scanning probe as coupled to a CMM and providing rotary and axial position signals;

FIGURE 3 is a diagram showing portions of a first exemplary implementation of a stylus suspension portion as coupled to a stylus and a first exemplary implementation of a stylus position detection portion for detecting the position of the stylus suspension portion;

FIGURE 4 is a diagram showing a cross section of one implementation of the stylus suspension portion of FIGURE 3 as included within a main body frame of a scanning probe;

FIGURE 5 is a partially schematic isometric diagram of an alternative implementation of the stylus position detection portion shown in FIGURES 3 and 4, emphasizing certain aspects according to principles disclosed herein;

FIGURE 6 is a partially schematic isometric diagram of certain elements of the stylus position detection portion shown in FIGURE 5, including schematically represented connections to a block diagram of one exemplary implementation of processing and control circuitry according to principles disclosed herein;

FIGURES 7A-7E are diagrams representing respective "4 complementary pair" implementations of patterns of receiver coil portions and disruptor element configurations according to principles disclosed herein, usable in various implementations of the stylus position detection portions shown in FIGURES 3 and/or 4;

FIGURES 8A-8F are diagrams representing respective "3 (or 6) complementary pair" implementations or patterns of receiver coil portions and disruptor element configurations according to principles disclosed herein, usable in various implementations of the stylus position detection portions shown in FIGURES 3 and/or 4;

FIGURES 9A and 9B are diagrams showing portions of an exemplary implementation of a stylus position detection portion for detecting the position of the stylus suspension portion;

FIGURE 10 is a partially schematic isometric diagram of an alternative implementation of the stylus position detection portion shown in FIGURES 9A and 9B, emphasizing certain aspects according to principles disclosed herein;

FIGURE 11 is a partially schematic isometric diagram of an alternative implementation of the stylus position detection portion shown in FIGURE 10, emphasizing certain aspects according to principles disclosed herein;

FIGURES 12A and 12B are diagrams showing portions of an exemplary implementation of a stylus position detection portion for detecting the position of the stylus suspension portion;

FIGURE 13A is a partially schematic isometric diagram of an exemplary implementation of a stylus position detection portion, emphasizing certain aspects according to principles disclosed herein;

FIGURES 13B to 13F are diagrams showing portions of an exemplary implementation of a stylus position detection portion, emphasizing certain aspects according to principles disclosed herein;

FIGURES 14A to 14D illustrate example frequency shift and off-axis cross talk characteristics associated with various implementations of a stylus position detection portion;

FIGURES 15A to 15C are diagrams showing portions of an exemplary implementation of a stylus position detection portion, emphasizing certain aspects according to principles disclosed herein;

FIGURE 16 is a partially schematic isometric diagram of an exemplary implementation of a stylus position detection portion, emphasizing certain aspects according to principles disclosed herein;

FIGURES 17A and 17B are diagrams showing portions of exemplary implementations of stylus position detection portions, emphasizing certain aspects according to principles disclosed herein; and

FIGURES 18A to 18C are diagrams showing portions of an exemplary implementation of a stylus position detection portion, emphasizing certain aspects according to principles disclosed herein.

DETAILED DESCRIPTION

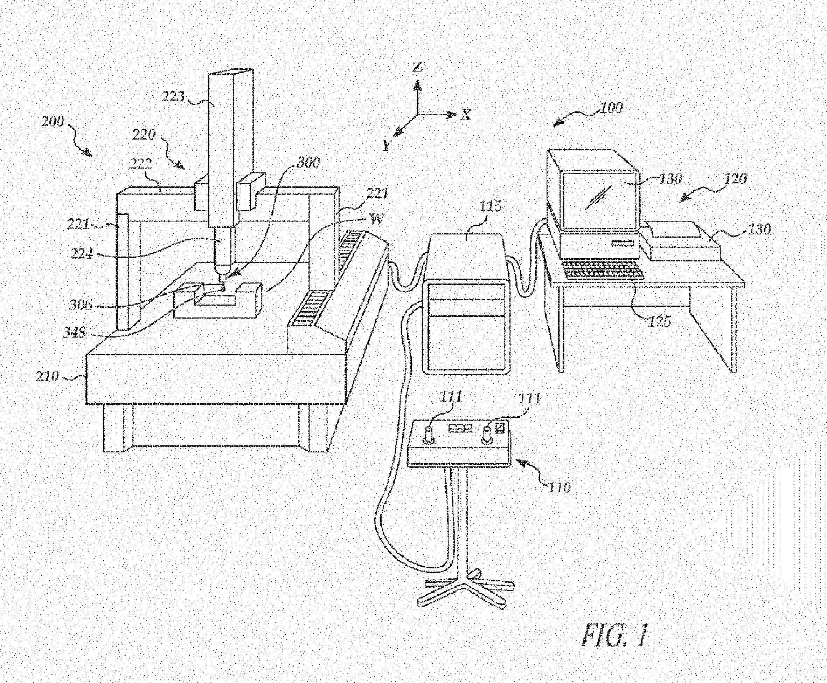

FIGURE 1 is a diagram showing various typical components of a measuring system 100 including a CMM 200 utilizing a scanning probe 300 such as that disclosed herein. The measuring system 100 includes an operating unit 110, a motion controller 115 that controls movements of the CMM 200, a host computer 120 and the CMM 200. The operating unit 110 is coupled to the motion controller 115 and may include joysticks 111 for manually operating the CMM 200. The host computer 120 is coupled to the motion controller 115 and operates the CMM 200 and processes measurement data for a workpiece W. The host computer 120 includes input means 125 (e.g., a keyboard, etc.) for inputting, for example, measurement conditions, and output means 130 (e.g., a display, printer, etc.) for outputting, for example, measurement results.

The CMM 200 includes a drive mechanism 220 which is located on a surface plate 210, and an attachment portion 224 for attaching the scanning probe 300 to the drive mechanism 220. The drive mechanism 220 includes X axis, Y axis, and Z axis slide mechanisms 222, 221, and 223, respectively, for moving the scanning probe 300 three-dimensionally. A stylus 306 attached to the end of the scanning probe 300 includes a contact portion 348. As will be described in more detail below, the stylus 306 is attached to a stylus suspension portion of the scanning probe 300, which allows the contact portion 348 to freely change its position in three directions when the contact portion 348 moves along a measurement path on the surface of the workpiece W.

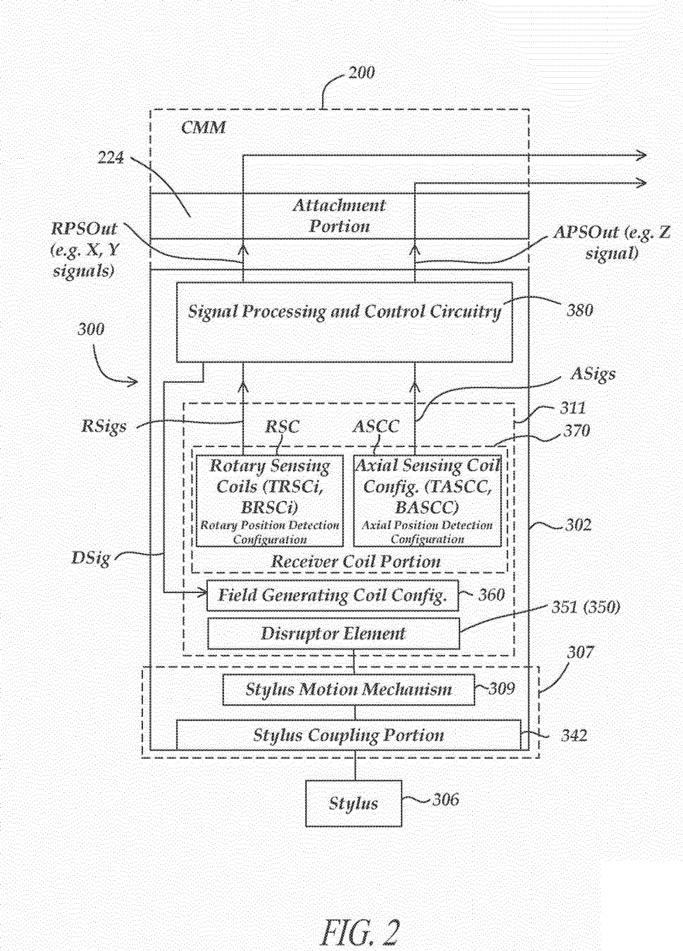

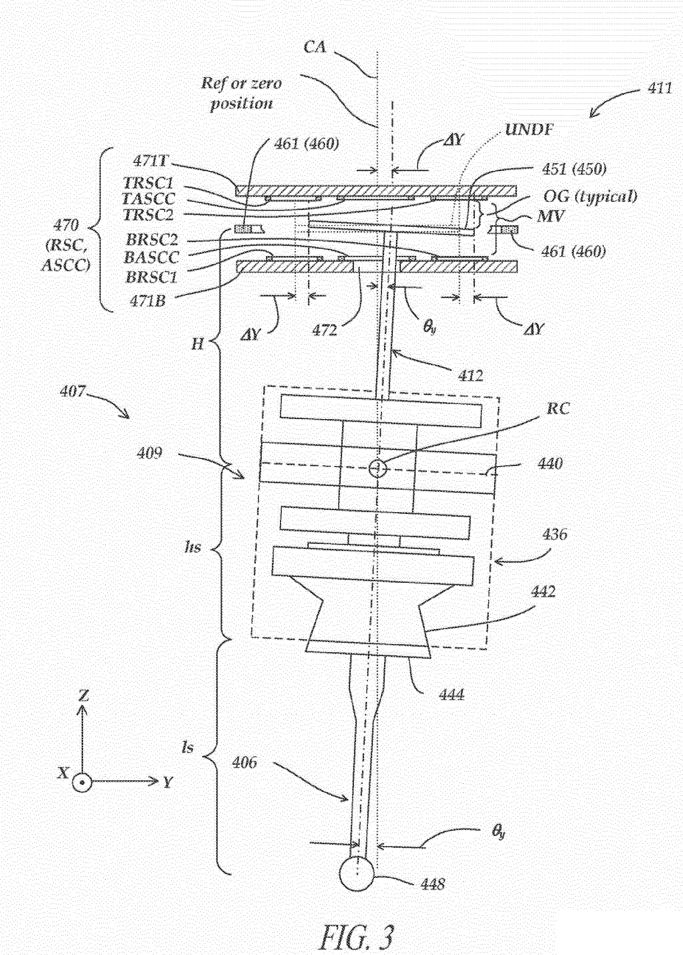

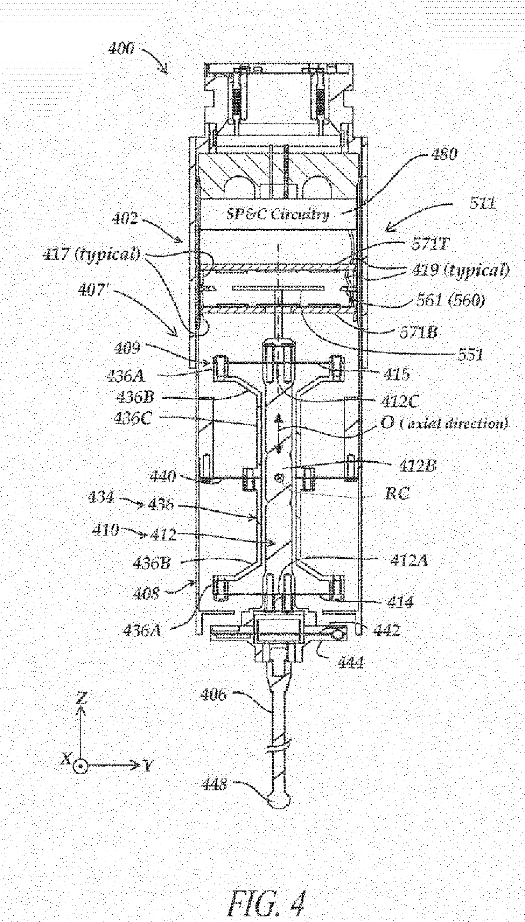

FIGURE 2 is a block diagram showing various elements of a scanning probe 300 as coupled to a CMM 200 and providing rotary (e.g., X, Y) and axial (e.g., Z) position signals. The scanning probe 300 includes a probe main body 302 (e.g., comprising a frame) which incorporates a stylus suspension portion 307 and a stylus position detection portion 311. The stylus suspension portion 307 includes a stylus coupling portion 342 and a stylus motion mechanism 309. The stylus coupling portion 342 is rigidly coupled to a stylus 306. The stylus motion mechanism 309 is configured to enable axial motion of the stylus coupling portion 342 and attached stylus 306 along an axial direction, and to enable rotary motion of the stylus coupling portion 342 and attached stylus 306 about a rotation center, as will be described in more detail below with respect to FIGURES 3 and 4. Signal processing and control circuitry 380 included in the scanning probe 300 is connected to and governs the operation of the stylus position detection portion 311, and may perform related signal processing, all as described in greater detail below.

As shown in FIGURE 2, the stylus position detection portion 311 uses inductive sensing principles and includes a receiver coil portion 370, a field generating coil configuration 360, and a disruptor element 351 (which may be part of a disruptor configuration 350, which may include a plurality of parts in some implementations). The receiver coil portion 370 may comprise a rotary sensing coil portion (also referred to as rotary sensing coils) RSC and an axial sensing coil configuration ASCC. Briefly, the moving disruptor element 351 (or more generally, the disruptor configuration 350) causes position-dependent variations in a changing magnetic field generated by the field generating coil configuration 360. The receiver coil portion 370 is responsive to the changing magnetic field and the variations therein caused by the disruptor element 351. In particular, the rotary sensing coil portion RSC outputs at least first and second rotary signal components RSigs that are indicative of the rotary position (e.g., X and Y position signals) of the stylus coupling portion 342 over corresponding signal lines, and the axial sensing coil configuration ASCC outputs one or more axial signal components ASigs that is indicative of the axial position (e.g., a Z position signal) of the stylus coupling portion 342 over corresponding signal lines, as described in greater detail below with reference to FIGURES 3, 5 and 6, for example. In various implementations, the signal processing and control circuitry 380 receives the rotary signal components RSigs and the axial signal components ASigs, and may perform various levels of related signal processing in various implementations. For example, in one implementation, the signal processing and control circuitry 380 may cause the signal components from various receiver coils to be combined and/or processed in various relationships, and provide the results in a desired output format as the rotary and axial position signal outputs RPSOut and APSOut, through the attachment portion 224. One or more receiving portions (e.g., in the CMM 200, motion controller 115, host computer 120, etc.) may receive the rotary and axial position signal outputs RPSOut and APSOut, and one or more associated processing and control portions may be utilized to determine a three-dimensional position of the stylus coupling portion 342 and/or of the contact portion of the attached stylus 306 as its contact portion 348 moves along a surface of a workpiece W that is being measured.

FIGURE 3 is partially schematic diagram showing portions of a first exemplary implementation of a schematically represented stylus suspension portion 407 as coupled to a stylus 406, along with a partially schematic cross-section of a first exemplary implementation of a stylus position detection portion 411 for detecting the position of the stylus suspension portion 407 and/or the stylus 406. It will be appreciated that certain numbered components 4XX of FIGURE 3 may correspond to and/or have similar operations as similarly numbered counterpart components 3XX of FIGURE 2, and may be understood by analogy thereto and as otherwise described below. This numbering scheme to indicate elements having analogous design and/or function is also applied to the following FIGURES 4-8F. As shown in FIGURE 3, the stylus suspension portion 407 includes a stylus motion mechanism 409 and a stylus coupling portion 442. The stylus coupling portion 442 is configured to be rigidly coupled to a stylus 406 which has a contact portion 448 for contacting a surface S of a workpiece W (not shown).

As will be described in more detail below with respect to FIGURE 4, the stylus motion mechanism 409 is attached to a frame of the scanning probe, and is configured to enable axial and rotary motion of the stylus coupling portion 442 and attached stylus 406 so that the contact portion 448 can change its position in three directions along the shape of the surface S. For purposes of illustration, the vertical and horizontal directions on the plane of paper in FIGURE 3 are defined as Z and Y directions, respectively, and the perpendicular direction to the plane of the paper is defined as the X direction. The direction of a central axis CA, also referred to as the axial direction, of the measuring probe 300 coincides with the Z direction in this illustration.

In FIGURE 3, rotary motion portions of the stylus motion mechanism 409 are represented, including a rotating member 436, a flexure element 440, and a moving member 412 disposed within the rotating member 436. As will be described in more detail below with respect to FIGURE 4, the flexure element 440 enables rotary motion of the rotating member 436 about a rotation center RC. As will be described in more detail below, in various implementations rotary sensing coils $TRSCi$ and $BRSCi$ (where i is an index integer which identifies specific coils) and stylus position detection portion 411 are able to sense the rotated position of the disruptor element 451 and thereby the rotated position of the moving member 412 (e.g., in X and Y directions), and the axial sensing coil configurations (also referred to as the axial sensing coils) TASCC and BASCC are able to sense the axial position of the disruptor element 451 and thereby the axial position of the moving member 412 (e.g., in the Z direction).

As shown in FIGURE 3, a first exemplary implementation of a stylus position detection portion 411 includes a disruptor element 451 (or more generally a disruptor configuration 450) that is coupled to the moving member 412 and which moves relative to the scanning probe frame (e.g., wherein the frame is included as part of the scanning probe body, etc.), within a disruptor motion volume MV located between the top and bottom coil substrates 471T and 471B, respectively. As shown in FIGURE 3, the moving member 412 extends through and moves in a hole 472 located along the central axis CA in a bottom coil substrate (471B). The attached disruptor element 451 moves in the disruptor motion volume MV relative to an undeflected position UNDF in response to a deflection of the stylus suspension portion 407 and the moving member 412.

Various other components of the stylus position detection portion 411, e.g., the receiver coil portion 470 and the field generating coil configuration 460, may be fixed relative to the frame unless otherwise indicated. In the implementation shown in FIGURE 3, the field generating coil configuration 460 comprises a single planar field generating coil 461 that is located approximately at a midplane of the disruptor motion volume MV and that is nominally planar and orthogonal to the central axis CA. As previously outlined with reference to FIGURE 2, the receiver coil portion 470 may generally comprise a rotary sensing coil portion (also referred to as rotary sensing coils) RSC and an axial sensing coil configuration ASCC. The rotary position detection configuration RSC generally includes top rotary sensing coils $TRSCi$ and bottom rotary sensing coils $BRSCi$. In the cross section shown in FIGURE 3, only two top rotary sensing coils TRSC1 and TRSC2, and two bottom rotary sensing coils BRSC1 and BRSC2, are shown. These rotary sensing coils may provide signal components indicative of the position of the disruptor element 451 along the Y direction. In particular, their signal components vary depending on an amount of displacement $\Delta Y$ of the disruptor element 451 along the Y direction, and are therefore indicative of the amount of displacement $\Delta Y$. The displacement $\Delta Y$ determines an associated amount of "overlap" between the disruptor element 451 and the various rotary sensing coils $TRSCi$ and $BRSCi$, and thereby their amount of coupling to the changing magnetic field generated by the field generating coil 461 (which determines the resultant signal components). Other rotary sensing coils (not shown) may provide signal components which are indicative of the position of the disruptor element 451 along the X axis direction. The various rotary sensing coil signal components may also be undesirably sensitive to their local "operating gap" OG relative to the disruptor element 451, as represented in FIGURE 3 for the top rotary sensing coil TRSC2. However, such undesirable gap sensitivity may be substantially eliminated or compensated according to various principles disclosed herein, as described further below.

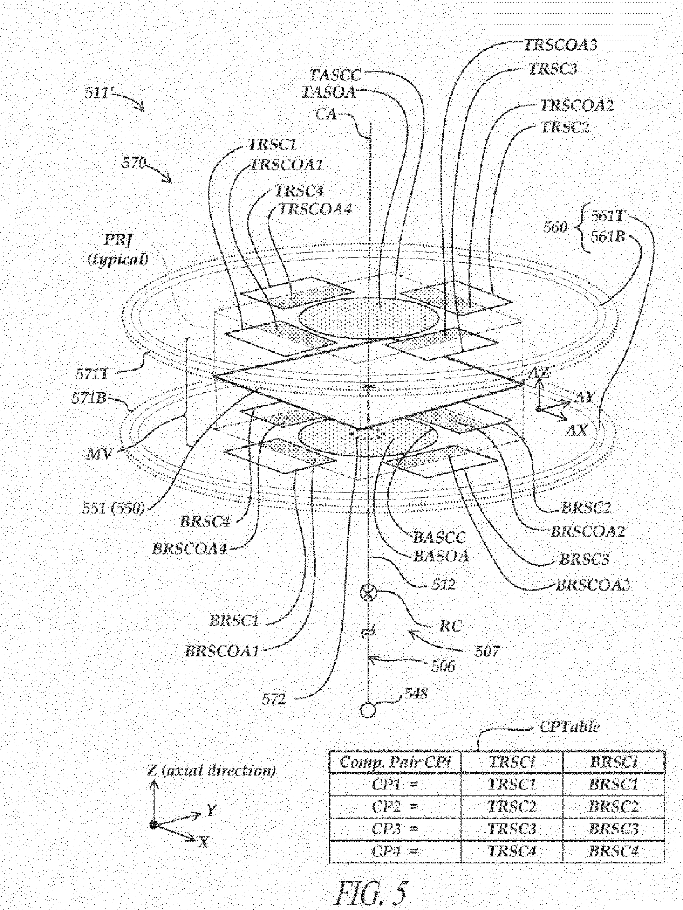

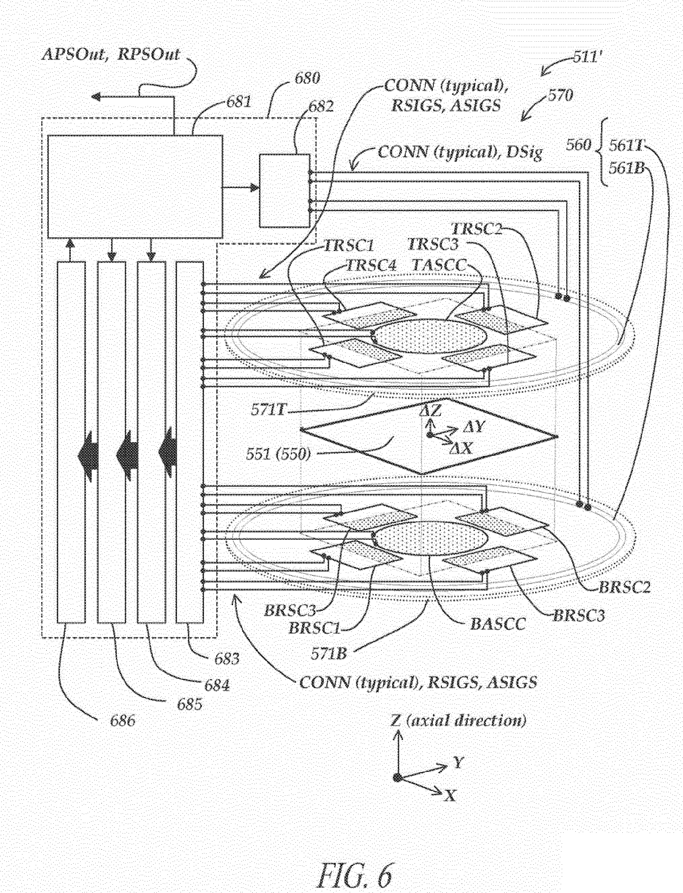

The axial sensing coil configuration ASCC generally includes a top axial sensing coil configuration TASCC and a bottom axial sensing coil configuration BASCC. In the implementation shown in FIGURE 3, the top axial sensing coil configuration TASCC comprises a single top axial sensing coil that at least partially surrounds the central axis CA, and the at least one bottom axial sensing coil comprises a single bottom axial sensing coil that at least partially surrounds the central axis, as shown. These axial sensing coils are always completely "overlapped" by the disruptor element 451. Therefore, their signal components are nominally only responsive to the position of the disruptor element 451 along the axial or Z direction, and are indicative of the position of the disruptor element 451 along the Z direction. The generation of various signal component is described in greater detail below with reference to FIGURES 5 and 6.

Similarly to operation previously outlined with reference to FIGURE 2, in operation the moving disruptor element 451 causes position-dependent local variations in a changing magnetic field along the axial direction generated by the field generating coil 461. The receiver coil portion 470 is responsive to the changing magnetic field and the variations therein caused by the disruptor element 451, and outputs the rotary signal components RSigs and the axial signal components ASigs that may be processed to determine the rotary position of the disruptor element 451 (e.g., a Y and X position, and corresponding signals) and its axial position (e.g., a Z position), as previously outlined with reference to FIGURE 2, and as described in detail further below. It will be appreciated that the position of the disruptor element 451 is related by a known geometry to the position of the stylus coupling portion 442 and/or its contact portion 448. For example, for small rotation angles, for the illustrated movement or displacement $\Delta Y$ of the disruptor element 451 along the Y direction away from null (e.g., from the undeflected position UNDF):

$$\Delta Y = H\theta_Y \qquad\qquad (Eq. 1)$$

where H is the distance from the rotation center RC to the nominal plane of the disruptor element 451, and $\theta_Y$ is the rotary motion tilt of the rotating member 436 (and the moving member 412) in a plane parallel to the Y direction (i.e., that is, rotation about an axis parallel to the X axis at the rotation center RC). If a larger rotation angle is used in various implementations, an analogous expression that is accurate for larger rotation angles may be used, as is known in the art. The Y direction movement or displacement $Y_{STYLUS}$ away from null (e.g., corresponding to the undeflected position UNDF) of the contact portion 448 of the stylus 406 in relation to the rotary motion tilt component $\theta_Y$ may be approximated as:

$$\Delta Y_{STYLUS} = \theta_Y{}^*(h_S + l_S) \qquad\qquad (Eq. 2)$$

where $h_S$ is the distance from the end of the stylus coupling portion 442 to the rotation center RC, and $l_S$ is the length of the stylus 406. Combining EQUATIONS 1 and 2, the ratio of the displacement $\Delta Y$ of the disruptor element 451 in relation to the Y direction displacement at the contact portion 448 may be approximated as:

$$\Delta Y/\Delta Y_{STYLUS} = H/(h_S + l_S) \qquad\qquad (Eq. 3)$$

It will be appreciated that the X coordinate motion components are analogous to the above expressions, and will not be explained in further detail herein. The stylus length $l_S$ for various styli may be utilized in the equations (e.g., with respect to the trigonometry of the system) for determining the X-Y position of the contact portion 448 based on the X-Y detected spot position. Regarding the Z coordinate displacement or position component, a displacement $\Delta Z$ (not shown) of the disruptor element 451 along the axial or Z direction away from null (e.g., corresponding to the undeflected position UNDF), in relation to the Z direction displacement $\Delta Z_{STYLUS}$ at a stylus contact portion (e.g., the contact portion 448) may be approximated as:

$$\Delta Z/\Delta Z_{STYLUS} \approx 1 \qquad\qquad (Eq. 4)$$

FIGURE 4 is a partially schematic diagram showing a cross section of one implementation of a stylus suspension portion 407' usable as the stylus suspension portion 407 represented in FIGURE 3, as well as one implementation of a stylus position detection portion 511 that is similar to the stylus position detection portion 411 shown in FIGURE 3, and signal processing and control circuitry 480. The foregoing elements are shown as included within a frame 408 of a probe main body 402 of a scanning probe 400. The substrates 571T, 571B, and the field generating coil 561 or its substrate (e.g., printed circuit type substrates) of the stylus position detection portion 511 may be positioned for proper operation in the scanning probe 400 using alignment and mounting portions 417, or other known techniques. Various signal connections associated with the stylus position detection portion 511 may be provided by connectors (e.g., flex print and/or wire connections) 419, or the like, according to known techniques. In some implementations, some or all of the signal processing and control circuitry 480 may be provided as a separate circuit assembly as represented in FIGURE 4. In other implementations, some or all of the signal processing and control circuitry 480 may be combined on the substrates of the stylus position detection portion 511, if desired.

As shown in FIGURE 4, the stylus suspension portion 407' includes a stylus motion mechanism 409 and a stylus coupling portion 442 which is coupled to a stylus 406. The stylus motion mechanism 409 may include a moving member 412, a rotating member 436, a flexure element 440 coupled to the main body frame 408 for supporting and enabling rotary motion of the rotating member 436, and flexure elements 414 and 415 (i.e., referenced as first flexure elements) supporting the moving member 412 and coupling it to the rotating member 436 for enabling axial motion of the moving member 412. The scanning probe 400 includes the stylus position detection portion 511 having components and operation described in greater detail below with reference to FIGURE 5, for determining the position and/or motion of the stylus motion mechanism 409 and/or the contact portion 448 of the stylus 406.

The flexure element 440 (i.e., referenced as a second flexure element) may be disposed between the respective planes of a pair of flexure elements 414 and 415 (i.e., referenced as first flexure elements) in the axial direction O. Flexure designs suitable for the flexure elements 414, 415 and 440 may be determined according to principles known in the art. The rotating member 436 may have a shape symmetric about the second flexure element 440 and may integrally include: two ring portions 436A; two connecting portions 436B; and a cylindrical portion 436C. Peripheral portions of the first flexure elements 414 and 415 are fixed to the ring portions 436A. The connecting portions 436B extend inside of the ring portions 436A so as to connect to the cylindrical portion 436C, which has a hollow center. The first flexure elements 414 and 415 may be disposed at a symmetric distance with respect to the second flexure element 440, although such an implementation is exemplary only and not limiting.

An axial motion mechanism 410 including the moving member 412 is supported inside of the rotating member 436, and the rotating member 436 and the axial motion mechanism 410 together constitute a motion module that is part of the stylus motion mechanism 409. The axial motion mechanism 410 allows the contact portion 448 to move in the axial direction O. The rotary motion mechanism 434 including the rotating member 436 allows the contact portion 448 of the stylus 406 to move transverse (e.g., approximately perpendicular) to the axial direction O by means of rotary motion about the rotation center RC.

The moving member 412 integrally includes: a lower portion 412A; a rod portion 412B; and an upper portion 412C. As previously outlined with reference to FIGURE 3, and described in more detail below with respect to the stylus position detection portion 511 shown in FIGURE 5, the disruptor element 551 that is attached to the upper portion 412C of the moving member 412 functions as both a rotary and axial position indicating element. The rod portion 412B is disposed between the pair of first flexure elements 414 and 415. The rod portion 412B is housed in the rotating member 436. The lower portion 412A is formed below the rod portion 412B and a stylus coupling portion 442 (e.g., a flange member) is attached to the lower portion 412A. A flange part 444 is provided for attachment of the stylus 406. The flange part 444 and the stylus coupling portion 442 together may constitute a detachable coupling mechanism (e.g., a known type of kinematic joint or coupling) which allows attachment and detachment between various styli 406 and the stylus coupling portion 442 with repeatable positioning (e.g., in the case of a collision knocking off a stylus, or when intentionally changing styli).

FIGURE 5 is a partially schematic isometric diagram of an alternative implementation of a stylus position detection portion 511' that is similar to a stylus position detection portion 511 shown in FIGURE 4, emphasizing certain aspects according to principles disclosed herein. The stylus position detection portions 511' and 511 are similar except for a difference in the field generating coil configuration 560, as explained further below. In general, the stylus position detection portion 511' includes certain components that are similar to those of the stylus position detection portions 311, 411 and 511 of FIGURES 2, 3 and 4, and will be understood to operate similarly except as otherwise described below.

In the implementation shown in FIGURE 5, the stylus position detection portion 511' comprises the receiver coil portion 570, the disruptor configuration 550 comprising the disruptor element 551, and the field generating coil configuration 560.

In various implementations, disruptor element 551 (or more generally the disruptor configuration 550) may comprise a conductive plate or conductive loop, or parallel conductive plates or conductive loops (e.g., as fabricated on two sides of a printed circuit substrate, patterned by printed circuit board fabrication techniques), or any other desired operational configuration that provides a disruptor area (e.g., its interior area). The disruptor element 551 is located along the central axis CA in the disruptor motion volume MV between the top and bottom coil substrates 571T and 571B and is coupled to the stylus suspension portion 507 by a coupling configuration (e.g., comprising the moving member 512). For purposes of explanation, we may describe the disruptor element 551 as moving relative to the undeflected position illustrated in FIGURE 5 (see the undeflected position UNDF, in FIGURE 3) in response to a deflection of the stylus suspension portion 507 and/or the stylus 506 and/or the moving member 512. The disruptor element may be described as moving with displacement increments $\Delta Z$ over an operating motion range $+/- Rz$ along the axial direction in response to axial motion, and with displacement increments $\Delta X$ and $\Delta Y$ over respective operating motion ranges $+/- Rx$ and $+/- Ry$ along orthogonal X and Y directions that are orthogonal to the axial direction (Z direction) in response to rotary motion. The specified or expected operating motion ranges are described in greater detail below.

The receiver coil portion 570 may comprise the planar top coil substrate 571T including N top rotary sensing coils TRSC (e.g., TRSC1-TRSC4, where N=4) and a top axial sensing coil configuration TASCC (e.g., comprising the single illustrated individual coil in this implementation), and a planar bottom coil substrate 571B including N bottom rotary sensing coils BRSC (e.g., BRSC1-BRSC4, where N=4) and a bottom axial sensing coil configuration BASCC (e.g., comprising the single illustrated individual coil in this implementation). The top and bottom coil substrates 571T and 571B are mounted in a fixed relationship to the frame of the scanning probe with the bottom coil substrate closer to the stylus 506 and/or the stylus suspension portion 507. The top and bottom coil substrates 571T and 571B may be nominally parallel to one another and nominally orthogonal to the central axis CA, and are spaced apart along the central axis CA with the disruptor motion volume MV located therebetween. It should be appreciated that although the various sensing coils shown in FIGURE 5 are represented by "closed loops" for simplicity of illustration, all coils comprise windings or conductors that have first and second connection ends (e.g., as representing in FIGURE 6) that are configured to operate as one or more inductively coupled "turns".

The field generating coil configuration (e.g., the field generating coil configuration 560) generally comprises at least a first field generating coil that is located proximate to the disruptor motion volume MV and that is nominally planar and orthogonal to the central axis CA. In contrast to the single planar field generating coil 461 in the implementation shown in FIGURE 3 (which is located approximately at a midplane of the disruptor motion volume MV), in the implementation shown in FIGURE 5, the field generating coil configuration 560 comprise a pair of planar field generating coils 561T and 561B (located on the top and bottom coil substrates 571T and 571B, respectively) that are approximately equidistant from a midplane of the disruptor motion volume MV along the central axis CA, and that are nominally planar and orthogonal to the central axis CA. Generally speaking, either of the field generating coil configurations 460 or 560 may be used with the receiver coil portion 570 (or other receiver coil portions disclosed herein) provided that the field generating coil configuration comprises at least a first field generating coil that is configured such that a projection of its coil area along the axial direction (Z direction) encompasses the conductive plate or loop that provides the disruptor area of the disruptor configuration 560 (e.g., of the disruptor element 551) and a coil area of all the rotary and axial sensing coils RSCi and ASCC located on the top and bottom coil substrates 571T and 571B. In such a case, the field generating coil configuration is configured to generate a changing magnetic flux generally along the axial direction in the disruptor motion volume MV in response to a coil drive signal, as desired for operation of the stylus position detection portion 511'. It should be appreciated that, although the various field generating coils shown in FIGURE 5 are represented by a single "closed loop" comprising a wide flat conductive trace (the edges of which are shown) for simplicity of illustration, in an actual device all coils comprise windings or conductors that have first and second connection ends (e.g., as represented in FIGURE 6), and are configured to operate as one or more field generating "turns".

As illustrated in FIGURE 5, a projection of the disruptor element 551 along the axial direction (e.g., as shown by fine dashed lines PRJ in FIGURE 5) through an interior coil area of the top axial sensing coil configuration TASCC defines a top axial sensing overlap area TASOA (indicated by a dot pattern filling that interior coil area), and a projection of the disruptor element 551 along the axial direction through an interior coil area of the bottom axial sensing coil configuration BASCC defines a bottom axial sensing overlap area BASOA (indicated by a dot pattern filling that interior coil area). Similarly, a projection of the disruptor element 551 along the axial direction through an interior coil area of any respective top rotary sensing coil TRSCi (e.g., TRSC1-TRSC4) defines a respective top rotary coil sensing overlap area TRSCOAi (e.g., TRSCOA1-TRSCOA4), as indicated by a dot pattern filling the various respective overlap areas shown in FIGURE 5, where i is an individual coil identification index in the range 1 to N. A projection of the disruptor element 551 along the axial direction through an interior coil area of any respective bottom rotary sensing coil BRSCi (e.g., BRSC1-BRSC4) defines a respective bottom rotary coil sensing overlap area BRSCOAi (e.g., TRSCOA1-TRSCOA4), as indicated by a dot pattern filling the various respective overlap areas shown in FIGURE 5.

Regarding axial position detection in a stylus position detection portion (e.g., 51 1'), according to principles described and claimed herein, the receiver coil portion (e.g., 570) and the disruptor element (e.g., 551) are generally configured to provide a top axial sensing overlap area TASOA and bottom axial sensing overlap area BASOA wherein an amount of each of the overlap areas TASOA and BASOA is unchanged or independent of the position of the disruptor element 551 within operating motion ranges +/- Rz, +/- Rx, and +/- Ry. (It will be appreciated that, for a particular scanning probe, the operating motion ranges may be prescribed or specified in combination with the configuration of the probe's particular stylus position detection portion, if needed, in order to fulfill this requirement.) In this way, the signal components generated in the top and bottom axial sensing coil configurations TASCC and BASCC are nominally independent of the rotary motion (that is the position of the disruptor element 551 along the X and Y directions), and are nominally sensitive only to variations in "proximity" or gap to the disruptor element 551, which varies depending on the axial (Z) position or displacement $\Delta Z$ of the disruptor element 551. In operation, currents induced in the disruptor element 551 by the changing magnetic field of the field generating configuration 560 cause opposing magnetic fields. Generally speaking, as the disruptor element 551 moves upward along the axial (Z) direction in FIGURE 5, the opposing magnetic fields couple more strongly to the top axial sensing coil configurations TASCC, reducing its signal component that arises from the changing magnetic field. Conversely, the opposing magnetic fields couple more weakly to the bottom axial sensing coil configurations BASCC, increasing its signal component that arises from the changing magnetic field. By a convention used in this disclosure, we may refer to a signal component SIGTASCC as the signal component arising from a particular top axial sensing coil configuration (or coil) TASCC, and so on.

It will be appreciated that at the undeflected position UNDF, the net signal components SIGTASCC and SIGBASCC may be approximately balanced. For small displacements $\Delta Z$, such as those expected in operation, the net signal components SIGTASCC and SIGBASCC may vary approximately linearly, and inversely compared to one another. Certain considerations related to degree of nonlinearity of such signals are discussed further below. In one implementation, an axial displacement or position $\Delta Z$ may be indicated by, or correspond to, the signal relationship:

$$\Delta Z = \text{function of } [(\text{SIGBASCC} - \text{SIGTASCC}) / (\text{SIGBASCC} + \text{SIGTASCC})]$$

(Eq. 5)

This signal relationship is exemplary only, and not limiting. In various implementations, this signal relationship may be adjusted or compensated by additional calibration or signal processing operations, including operations that reduce the effects of geometric and/or signal cross-coupling between various displacement directions or signal components, if desired. In various implementations, the top axial sensing coil configuration may comprise at least one top axial sensing coil that is not one of the N top rotary sensing coils and that is arranged closer to the central axis than the top rotary sensing coils, and the at least one top axial sensing coil and the disruptor element are characterized in that the at least one top axial sensing coil has an interior coil area that is smaller than the disruptor element, and a projection of the disruptor element along the axial direction completely fills the interior coil area of the at least one top axial sensing coil for any position of the disruptor element within the operating motion ranges +/- Rz, +/- Rx, and +/- Ry, whereby the top axial sensing overlap area TASOA is unchanged by the position of the disruptor element. Similarly, in various such implementations, the bottom axial sensing coil configuration may comprise at least one bottom axial sensing coil that is not one of the N bottom rotary sensing coils and that is arranged closer to the central axis than the bottom rotary sensing coils, and the at least one bottom axial sensing coil and the disruptor element are characterized in that the at least one bottom axial sensing coil has an interior coil area that is smaller than the disruptor element and a projection of the disruptor element along the axial direction completely fills the interior coil area of the at least one bottom axial sensing coil for any position of the disruptor element within the operating motion ranges +/- Rz, +/- Rx, and +/- Ry, whereby the bottom axial sensing overlap area TASOA is unchanged by the position of the disruptor element. It may be seen that the particular implementation of the stylus position detection portion 511' shown in FIGURE 5, wherein the top axial sensing coil configuration TASCC and the bottom axial sensing coil configuration BASCC each comprise a single sensing coil, conforms to this description. It will be appreciated that various configurations of the top and bottom axial sensing coil configurations TASCC and BASCC may be used, and the particular configurations shown in FIGURE 5 are exemplary only and not limiting. Various alternative configurations are described with reference to other figures below.

Regarding rotary position detection in a stylus position detection portion (e.g., 511'), according to principles described and claimed herein, the receiver coil portion (e.g., 570) and the disruptor element (e.g., 551) are generally configured to provide N complementary pairs of rotary sensing coils CPi (e.g., CP1-CP4, where N=4) that each comprise a top rotary sensing coil TRSCi and a bottom rotary sensing coil BRSCi, wherein for any complementary pair CPi, and for any disruptor element displacement increment within the operating motion ranges +/- Rz, +/- Rx, and +/- Ry, the magnitude of the change in overlap areas TRSCOAi and BRSCOAi associated with that disruptor displacement increment is nominally the same in that complementary pair. (It will be appreciated that for a particular scanning probe the operating motion ranges may be prescribed or specified in combination with the configuration of its particular stylus position detection portion, if needed in order to fulfill this requirement.) The table CPTable in FIGURE 5 indicates the respective members TRSCi and BRSCi of each respective complementary pair CPi for the implementation shown in FIGURE 5.

By conforming to the foregoing principle, the complementary pairs CPi shown in FIGURE 5 may be used to compensate or eliminate certain cross-coupling errors, and/or to simplify the signal processing required to provide precise rotary position or displacement measurements (e.g., along the X and/or Y directions). In particular, pairs of signal components arising in complementary pairs CPi of rotary sensing coils in the implementation shown in FIGURE 5 may be combined or processed in a relationship that provides a resulting signal that is nominally insensitive to variations in "proximity" or gap between the individual coils of the complementary pair and the disruptor element 551. That is, the resulting signal may be insensitive to the axial (Z) position or displacement $\Delta Z$ of the disruptor element 551, and nominally only sensitive to a rotary position or displacement (e.g., along the X and/or Y directions), as described in greater detail below. For the particular implementation shown in FIGURE 5, it may be understood that a displacement of the disruptor element 551 that has a displacement component $\Delta Y$ along the Y axis direction will increase (or decrease) the overlap areas TRSCOA2 and BRSCOA2 in the complementary pair CP2 and decrease (or increase) the overlap areas TRSCOA1 and BRSCOA1 in the complementary pair CP1. Similarly, a displacement of the disruptor element 551 that has a displacement component $\Delta X$ along the X axis direction will increase (or decrease) the overlap areas TRSCOA3 and BRSCOA3 in the complementary pair CP3 and decrease (or increase) the overlap areas TRSCOA4 and BRSCOA4 in the complementary pair CP4.

As previous outlined, in operation, currents induced in the disruptor element 551 by the changing magnetic field of the field generating configuration 560 cause opposing magnetic fields. Generally speaking, the signal component SIGTRSCi (or SIGBRSCi) generated in any rotary sensing coil TRSCi (or BRSCi), will be reduced as a proximate portion of the disruptor element 551 comes closer to that rotary sensing coil along the axial direction, or increases its overlap TRSCOAi (or BRSCOAi) with the rotary sensing coil.

It will be appreciated that for the complementary pairs CP1-CP4 indicated in FIGURE 5 (wherein the coils in a complementary pairs CPi may be identical and aligned along the axial direction), at the illustrated undeflected position UNDF, the signal components in each complementary pair (e.g., SIGTRSC1 and SIGBRSC1) may be approximately balanced. According to previously outlined principles, for a portion of the disruptor element 551 proximate to a complementary pair (e.g., CP1), for small displacements $\Delta Z$ such as those expected in operation, the net signal components (e.g., SIGTRSC1 and SIGBRSC1) may vary approximately linearly, and inversely compared to one another. Thus, the sum of such signals for a complementary pair CPi may be nominally insensitive to a $\Delta Z$ associated with the proximate portion of the disruptor element 551. Furthermore, in the implementation shown in FIGURE 5, the edges of the disruptor element 551 may be parallel to the X and Y directions, such that, within the operating motion ranges +/- Rx and +/- Ry, a Y direction displacement component does not alter the rotary coil sensing overlap areas TRSCOA3, BRSCOA3, and/or TRSCOA4 and BRSCOA4, and an X direction displacement component does not alter the rotary coil sensing overlap areas TRSCOA2, BRSCOA2, and/or TRSCOA1 and BRSCOA1. Therefore, in one implementation, a rotary displacement or position component $\Delta X$ along the X direction may be indicated by or correspond to the following signal relationship, ideally regardless of $\Delta Z$ and/or $\Delta Y$:

$$\Delta X = \text{function of } [(\text{SIGTRSC3} + \text{SIGBRSC3}) - (\text{SIGTRSC4} + \text{SIGBRSC4})] \div$$
$$[(\text{SIGTRSC3} + \text{SIGBRSC3}) + (\text{SIGTRSC4} + \text{SIGBRSC4})] \qquad \text{(Eq. 6)}$$

Similarly, in one implementation, a rotary displacement or position component $\Delta Y$ along the Y direction may be indicated by or correspond to the following signal relationship, ideally regardless of $\Delta Z$ and/or $\Delta X$:

$$\Delta Y = \text{function of } [(\text{SIGTRSC2} + \text{SIGBRSC2}) - (\text{SIGTRSC1} + \text{SIGBRSC1})] \div$$
$$[(\text{SIGTRSC2} + \text{SIGBRSC2}) + (\text{SIGTRSC1} + \text{SIGBRSC1})] \qquad \text{(Eq. 7)}$$

These signal relationships are exemplary only, and not limiting. In various implementations, these signal relationships may be adjusted or compensated by additional calibration or signal processing operations, including operations that reduce the effects of geometric and/or signal cross-coupling between various displacement directions or signal components, if desired.

In some particularly advantageous implementations, the receiver coil portion (e.g., 570) and the disruptor element (e.g., 551) are configured wherein, for any complementary pair CPi and any disruptor element displacement increment within the operating motion ranges +/- Rz, +/- Rx, and +/- Ry, both the magnitude and sign of the change in overlap areas TRSCOAi and BRSCOAi associated with that disruptor displacement increment are the same in that complementary pair. In some such implementations, the receiver coil portion is configured wherein each complementary pair CPi comprises a top rotary sensing coil TRSCi and a bottom rotary sensing coil BRSCi characterized in that the shape of their interior areas nominally coincide when projected along the axial direction. It may be seen that the particular implementation of the stylus position detection portion 511' shown in FIGURE 5 conforms to this description. However, it will be appreciated that various configurations of complementary pairs may be used, and the particular configurations shown in FIGURE 5 are exemplary only and not limiting. Various alternative configurations are described with reference to other figures below.

In some particularly advantageous implementations, the receiver coil portion (e.g., 570) and the disruptor element (e.g., 551) may be configured wherein the disruptor element comprises at least N straight sides, and, for any respective complementary pair CPi, a respective one of the straight sides of the disruptor element transects both the top rotary sensing coil TRSCi and the bottom rotary sensing coil BRSCi of that respective complementary pair. In some such implementations, N=4, and the at least N straight sides include 4 sides that are arranged parallel to the sides of a rectangular or square shape. It may be seen that the particular implementation of the stylus position detection portion 511' shown in FIGURE 5 conforms to this description. However, it will be appreciated that various combinations of complementary pairs configurations and disruptor element edge configurations may be used, and the combination of the particular configurations shown in FIGURE 5 is exemplary only and not limiting. Various alternative combinations of configurations are described with reference to other figures below.

FIGURE 6 is a partially schematic isometric diagram of certain elements of the stylus position detection portion 511' shown in FIGURE 5, including schematically represented connections CONN to a block diagram of one exemplary implementation of signal processing and control circuitry 680 according to principles disclosed herein. As shown in FIGURE 6, the signal processing and control circuitry 680 is operably connected to the various coils of the stylus position detection portion 511'. In the implementation shown in FIGURE 6, the signal processing and control circuitry 680 comprises a digital controller/processor 681, that may govern various timing and signal connection or exchange operations between its various interconnected components, which include a drive signal generator 682, an amplification/switching portion 683, a sample and hold portion 684, a multiplexing portion 685, and an A/D convertor portion 686. The digital controller/processor 681 may also perform various digital signal processing operations to determine the output signals APSOut and RPSOut, as previously outlined with reference to FIGURE 2, and described further below. The design and operation of the signal processing and control circuitry 680 may generally be recognized and understood by one of ordinary skill in the art, according to known principles. Therefore, the operation of the illustrated signal processing and control circuitry 680 will be described only briefly here.

In operation, the drive signal generator 682 is operated to provide a changing coil drive signal Dsig (e.g., a pulse) to the field generating coil configuration 560, which generates a changing magnetic flux generally along the axial direction in the disruptor motion volume MV in response to the coil drive signal. In the illustrated configuration, the top field generating coil 561T and the bottom field generating coil 561B are configured to provide changing magnetic fluxes that reinforce one another. The amplification/switching portion 683 is configured to input the signals RSIGs and ASIGs from the receiver coil portion 570, comprising respective signal components provided by the respective rotary and axial sensing coils located on the top and bottom coil substrates (e.g., the previously outlined signal components SIGTASCC, SIGBASCC, SIGTRSC1-SIGTRSC4, and SIGBRSC1-SIGBRSC4). In some implementations, the amplification/switching portion 683 may include switching circuits which may combine various analog signals to provide various desired sum or difference signals (e.g., by appropriate serial or parallel connections, or the like), for example as prescribed in the relationships shown in EQUATIONS 5-7, or the like. However, in other implementations, the amplification/switching portion 683 may perform only amplification and signal conditioning operations (and possibly signal inversion operations), with all signal combination operations performed in other circuit portions.

The sample and hold portion 684 inputs the various analog signals from the amplification/switching portion 683, and performs sample and hold operations according to known principles, e.g., to simultaneously sample and hold all respective signal components that arise from the various respective sensing coils of the receiver coil portion 570. In one implementation, the multiplexing portion 685 may connect various signals to the A/D convertor portion 686 sequentially, and/or in combinations related to various desired signal relationships (for example, as prescribed in the relationships shown in EQUATIONS 5-7, or the like). The A/D convertor portion 686 outputs corresponding digital signal values to the digital controller/processor 681. The digital controller/processor 681 may then process and/or combine the digital signal values according to various desired relationships (for example, as prescribed in the relationships shown in EQUATIONS 5-7, or the like), to determine and output the output signals APSOut and RPSOut, which are indicative of the axial position and the rotary position of at least one of the disruptor element 551 or the stylus 506 relative to the frame or housing of the scanning probe. In some implementations the digital controller/processor 681 may be configured such that the output signals APSOut and RPSOut directly indicate the three-dimensional position of the stylus 506 or its contact portion 548 relative to the frame of the scanning probe. In other implementations, it may be configured to output signals that indirectly indicate the three-dimensional position of the stylus 506 or its contact portion 548 relative to the frame of the scanning probe, and a host system (e.g., a CMM) inputs such signals and performs additional processing to further combine or refine such signals and determine the three-dimensional position of the stylus 506 or its contact portion 548 relative to the scanning probe and/or relative to a an overall coordinate system used for CMM measurements.

It should be appreciated that for implementations of a stylus position detection portion (e.g., 511') according to the various principles disclosed and claimed herein, the signal components that are provided by the various receiver coils of the receiver coil portion (e.g., 570) are particularly advantageous with regard to eliminating or allowing correction of certain signal errors and/or signal cross coupling errors, while using relatively fast and simple signal processing in order to provide robust and highly accurate three-dimensional position indications.

Regarding the use of relatively fast and simple signal processing in order to provide robust and highly accurate three-dimensional position indications, one consideration is the linearity of the position or displacement signal components (or the linearity of certain combined signals, such as the Z signal relationship expressed in EQUATION 5). It should be understood that signals or signal relationships that vary with displacement according to significant 3rd order and/or 5th order signal variation contributions generally require more complex signal processing and/or compensation and/or calibration in order to provide precise displacement or position indications. The inventors have found that certain desirable configurations may tend to suppress higher order signal variation contributions in the axial sensing coil signal components ASigs, and/or combinations thereof. As one way of describing these desirable configurations, the sensing coils of the top and bottom axial sensing coil configurations TASCC and BASCC may be considered as defining an "axial sensing coil region inscribed cylinder" that is defined to be concentric with the central axis CA and to have a radius that is the minimum necessary such that the top and bottom axial sensing coils (e.g., the sensing coils of the top and bottom axial sensing coil configurations TASCC and BASCC shown in FIGURE 5) fit within it. A "disruptor inscribed cylinder" may be defined to be concentric with the central axis CA and to have a radius that is the maximum radius that may be inscribed within the edges of the disruptor element (e.g., the disruptor element 551, or the like). In various implementations it may be desirable (but not required) that the radius of the disruptor inscribed cylinder may be at least 1.1 times the radius of the axial sensing coil region inscribed cylinder. In some implementations, it may be desirable (but not required) that the radius of the disruptor inscribed cylinder may be at least 1.2 or at least 1.5 times the radius of the axial sensing coil region inscribed cylinder.

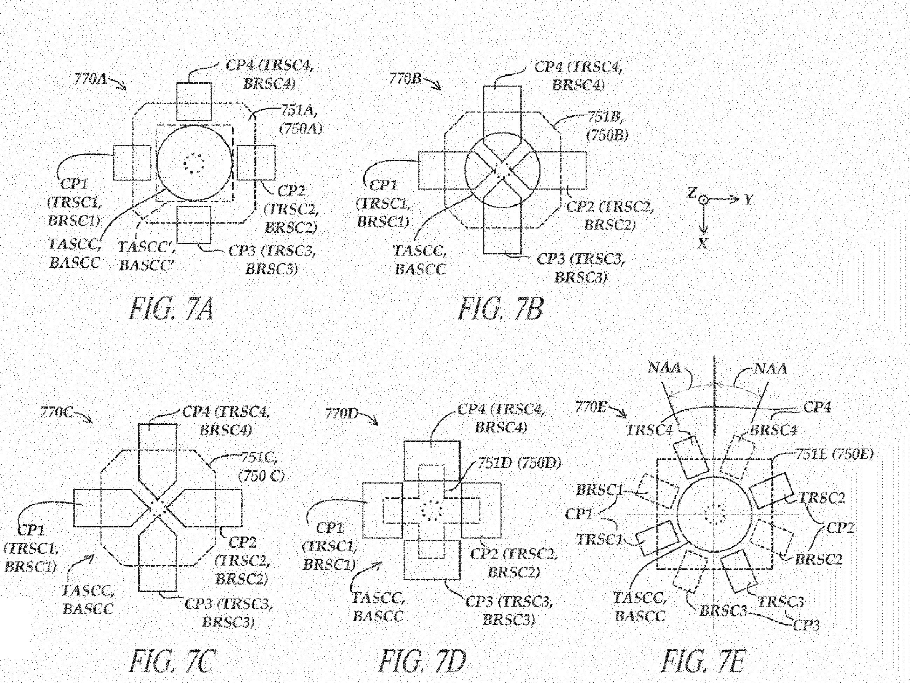

FIGURES 7A-7E show "plan view" diagrams (looking along the axial or Z direction) representing respective "4 complementary pair" implementations of stylus position detection portion components comprising receiver coil portions 770A-770E and disruptor elements 751A-751E, respectively, according to principles disclosed herein. The illustrated components are usable in various implementations of a stylus position detection portion according to principles disclosed herein. Field generating coils are not shown in FIGURES 7A-7E, but they will be understood to be provided according to previously disclosed principles. The various components shown in FIGURES 7A-7E are similar or analogous to similarly numbered components in the previously described stylus position detection portions 311, 411, 511 and/or 511', and may generally be understood by analogy thereto. Therefore, only certain unique or important characteristics of the "4 complementary pair" implementations included in FIGURES 7A-7E are described below.

FIGURE 7A shows an implementation of a receiver coil portion 770A and a disruptor element 751A similar to those previously described with reference to the stylus position detection portion 511', and will be understood by analogy thereto. In addition to showing the circular top and bottom axial sensing coil configurations TASCC and BASCC similar to those previously described with reference to the stylus position detection portion 511', FIGURE 7A also shows alternative square top and bottom axial sensing coil configurations TASCC' and BASCC', shown in dashed outline. More generally, it will be understood that any desired shape may be used for the top and bottom axial sensing coil configurations provided that they are configured to provide desirable operation according to the various principles disclosed and/or claimed herein.

It may be noted that the shape of the disruptor element 751A includes "trimmed corners", for compactness. It should be appreciated that in order to fulfill principles previously disclosed herein, wherein the magnitude of the change in overlap areas TRSCOAi and BRSCOAi associated with a disruptor displacement increment is nominally the same in any of the illustrated complementary pairs, the operating motion ranges +/- Rx and +/- Ry along orthogonal X and Y directions may be prescribed or specified to not extend past the straight edge sections that transect each complementary pair, in order to fulfill this principle.

FIGURE 7B shows an implementation of a receiver coil portion 770B and a disruptor element 751B similar to those previously described with reference to FIGURE 7A, except that the complementary pairs CP1-CP4 in the receiver coil portion 770B comprise larger rotary sensing coils that overlap the sensing coils of the top and bottom axial sensing coil configurations TASCC and BASCC, which is not prohibited according to the various principles disclosed herein. In order to fabricate such a configuration, the rotary and axial sensing coils may be fabricated on respective layers of a multi-layer printed circuit board, for example.

FIGURE 7C shows an implementation of a receiver coil portion 770C and a disruptor element 751C similar to those previously described with reference to FIGURE 7B, except that the top and bottom axial sensing coil configurations TASCC and BASCC are not provided by axial sensing coils that are separate from the various rotary sensing coils TRSCi and BRSCi. Instead, it will be understood that the top axial sensing coil configuration TASCC comprises a combination of the N (N=4) top rotary sensing coils TRSC1-TRSC4, wherein the top axial sensing overlap area TASOA comprises a sum of the individual overlap areas TRSCOAi associated with the N top rotary sensing coils. It may be observed that due to the similar shapes of the N top rotary sensing coils TRSC1-TRSC4, and the two pairs of parallel sides of the disruptor element that overlap them, any overlap area that is lost in the overlap area TRSCOA1 due to a displacement increment of the disruptor element 751C is gained in the overlap area TRSCOA2, and vice versa. Similarly, any overlap area that is lost in the overlap area TRSCOA3 is gained in the overlap area TRSCOA4, and vice versa. Thus, the sum of the overlap areas TRSCOAi is unchanged or independent of the position of the disruptor element 751C within the operating motion ranges +/- Rz, +/- Rx, and +/- Ry, even though its constituent individual overlap areas TRSCOAi vary depending on the position of the disruptor element 751C. Similarly, the bottom axial sensing coil configuration BASCC comprises a combination of the N (N=4) bottom rotary sensing coils BRSC1-BRSC4, wherein the bottom axial sensing overlap area BASOA comprises a sum of the individual overlap areas BRSCOAi associated with the N bottom rotary sensing coils. This sum of the overlap areas BRSCOAi is also unchanged or independent of the position of the disruptor element 751C within the operating motion ranges +/- Rz, +/- Rx, and +/- Ry, even though its constituent individual overlap areas BRSCOAi vary depending on the position of the disruptor element 751C. Thus, despite its differences from previously described configurations, the implementation shown in FIGURE 7C provides a configuration according to a general principle disclosed herein, wherein the receiver coil portion 770C and the disruptor element 751C are configured to provide a top axial sensing overlap area TASOA and bottom axial sensing overlap area BASOA wherein an amount of each of the overlap areas TASOA and BASOA is unchanged or independent of the position of the disruptor element within the operating motion ranges +/- Rz, +/- Rx, and +/- Ry.

FIGURE 7D shows an implementation of a receiver coil portion 770D and a disruptor element 751D which function in a manner analogous to that previously described with reference to FIGURE 7C, wherein the axial sensing coil configurations TASCC and BASCC are not provided by axial sensing coils that are separate from the various rotary sensing coils TRSCi and BRSCi. Instead, it will be understood that the top and bottom axial sensing coil configurations TASCC and BASCC comprise respective combinations of the N (N=4) top and bottom rotary sensing coils TRSC1-TRSC4 and BRSC1-BRSC4, wherein the top axial sensing overlap area TASOA comprises a sum of the individual overlap areas TRSCOAi associated with the N top rotary sensing coils and the bottom axial sensing overlap area BASOA comprises a sum of the individual overlap areas BRSCOAi associated with the N bottom rotary sensing coils. Similarly to the configuration shown in FIGURE 7C, the sum of the overlap areas TRSCOAi is unchanged or independent of the position of the disruptor element 751D within the operating motion ranges +/- Rz, +/- Rx, and +/- Ry, even though its constituent individual overlap areas TRSCOAi vary depending on the position of the disruptor element 751D, and the sum of the overlap areas BRSCOAi is also unchanged or independent of the position of the disruptor element 751D within the operating motion ranges +/- Rz, +/- Rx, and +/- Ry, even though its constituent individual overlap areas BRSCOAi vary depending on the position of the disruptor element 751D. Thus, despite its differences from previously described configurations, the implementation shown in FIGURE 7D provides a configuration according to a general principle disclosed herein, wherein the receiver coil portion 770D and the disruptor element 751D are configured to provide a top axial sensing overlap area TASOA and bottom axial sensing overlap area BASOA wherein an amount of each of the overlap areas TASOA and BASOA is unchanged or independent of the position of the disruptor element within the operating motion ranges +/- Rz, +/- Rx, and +/- Ry. Due to the illustrated shape of the disruptor element 751D, it should be appreciated that in order to fulfill principles previously disclosed herein, wherein the magnitude of the change in overlap areas TRSCOAi and BRSCOAi associated with a disruptor displacement increment is nominally the same in any of the illustrated complementary pairs, the operating motion ranges +/- Rx and +/- Ry along orthogonal X and Y directions may be prescribed or specified such that none of the corners of the disruptor element 751D move from their illustrated positions to an extent such that they cross any boundary of a sensing coil of any complementary pair CP1-CP4.

FIGURE 7E shows an implementation of a receiver coil portion 770E and a disruptor element 751E similar to those previously described with reference to FIGURE 7A (or the stylus position detection portion 511'), except that the top and bottom rotary sensing coils of each complementary pair CPi are rotated about the central axis by an angle 2*NAA relative to one another, where NAA is a "non-alignment angle". However, this implementation becomes increasingly disadvantageous in comparison to the previously outlined configurations (wherein the top and bottom rotary sensing coils of each complementary pair CPi are aligned along the axial direction), as the non-alignment angle NAA increases. The reason it becomes increasingly disadvantageous is that sum of the operating gaps (e.g., the operating gap OG, illustrated in FIGURE 3) between the disruptor element 751E and the top and bottom rotary sensing coils of each complementary pair CPi is not necessarily constant for all displacements of the disruptor element 751E, since their overlap areas with the disruptor element 751E are not "co-located". Thus, the sum of their signals may not be ideally independent of the axial displacement $\Delta Z$, as previously outlined with reference to EQUATION 6. The configuration shown in FIGURE 7E and outlined above is nevertheless not prohibited according to the various principles disclosed herein. It should be appreciated that such a configuration may still fulfill the most basic principles disclosed and claimed herein, and provide signal components that at least partially retain the various advantages outlined above in comparison to previously known inductive sensor configurations. As one way of describing the configuration shown in FIGURE 7E, the receiver coil portion 770E is configured wherein each complementary pair CPi comprises a top rotary sensing coil TRSCi and a bottom rotary sensing coil BRSCi characterized in that the shape of their interior areas would nominally coincide if the shape of one of them is rotated about the central axis to coincide with an angular location of the other about the central axis (e.g., by an angle 2*NAA), and then projected along the axial direction. In various implementations, the receiver coil portion 770E and the disruptor element 751E may be configured wherein the disruptor element 751E comprises at least N straight sides (e.g., N=4), and, for any respective complementary pair CPi (e.g., CP1-CP4), a respective one of the straight sides of the disruptor element 751E transects both the top rotary sensing coil TRSCi and the bottom rotary sensing coil BRSCi of that respective complementary pair CPi. In such implementations where N=4, the at least N straight sides of the disruptor element 751E include 4 sides that are arranged parallel to the sides of a rectangular or square shape.

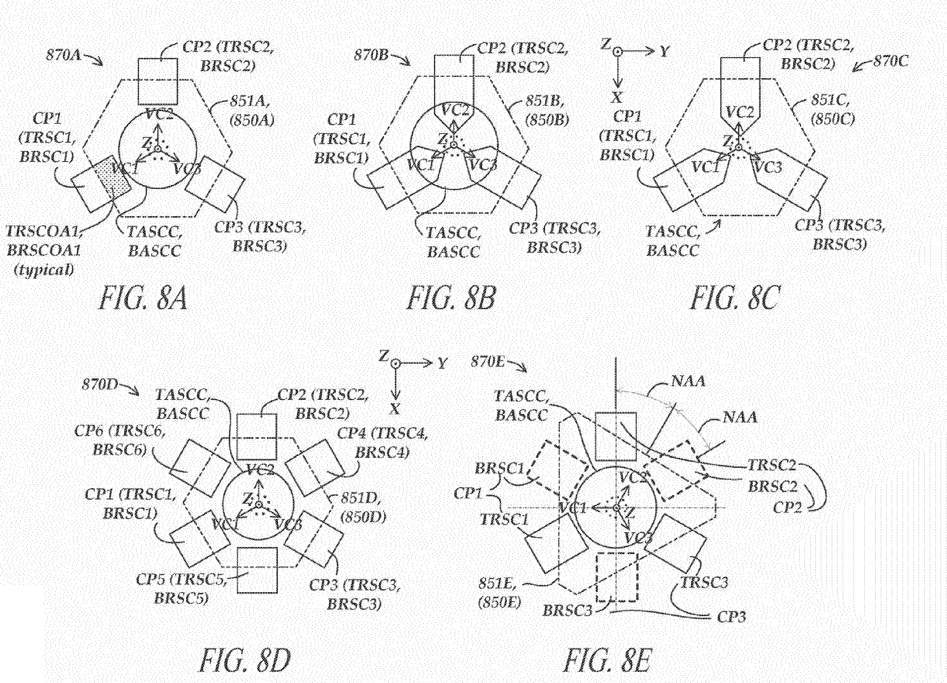

FIGURES 8A-8F show "plan view" diagrams (looking along the axial or Z direction) representing respective "3 (or 6) complementary pair" implementations of stylus position detection portion components comprising receiver coil portions 870A-870F and disruptor elements 851A-851F, respectively, according to principles disclosed herein. The illustrated components are usable in various implementations of a stylus position detection portion according to principles disclosed herein. Field generating coils are not shown in FIGURES 8A-8F, but they will be understood to be provided according to previously disclosed principles. Various elements shown in "3 (or 6) complementary pair" configurations shown in several of the FIGURES 8A-8F are similar or analogous to corresponding elements shown in corresponding "4 complementary pair" configurations previously described with reference to FIGURES 7A-7E, and they may generally be understood by analogy thereto. Therefore, only certain unique or important characteristics of the "3 complementary pair" implementations included in FIGURES 8A-8F are described below.

FIGURES 8A-8C are "3 complementary pair" analogs of their counterpart "4 complementary pair" configurations shown in the corresponding FIGURES 7A-7C. They may generally be understood by analogy with the description of their counterpart configurations (e.g., FIGURE 8A to its counterpart FIGURE 7A, and so on), based on the following additional description.

The use of 3 complementary pairs oriented at 120 degrees from one another, in contrast with the previously described 4 complementary pairs oriented at 90 degrees from one another (e.g., as shown in FIGURE 7A), may be appreciated by considering that any displacement increment or position of a disruptor element (e.g., 851A) is just as easily characterized by displacement or position vector components or coordinates oriented along the respective vector component directions VC1, VC2, and VC3 shown in FIGURES 8A-8F as it is by displacement or position vector components or coordinates oriented along the X and Y axis directions shown in various figures herein. Methods of converting vector components from one coordinate system to another are well known, and need not be discussed in detail here. Based on this, it may be understood that the complementary pairs CPi shown in FIGURES 8A-8C are configured according to the same principles outlined in the previous description of complementary pairs, and their respective overlap areas are indicative of the displacement or position of the disruptor element along their corresponding vector component directions VC1, VC2, and VC3. For example, the representative overlap areas TRSCOA1 and BRSCOA1 indicated in FIGURE 8A result in associated signal components SIGTRSC1 and SIGBRSC1 according to previously outlined principles, which are indicative of the displacement or position of the disruptor element along the corresponding vector component direction VC1, and so on. For the implementations shown in FIGURES 8A-8C and 8E, in one implementation, a rotary displacement or position component $\Delta VC1$ along the VC1 direction may be indicated by or correspond to the following signal relationship, which is nominally independent of $\Delta Z$ according to previously outlined principles for comparable complementary pairs:

$$\Delta VC1 = \text{function of } [(SIGTRSC1 + SIGBRSC1) - (SIGTRSC1_{UNDF} + SIGBRSC1_{UNDF}],$$

$$(Eq. 8)$$

where $SIGTRSC1_{UNDF}$ and $SIGBRSC1_{UNDF}$ are reference signal values resulting from the overlap areas overlap areas TRSCOA1 and BRSCOA1 corresponding to the undeflected position UNDF of the disruptor element (e.g., 851A, etc.).

Similarly, rotary displacement or position components $\Delta VC2$ along the VC2 direction, and $\Delta VC3$ along the VC3 direction, may be indicated by or correspond to the following signal relationships:

$$\Delta VC2 = \text{function of } [(SIGTRSC2 + SIGBRSC2) - (SIGTRSC2_{UNDF} + SIGBRSC2_{UNDF}]$$

$$(Eq. 9)$$

$$\Delta VC3 = \text{function of } [(SIGTRSC3 + SIGBRSC3) - (SIGTRSC3_{UNDF} + SIGBRSC3_{UNDF}]$$

$$(Eq. 10)$$

It will appreciated that the axial sensing coil configurations TASCC and BASCC shown in FIGURES 8A-8C are substantially the same as those previously describe herein with reference to their counterpart configurations, and may be determined according to the same type of signal components and signal relationship. The signal relationships outlined above are exemplary only, and not limiting. In various implementations, these signal relationships may be adjusted or compensated by additional calibration or signal processing operations, including operations that reduce the effects of geometric and/or signal cross-coupling between various displacement directions or signal components, if desired.

FIGURE 8D shows an implementation of a receiver coil portion 870D and a disruptor element 851D similar to those previously described with reference to FIGURE 8A, except that additional complementary pairs CP4-CP6 are provided that are symmetrically configured across the central axis from the complementary pairs CP1-CP3, to provide a total of 6 complementary pairs. In particular, CP1 and CP4 are oriented opposite one another along the VC1 direction, CP2 and CP5 are oriented opposite one another along the VC2 direction, and CP3 and CP6 are oriented opposite one another along the VC3 direction. These opposing pairs are analogous to the opposing complementary pairs shown oriented along the X and Y axis directions in FIGURES 7A-7D. Such a configuration need not depend on the reference signal values (e.g., SIGTRSC1$_{UNDF}$, and so on) used in EQUATIONS 8-10. Therefore, such a configuration may be more robust and accurate (e.g., inherently compensating for signal drift due to various causes, and the like). For the implementation shown in FIGURE 8D, in one implementation, a rotary displacement or position component ΔVC1 along the VC1 direction may be indicated by or correspond to the following signal relationships, which are nominally independent of ΔZ according to previously outlined principles for comparable complementary pairs:

$$\Delta VC1 = \text{function of } [(SIGTRSC1 + SIGBRSC1) - (SIGTRSC4 + SIGBRSC4)] \div$$
$$[(SIGTRSC1 + SIGBRSC1) + (SIGTRSC4 + SIGBRSC4)] \qquad (Eq.\ 11)$$

$$\Delta VC2 = \text{function of } [(SIGTRSC2 + SIGBRSC2) - (SIGTRSC5 + SIGBRSC5)] \div$$
$$[(SIGTRSC2 + SIGBRSC2) + (SIGTRSC5 + SIGBRSC5)] \qquad (Eq.\ 12)$$

$$\Delta VC3 = \text{function of } [(SIGTRSC3 + SIGBRSC3) - (SIGTRSC6 + SIGBRSC6)] \div$$
$$[(SIGTRSC3 + SIGBRSC3) + (SIGTRSC6 + SIGBRSC6)] \qquad (Eq.\ 13)$$

It will be appreciated that the "3 complementary pair" implementations shown in FIGURES 8B and 8C could be similarly adapted to include 6 complementary pairs, and use analogous signal processing with analogous benefits.

FIGURE 8E shows an implementation of a receiver coil portion 870E and a disruptor element 851E analogous to those previously described with reference to FIGURE 7E, and may generally be understood by analogy to that description, in conjunction with the foregoing description of FIGURES 8A-8C. To briefly paraphrase that description, in FIGURE 8E the top and bottom rotary sensing coils of each complementary pair CPi are rotated about the central axis by an angle 2*NAA relative to one another, where NAA is a "non-alignment angle". This implementation becomes increasingly disadvantageous in comparison to previously outlined configurations (wherein the top and bottom rotary sensing coils of each complementary pair CPi are aligned along the axial direction), as the non-alignment angle NAA increases, as previously described with reference to FIGURE 7E, where it was explained that the sum of the signals from a complementary pair may not be ideally independent of the axial displacement ΔZ as previously outlined with reference to EQUATION 6. The configuration shown in FIGURE 8E is nevertheless not prohibited according to the various principles disclosed herein. It should be appreciated that such a configuration may still fulfill the most basic principles disclosed and claimed herein, and provide signal components that at least partially retain the various advantages outlined above in comparison to previously known inductive sensor configurations.

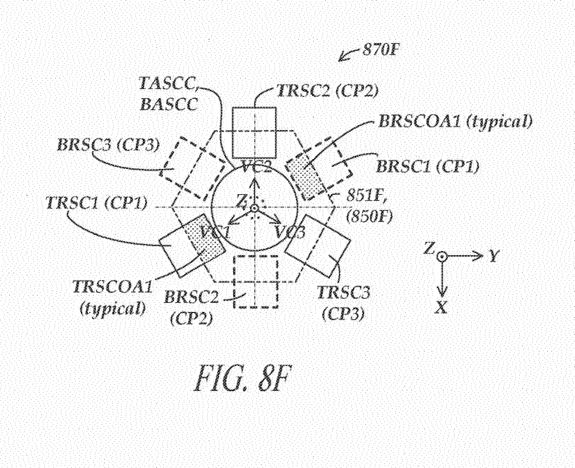

FIGURE 8F shows an implementation of a receiver coil portion 870F and a disruptor element 851F wherein the complementary pairs of sensing coils CPi have a different configuration sensing coils than those of previously described complementary pairs (e.g., as shown in FIGURE 8A), in that they are located symmetrical across the central axis relative to one another. Thus, they may be characterized as similar to previously described complementary pairs in that the receiver coil portion and the disruptor element are further configured wherein, for any complementary pair CPi and any disruptor element displacement increment within the operating motion ranges +/- Rz, +/- Rx, and +/- Ry, the magnitude of the change in overlap areas TRSCOAi and BRSCOAi associated with the disruptor displacement increment is the same in that complementary pair. Furthermore, in the implementation shown in FIGURE 8F, the receiver coil portion is configured similarly to some complementary pairs previously described herein, wherein each complementary pair CPi comprises a top rotary sensing coil TRSCi and a bottom rotary sensing coil BRSCi characterized in that the shape of their interior areas would nominally coincide if the shape of one of them is rotated by an offset angle (e.g., 180 degrees) about the central axis to coincide with the angular location of the other about the central axis, and then projected along the axial direction.

However, in contrast to previously described complementary pairs, the sign of the change in overlap areas TRSCOAi and BRSCOAi associated with the disruptor displacement increment are the opposite in the complementary pairs shown in FIGURE 8F. Such an implementation may have certain disadvantages in comparison to implementations wherein the sign of the change in overlap areas TRSCOAi and BRSCOAi associated with a disruptor displacement increment are the same in each complementary pair. However, the configuration shown in FIGURE 8F is nevertheless not prohibited according to the various principles disclosed herein. With appropriate signal processing, such implementations may still provide certain advantages for use in a scanning probe, in comparison to known inductive type sensing configurations. The signal processing may need to be more complex than is needed in previously disclosed implementations herein (e.g., using more complex signal component relationships to indicate various displacement or position vector components), in order to correct or compensate for various cross coupling effects or the like. However, for the receiver coil portion 870F, such effects may generally be compensated based on known geometric and/or signal relationship constraints and the fact that the magnitude of the change in overlap areas for a given displacement of the disruptor element 851F is the same in the sensor coils of each complementary pair. For example, in the implementation shown in FIGURE 8F, the disruptor element 851F comprises 3 pairs of parallel straight sides (e.g., arranged parallel to the sides of a regular hexagon shape), and, for any respective complementary pair CPi, a first one of a pair of parallel straight sides transects the top rotary sensing coil TRSCi, and a second one of that pair of parallel straight sides transects the bottom rotary sensing coil BRSCi of that respective complementary pair. Based on the known rigid body translation and rotation characteristics of the disruptor element 851F, the respective overlap areas and local operating gaps of each sensing coil are included in the receiver coil portion 870F to be constrained by known relationships relative to one another, and these known relationships may be used to determine accurate displacement vectors in signal processing for the signal components provided by the receiver coil portion 870F.

It will be appreciated that the variations shown in FIGURES 7A-7E and FIGURES 8A-8F are indicative of the possibility of further rearranging and/or adjusting the configuration and combination of various elements in a stylus position detection portion according to the various principles disclosed and claimed herein, while retaining many or all of the advantages previously outlined in association with those principles. In general, it will be understood that the various implementations disclosed herein are intended to be exemplary only and not limiting.

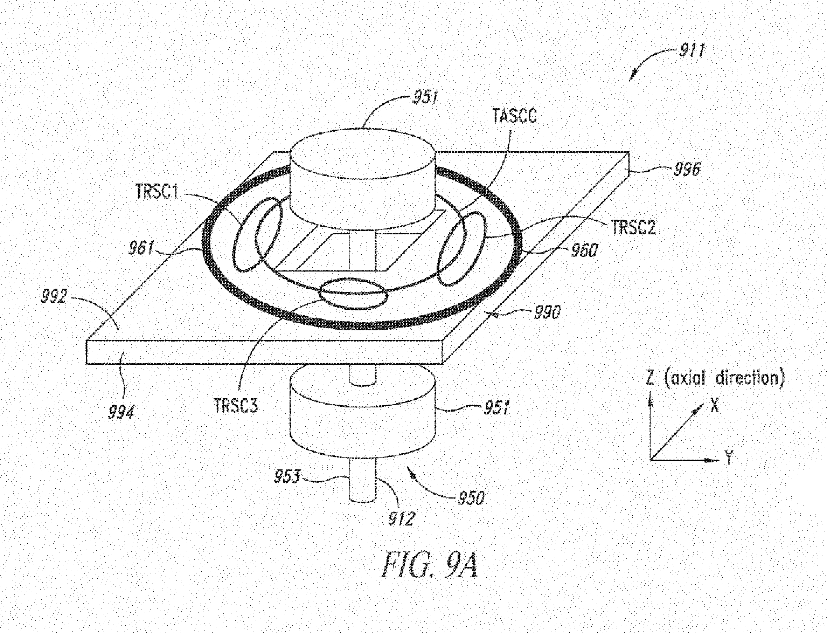

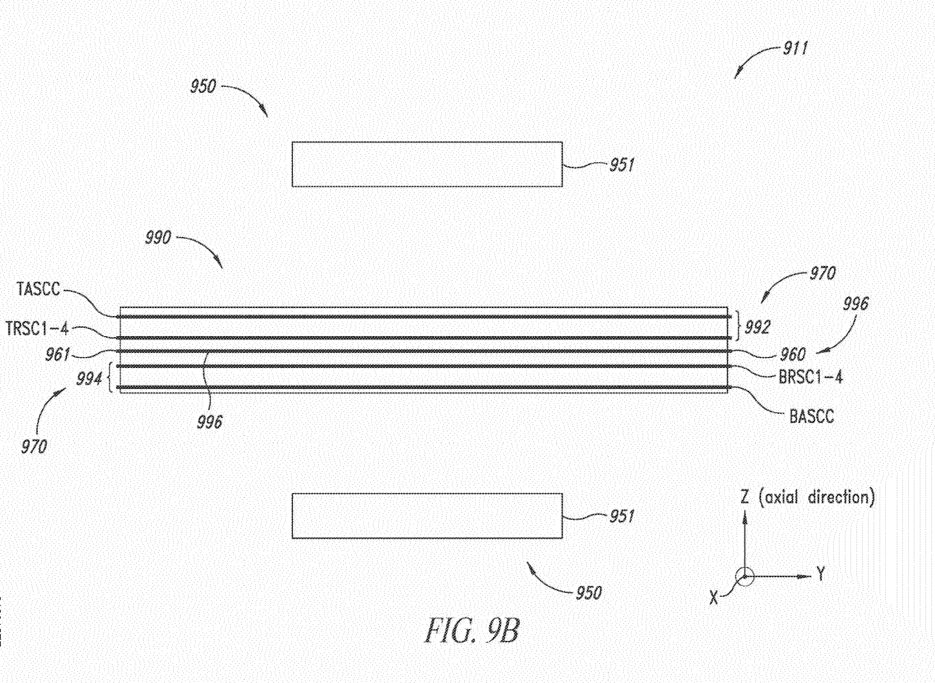

FIGURES 9A and 9B illustrate an alternative configuration of a stylus position detection portion 911, which may be employed, for example, in the scanning probe 300 of FIGURE 2 as the stylus position detection portion 311, in the implementation of FIGURE 3 instead of the stylus position detection portion 411, in the implementation of FIGURE 4 instead of the stylus position detection portion 511, etc. The inductive components are illustrated in FIGURE 9B. The stylus position detection portion 911 uses inductive sensing principles and includes a coil board configuration 990 having a receiver coil portion 970 and a field generating coil configuration 960, which as illustrated comprises a transmitter coil 961, and a disruptor configuration 950, which as illustrated includes first and second disruptor elements 951. The receiver coil portion 970 may comprise rotary sensing coil portions (also referred to as rotary sensing coils) RSC and axial sensing coil configurations ASCC. Briefly, the moving disruptor elements 951 (or more generally, the disruptor configuration 950) cause position-dependent variations in a changing magnetic field generated by the field generating coil configuration 960. The receiver coil portion 970 is responsive to the changing magnetic field and the variations therein caused by the disruptor elements 951.

The coil board configuration 990 comprises a first board portion 992 including N top rotary sensing coil portions (as illustrated, TRSC1 to TRSC4, for which N=4 in this example) and a top axial sensing coil configuration (as illustrated TASCC), a second board portion 994 including N bottom rotary sensing coil portions (as illustrated, BRSC1 to BRSC4, for which N=4 in this example) and a bottom axial sensing coil configuration (as illustrated BASCC). The coil board configuration 990 also comprises a center board portion 996 positioned between the first board portion 992 and the second board portion 994. The center board portion 996 includes at least a first field generating coil configuration 960 (as illustrated including transmitting coil 961). The coil board configuration 990 is mounted in a fixed relationship to the frame of a scanning probe (see scanning probe 300 of FIGURE 2 and frame 408 of FIGURE 4), with the second board portion 994 of the coil board configuration 990 closer to the stylus suspension portion 307/407 (see FIGURES 2 and 3). The first board portion 992, the second board portion 994 and center board portion 996 of the coil board configuration 990 are nominally parallel to one another and nominally orthogonal to a central axis CA (see FIGURE 3) of a scanning probe 300 (see FIGURE 2). The coil board configuration 990 may comprise, for example, a two-sided substrate or printed circuit board having coils fabricated as printed conductors in layers of the substrate or printed circuit board, free-standing coils fastened to a substrate or printed circuit board, etc., and/or various combinations thereof.

In various implementations, the disruptor elements 951 of the disruptor configuration 950 each comprise at least one of a conductive plate or a conductive loop that provides a disruptor area, and the disruptor elements 951 are located along the central axis CA (see FIGURE 3) in a disruptor motion volume extending on opposite sides of the coil board configuration 990. The disruptor elements 951 are coupled to the stylus suspension portion 307/407 (see FIGURES 2 and 3) in a fixed relationship relative to one another by a coupling configuration 953, including an upper portion of a moving member 912 (e.g., similar to the moving member 412 of FIGURE 3). The disruptor elements 951 move in the disruptor motion volume relative to an undeflected position in response to a deflection of the stylus suspension portion 307/407 (see FIGURES 2 and 3), the disruptor elements moving over operating motion ranges +/- Rz along the axial direction in response to the axial motion, and over respective operating motion ranges +/- Rx and +/- Ry along respective orthogonal X and Y directions that are orthogonal to the axial direction in response to the rotary motion. A projection of a coil area of the first field generating coil 961 along the axial direction encompasses the conductive plates or loops that provide the disruptor areas and a coil area of all the rotary and axial sensing coils located on the coil board configuration 990. The field generating coil configuration 960 generates a changing magnetic flux generally along the axial direction in the disruptor motion volume in response to a coil drive signal.

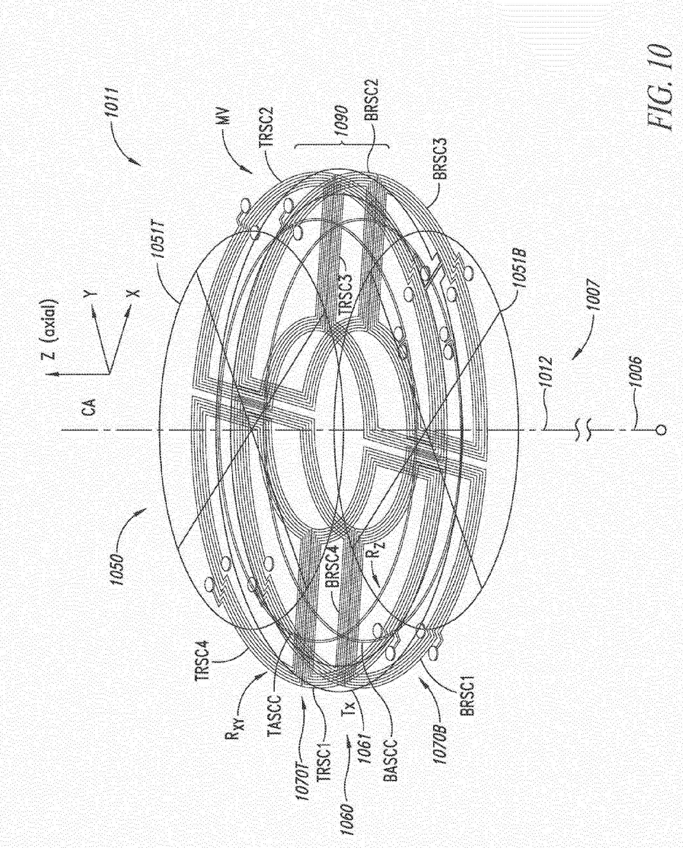

FIGURE 10 is a partially schematic isometric diagram of an implementation of a stylus position detection portion 1011 that is similar to a stylus position detection portion 911 shown in FIGURES 9A and 9B, emphasizing certain aspects according to principles disclosed herein. In general, the stylus position detection portion 1011 includes certain components that are similar to those of the stylus position detection portions 311, 411, 511 and 911 of FIGURES 2, 3, 4, 9A and 9B, and will be understood to operate similarly except as otherwise described below. The configuration of a stylus position detection portion 1011, may be employed, for example, in the scanning probe 300 of FIGURE 2 as the stylus position detection portion 311, in the implementation of FIGURE 3 instead of the stylus position detection portion 411, in the implementation of FIGURE 4 instead of the stylus position detection portion 511, in the implementation of FIGURES 9A and 9B instead of the stylus position detection portion 911, etc.

In the implementation shown in FIGURE 10, the stylus position detection portion 1011 comprises a coil board configuration portion 1090 and a disrupter configuration 1050. The coil board configuration portion 1090 includes top and bottom receiver coil board portions 1070T, 1070B, with a field generation coil board portion 1060 positioned between the top receiver coil board portion 1070T and the bottom receiver coil board portion 1070B. In various implementations, the top and bottom receiver coil board portions 1070T, 1070B may also be referenced as first and second board portions 1070T, 1070B, and the field generation coil board portion 1060 may also be referenced as a center board portion 1060. The disruptor configuration 1050 includes disruptor elements 1051T, 1051B or scales. In various implementations, the disruptor elements 1051T, 1051B may also be referenced as first and second disruptor elements 1051T, 1051B.

In various implementations, disruptor elements 1051T, 1051B (or more generally the disruptor configuration 1050) may each comprise at least one of a conductive plate or conductive loop, or parallel conductive plates or conductive loops (e.g., as fabricated on two sides of a printed circuit substrate, patterned by printed circuit board fabrication techniques), or any other desired operational configuration that provides a disruptor area (e.g., its interior area). As illustrated in FIGURE 10, the disruptor elements 1051T and 1051B each comprise a conductive plate. The disruptor elements 1051T and 1051B are located along the central axis CA in the disruptor motion volume MV, which extends on opposite sides of the coil board configuration 1090, and are coupled to a stylus suspension portion 1007 by a coupling configuration (e.g., comprising at least an upper portion of a moving member 1012 that is similar to the moving member 412 of FIGURE 3). For purposes of explanation, the disruptor elements 1051T, 1051B move relative to the undeflected position illustrated in FIGURE 10 (e.g., similar to the undeflected position UNDF, in FIGURE 3) in response to a deflection of a stylus suspension portion 1007 and/or a stylus 1006 and/or the moving member 1012 (e.g., which may be similar or identical to the stylus suspension portion 407, stylus 406 and moving member 412 of FIGURE 3). The disruptor elements 1051T, 1051B may be described as moving with displacement increments $\Delta Z$ over an operating motion range +/- Rz along the axial direction in response to axial motion, and with respective displacement increments $\Delta X$ and $\Delta Y$ over respective operating motion ranges +/- Rx and +/- Ry along orthogonal X and Y directions that are orthogonal to the axial direction (Z direction) in response to rotary motion.

The top receiver coil board portion 1070T includes N top rotary sensing coils TRSC (e.g., as illustrated TRSC1-TRSC4, where N=4) and a top axial sensing coil configuration TASCC (e.g., comprising the single illustrated individual coil in this implementation), and the bottom receiver coil board portion 1070B includes N bottom rotary sensing coils BRSC (e.g., as illustrated BRSC1-BRSC4, where N=4) and a bottom axial sensing coil configuration BASCC (e.g., comprising the single illustrated individual coil in this implementation).

The coil board configuration 1090 is mounted in a fixed relationship to the frame of the scanning probe (e.g., frame 408 of FIGURE 4) with the bottom receiver coil board portion 1070B closer to the stylus 1006 and/or the stylus suspension portion 1007. It should be appreciated with respect to the various sensing coils shown in FIGURE 10, all coils comprise at least one of windings or conductors that have first and second connection ends (e.g., as represented in FIGURE 6) that are configured to operate as one or more inductively coupled "turns." As illustrated, the top and bottom axial sensing coil configurations TASCC and BASCC, as well as the top and bottom rotary sensing coil configurations TRSC and BRSC, are nominally symmetrically spaced with respect to the disruptor configuration 1050 and the corresponding positions of the disruptor elements 1051T, 1051B. Other configurations are possible (e.g., the rotary sensing coil configurations TRSC and BRSC may not be nominally centered relative to the disruptor configuration 1050 in some implementations).

The field generating coil board portion 1060 generally comprises at least a first field generating coil 1061 and is positioned between the top receiver coil board portion 1070T and the bottom receiver coil board portion 1070B. As illustrated in FIGURE 10, the at least a first field generating coil comprises a single field generating coil 1061 which has an area larger than an area of the disruptor elements 1051T, 1051B. The top receiver coil board portion 1070T, the field generating coil board portion 1060 and the bottom receiver coil board portion 1070B are nominally planar, nominally parallel to each other and nominally orthogonal to the central axis CA.

In the illustrated implementations of FIGURES 3, 4 and 5, the disruptor element is positioned inside the field generating coil elements (e.g., disruptor element 551 of FIGURE 4 fits inside the field generating coil 561), and an area of the disruptor element is smaller than an area of the field generating coil elements. In the illustrated implementations of FIGURES 9A, 9B and 10, the disruptor elements are positioned parallel to the field generating coil elements (e.g., the disruptor elements 1051T, 1051B are positioned above and below the field generating coil 1061). The configurations of FIGURES 9A, 9B and 10 provide increased flexibility with respect to the relative sizes of the disruptor elements and the field coil elements. In addition, utilization of a single printed circuit board (e.g., for which the first board portion, the second board portion and the central board portion may comprise portions of a single multilayer printed circuit board) may reduce cost and complexity relative to configurations utilizing multiple printed circuit boards.

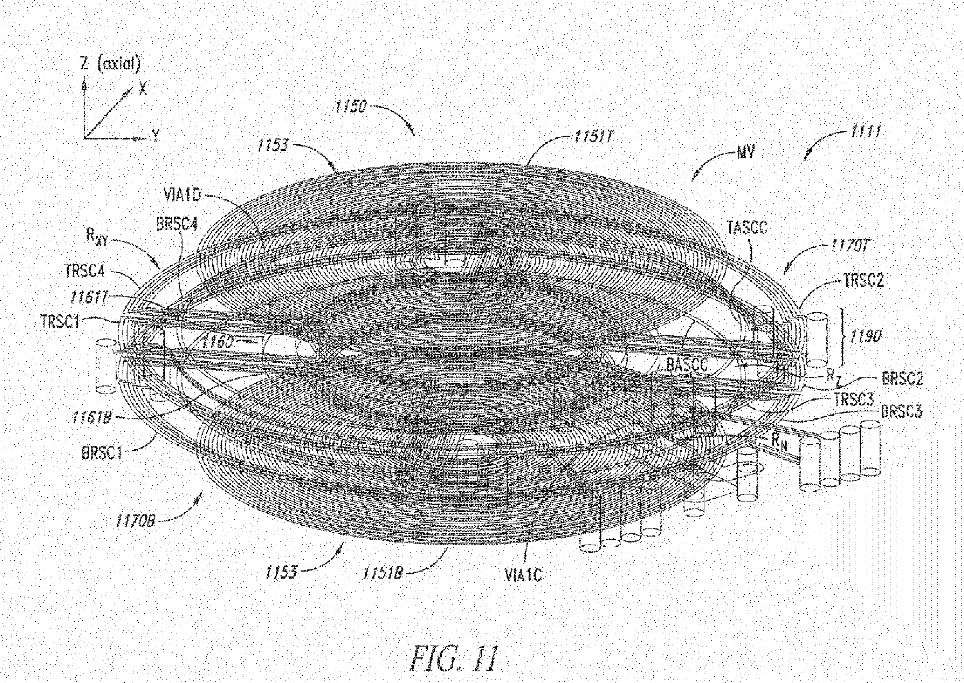

FIGURE 11 is a partially schematic isometric diagram of an alternative implementation of a stylus position detection portion 1111 that is similar to a stylus position detection portion 1011 shown in FIGURE 10, emphasizing certain aspects according to principles disclosed herein. In general, the stylus position detection portion 1111 includes certain components that are similar to those of the stylus position detection portion 1011 of FIGURE 10, and will be understood to operate similarly except as otherwise described below. The configuration of a stylus position detection portion 1111, may be employed, for example, in the scanning probe 300 of FIGURE 2 as the stylus position detection portion 311, in the implementation of FIGURE 3 instead of the stylus position detection portion 411, in the implementation of FIGURE 4 instead of the stylus position detection portion 511, in the implementation of FIGURES 9A and 9B instead of the stylus position detection portion 911, in the implementation of FIGURE 10 instead of the stylus position detection portion 1011, etc.

In the implementation shown in FIGURE 11, the stylus position detection portion 1111 comprises a coil board configuration portion 1190 and a disrupter configuration 1150. The coil board configuration portion 1190 includes top and bottom receiver coil board portions 1170T, 1170B, with a field generation coil board portion 1160 positioned between the top receiver coil board portion 1170T and the bottom receiver coil board portion 1170B. In various implementations, the top and bottom receiver coil board portions 1170T, 1170B may also be referenced as first and second board portions 1170T, 1170B, and the field generation coil board portion 1160 may also be referenced as a center board portion 1160. The disruptor configuration 1150 includes disruptor elements 1151T, 1151B or scales. In various implementations, the disruptor elements 1151T, 1151B may also be referenced as first and second disruptor elements 1151T, 1151B. The top and bottom receiver coil board portions 1170T, 1170B as illustrated are generally similar to the corresponding top and bottom receiver coil board portions 1070T, 1070B of FIGURE 10 (more details of conductive vias and pads are illustrated in FIGURE 11).

In various implementations, disruptor elements 1151T, 1151B (or more generally the disruptor configuration 1150) may each comprise at least one of a conductive plate or a conductive loop, or parallel conductive plates or conductive loops (e.g., as fabricated on two sides of a printed circuit substrate, patterned by printed circuit board fabrication techniques), or any other desired operational configuration that provides a disruptor area (e.g., its interior area). In various implementations, a configuration with conductive loops may include at least one of concentric loops, a spiral pattern, etc. As illustrated in FIGURE 11, the disruptors 1151T and 1151B each comprise a plurality of concentric conductive loops 1153, instead of the conductive plates employed in the illustrated implementation of FIGURE 10. The disruptor elements 1151T and 1151B are located along the central axis CA in the disruptor motion volume MV, which extends on opposite sides of the coil board configuration 1190, and may be coupled to a stylus suspension portion (see stylus suspension portion 1007 of FIGURE 10) in a manner similar to that discussed above with reference to FIGURE 10.

The field generating coil board portion 1160 generally comprises at least a first field generating coil. As illustrated, the field generating coil board portion 1160 comprises a top field generating coil portion 1161T and a bottom field generating coil portion 1161B, which are positioned between the top receiver coil board portion 1170T and the bottom receiver coil board portion 1170B. The top receiver coil board portion 1170T, the field generating coil board portion 1160 and the bottom receiver coil board portion 1170B are nominally planar, nominally parallel to each other and nominally orthogonal to the central axis CA. In the example implementation of FIGURE 11, the field generating coil board portion 1160 comprises a multi-turn field generating coil with two turns and for which the two corresponding field generating coil portions 1161T and 1161B are connected by a via and are located approximately equidistant from a midplane of the disruptor motion volume along the central axis, and are nominally planar and orthogonal to the central axis.

As illustrated in FIGURE 11, the top field generating coil portion 1161T and the bottom field generating coil portion 1161B have areas which are smaller than the areas of the disruptor elements 1151T, 1151B. Employing field generating coils having a smaller area than areas of the disruptor elements facilitates reducing the sensitivity of the stylus position detection portion 1111 to the size of the disruptor elements or scales. Using conductive loops (e.g., concentric loops, a spiral pattern, etc.) in the disruptor elements instead of conductive plates or a single conductive loop also facilitates reducing the sensitivity of the stylus position detection portion 1111 to the size of the disruptor elements or scales, while maintaining good X and Y position signal strength. Reducing the sensitivity of the stylus portion to the size of the disruptor elements or scales may facilitate increased accuracy of measurements, and may reduce processing costs associated with generating results in a desired output format.

In some implementations, due to the close proximity of the receiver coils (e.g., coils BRSC1-BRSC4, TRSC1-TRSC4) to the transmitter (e.g., coils 1161T, 1161B), non-connected vias/pads may be added to balance offsets that may otherwise be generated by connection traces (e.g., for transmitter and receiver leads) or other elements. As an illustrative example, in the implementation of FIGURE 11, certain connected vias/pads/leads (e.g., as connected to and/or part of electronic circuitry or configurations) are shown within the coils BRSC3/TRSC3 (e.g., for connection traces) that do not have symmetrical connected counterparts (e.g., symmetrical about the central axis) within the symmetrical coils BRSC4/TRSC4 (e.g., five such vias as well as upper and lower transmitter leads are illustrated within the coils BRSC3/TRSC3 in the example configuration of FIGURE 11, including three vias for the connections for the axial sensing coil configurations TASCC, BASCC, a via for connecting the portions of the normalization coil $R_N$, a via for connecting the field generating coil portions 1161T, 1161B, and the upper and lower transmitter leads for the field generating coil portions 1161T, 1161B). In some implementations, such traces/vias/pads/leads may reduce the magnetic field into the receiver coils which can result in a signal offset if not compensated for. In some implementations, such offsets may be addressed by mirroring such features (e.g., on the opposite side of the central axis) within the symmetrical receiver coils with non-connected vias/pads/leads. For example, in one implementation, non-connected vias/pads/leads may be added within the coils BRSC4/TRSC4, each of which may mirror/be symmetrical with a corresponding connected via/pad/lead within the coils BRSC3/TRSC3 (e.g., five non-connected vias as well as upper and lower pads may be added within the coils BRSC4/TRSC4 that are each symmetrical with/mirror a corresponding connected via/pad/lead illustrated within the coils BRSC3/TRSC3).

As a specific illustrative example of such concepts, in FIGURE 11 the via for connecting the portions of the normalization coil $R_N$ is designated as an electrically connected via VIA1C and is shown within the coils BRSC3/TRSC3. In accordance with the principles described above, a non-connected via VIA1D may be included within the coils BRSC4/TRSC4 that is symmetrical with/mirrors the corresponding connected via VIA1C illustrated within the coils BRSC3/TRSC3 (e.g., symmetrical with and mirrored relative to the central axis of the configuration). More specifically, the via VIA1D is at a location within the coils BRSC4/TRSC4 that is symmetrical with/mirrors the location of the via VIA1C within the coils BRSC3/TRSC3 (e.g., such that a line between the location of the via VIA1C and the location of the via VIA1D would pass through the central axis of the configuration and for which each location is equidistant from the central axis). The via VIA1D balances the offset that could otherwise be generated by the via VIA1C as described above. More specifically, the non-connected element VIA1D is located within the rotary sensing coils BRSC4/TRSC4 and is symmetrically opposite (i.e., relative to the central axis and/or axial direction) from the similar electronically connected element VIA1C which is located within the rotary sensing coils BRSC3/TRSC3, and for which the non-connected element VIA1D reduces a signal offset that would otherwise result in the signal components provided by the rotary sensing coils BRSC3/TRSC3 and BRSC4/TRSC4 due to the presence of the connected element VIA1C in the rotary sensing coils BRSC3/TRSC3.

In the implementation of FIGURE 11, the via VIA1C for connecting the portions of the normalization coil $R_N$ is shown to be proximate to the vias for the connections for the axial sensing coil configurations TASCC, BASCC. The normalization coil $R_N$ includes an upper portion and a lower portion, wherein the upper portion is straight and extends radially and is connected by the via VIA1C to the lower portion that is also straight and also extends radially (for which the lower portion is located directly below the upper portion but which for simplicity of the illustration is not shown in FIGURE 11 due to being obscured by other elements). In various implementations, the normalization coil $R_N$ is utilized to provide a measurement of the transmitter field (e.g., corresponding to the changing magnetic flux that is generated by the field generating coil configuration 1160), for which the measured signal may be relatively independent of (e.g., may be only nominally affected by) the position of the disruptor elements 1151T, 1151B. In various implementations, the position measurements may be scaled to this measured signal to make them relatively insensitive to variations in the transmitter amplitude (from the field generating coil configuration 1160). In various implementations, such processing may be performed by signal processing and control circuitry (e.g., the signal processing and control circuitry 380 of FIGURE 2).

With reference to FIGURES 9A, 9B, 10 and 11, in a manner similar to that described above with reference to FIGURES 2-8F, the rotary sensing coil portion RSC (as illustrated TRSC1 to TRSC4 and BRSC1 to BRSC4) outputs at least first and second rotary signal components RSigs that are indicative of the rotary position (e.g., X and Y position signals) of the stylus coupling portion 342 (see FIGURE 2) over corresponding signal lines, and the axial sensing coil configuration ASCC (as illustrated TASCC and BASCC) outputs one or more axial signal components ASigs that is indicative of the axial position (e.g., a Z position signal) of the stylus coupling portion over corresponding signal lines. In various implementations, signal processing and control circuitry 380 (see FIGURE 2) receives the rotary signal components RSigs and the axial signal components ASigs, and may perform various levels of related signal processing in various implementations. For example, in one implementation, the signal processing and control circuitry may cause the signal components from various receiver coils to be combined and/or processed in various relationships, and provide the results in a desired output format as the rotary and axial position signal outputs RPSOut and APSOut, through an attachment portion 224 (see FIGURE 2). With reference to FIGURE 2, one or more receiving portions (e.g., in the CMM 200, motion controller 115, host computer 120, etc.) may receive the rotary and axial position signal outputs RPSOut and APSOut, and one or more associated processing and control portions may be utilized to determine a three-dimensional position of the stylus coupling portion 342 and/or of the contact portion of the attached stylus 306 as its contact portion 348 moves along a surface of a workpiece W that is being measured. The numbers, sizes and shapes of the receiver coils, the field generating coils, and the conductive plates or loops of the disruptor elements employed in various implementations may be selected based on desired operational characteristics, such as improved position sensing and reduced high- order non-linearities. It is noted that low order non-linearities may be calibrated by the CMM.

The implementations of FIGURES 9A, 9B, 10 and 11 may facilitate employing fewer mechanical components, as in some implementations only one board needs to be mounted (e.g., flexible cables between separate boards may not be needed). Such implementations also may facilitate improved repeatability and lower assembly costs as the receiver coils may have fewer degrees of freedom with respect to alignment, and thus may be less sensitive to tilt and rotation issues that may arise in multi-board implementations, for example, with respect to XY positioning signals.

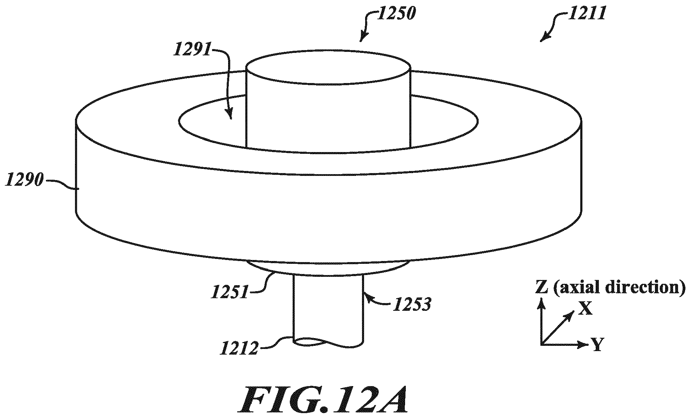

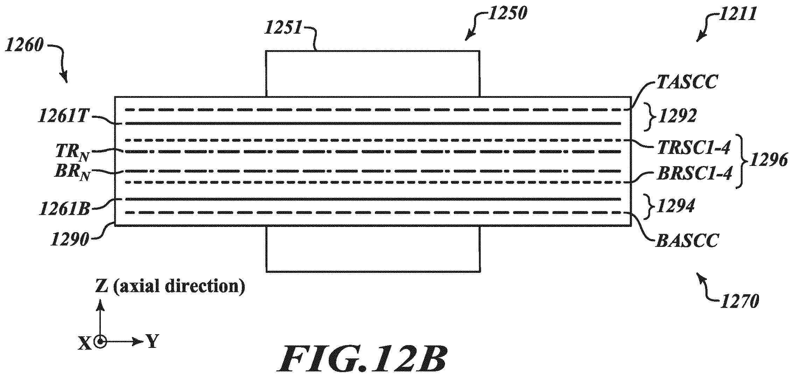

FIGURES 12A and 12B illustrate an alternative configuration of a stylus position detection portion 1211, which may be employed, for example, in the scanning probe 300 of FIGURE 2 as the stylus position detection portion 311, in the implementation of FIGURE 3 instead of the stylus position detection portion 411, in the implementation of FIGURE 4 instead of the stylus position detection portion 511, etc. The stylus position detection portion 1211 uses inductive sensing principles and includes a disruptor configuration 1250 and a coil board configuration 1290. The disruptor configuration 1250 as illustrated comprises a generally cylindrical disruptor 1251. The coil board configuration 1290 as illustrated comprises a generally disc-shaped structure, and is illustrated in more detail in FIGURE 12B.

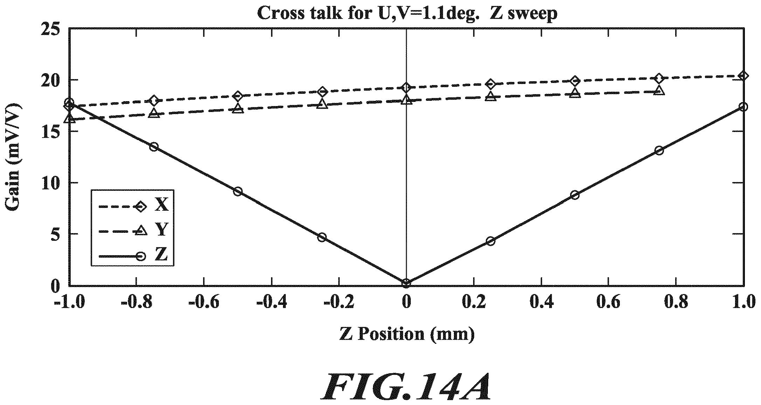

As illustrated, the disruptor 1251 is positioned within a center opening 1291 of the coil board configuration 1290, and extends in the Z direction of the disc-shaped coil board configuration 1290. In the example of FIGURES 12A and 12B, the disruptor 1251 is illustrated as extending in the Z direction above and below the coil board configuration 1290, although it will be appreciated that in other implementations this may not be the case (e.g., in various alternative implementations the disruptor 1251 may be even with, or shorter than the coil board configuration 1290 in the Z direction). In various implementations, rather than the height along the Z direction, it is the cylindrical shape of the disruptor 1251 which is the more important factor (e.g., which results in various desirable operating characteristics, as will be described in more detail below, such as with respect to FIGURES 14A-14D, etc.)

The coil board configuration 1290 includes a field generating coil configuration 1260, as illustrated having two transmission coils 1261T and 1261B, and a receiver coil portion 1270. The receiver coil portion 1270 may comprise rotary sensing coil portions (also referred to as rotary sensing coils) RSC (e.g., for sensing motion transverse to the axial direction, as described above with respect to FIGURES 3-6, etc.) and axial sensing coil configurations ASCC (e.g., for sensing motion along the axial direction, as described above with respect to FIGURES 3-6, etc.).

Briefly, the moving disruptor element 1251 (or more generally, the disruptor configuration 1250) causes position-dependent variations in a changing magnetic field generated by the field generating coil configuration 1260. The receiver coil portion 1270 is responsive to the changing magnetic field and the variations therein caused by the disruptor element 1251.

As illustrated, the coil board configuration 1290 comprises a first board portion 1292, including a top axial sensing coil TASCC, and a field generating coil 1261T, a second board portion 1294, including a bottom axial sensing coil BASCC, and a field generating coil 1261B, and a center board portion 1296 positioned between the first board portion 1292 and the second board portion 1294. The center board portion 1296 includes top rotary sensing coils TRSC1-4, a top normalization coil TRN, a bottom normalization coil BRN, and bottom rotary sensing coils BRSC1-4.

The coil board configuration 1290 is mounted in a fixed relationship to the frame of a scanning probe (see scanning probe 300 of FIGURE 2 and frame 408 of FIGURE 4), with the second board portion 1294 of the coil board configuration 1290 closer to the stylus suspension portion 307/407 (see FIGURES 2 and 3). The first board portion 1292, the second board portion 1294 and center board portion 1296 of the coil board configuration 1290 are nominally parallel to one another and nominally orthogonal to a central axis CA (see FIGURE 3) of a scanning probe 300 (see FIGURE 2). The coil board configuration 1290 may comprise, for example, a two-sided substrate or printed circuit board having coils fabricated as printed conductors in layers of the substrate or printed circuit board, free-standing coils fastened to a substrate or printed circuit board, etc., and/or various combinations thereof.

In various implementations, the disruptor element 1251 of the disruptor configuration 1250 may comprise a conductive cylinder that provides a disruptor area, and the disruptor element 1251 is located along the central axis CA (see FIGURE 3) in a disruptor motion volume extending on opposite sides of the coil board configuration 1290. The disruptor element 1251 is coupled to the stylus suspension portion 307/407 (see FIGURES 2 and 3) in a fixed relationship relative to one another by a coupling configuration 1253, including an upper portion of a moving member 1212 (e.g., similar to the moving member 412 of FIGURE 3). The disruptor element 1251 moves in the disruptor motion volume relative to an undeflected position in response to a deflection of the stylus suspension portion 307/407 (see FIGURES 2 and 3), the disruptor element moving over operating motion ranges +/- Rz along the axial direction in response to the axial motion, and over respective operating motion ranges +/- Rx and +/- Ry along respective orthogonal X and Y directions that are orthogonal to the axial direction in response to the rotary motion. The field generating coil configuration 1260 generates a changing magnetic flux generally along the axial direction in the disruptor motion volume in response to a coil drive signal.

As described above with respect to FIGURE 11, in various implementations, the top and bottom normalization coils TRN and BRN may be utilized to provide a measurement of the transmitter field (e.g., corresponding to the changing magnetic flux that is generated by the field generating coil configuration 1260), for which the measured signal may be relatively independent of (e.g., may be only nominally affected by) the position of the disruptor element 1251. In various implementations, the position measurements may be scaled to this measured signal to make them relatively insensitive to variations in the transmitter amplitude (from the field generating coil configuration 1260). In various implementations, such processing may be performed by signal processing and control circuitry (e.g., the signal processing and control circuitry 380 of FIGURE 2).

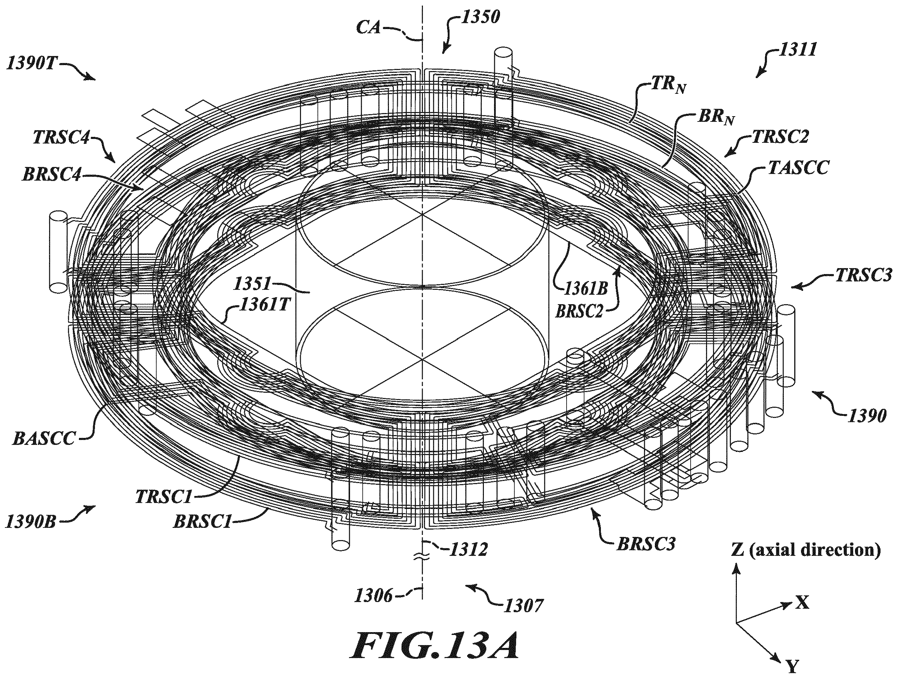

FIGURES 13A to 13F illustrate an implementation of a stylus position detection portion 1311 that is similar to a stylus position detection portion 1211 shown in FIGURES 12A and 12B, emphasizing certain aspects according to principles disclosed herein.

FIGURE 13A is a partially schematic isometric diagram of an implementation of a stylus position detection portion 1311 that is similar to a stylus position detection portion 1211 shown in FIGURES 12A and 12B, emphasizing certain aspects according to principles disclosed herein. In general, the stylus position detection portion 1311 includes certain components that are similar to those of the stylus position detection portions 311, 411, 511 and 911 of FIGURES 2, 3, 4, 9A and 9B, and will be understood to operate similarly except as otherwise described below. The configuration of a stylus position detection portion 1311, may be employed, for example, in the scanning probe 300 of FIGURE 2 as the stylus position detection portion 311, in the implementation of FIGURE 3 instead of the stylus position detection portion 411, in the implementation of FIGURE 4 instead of the stylus position detection portion 511, in the implementation of FIGURES 9A and 9B instead of the stylus position detection portion 911, in the implementation FIGURES 12A and 12B instead of the stylus position detection portion 1211, etc.

In the implementation shown in FIGURE 13A, the stylus position detection portion 1311 comprises a coil board configuration portion 1390 and a disrupter configuration 1350. In various implementations, disruptor element 1351 (or more generally the disruptor configuration 1350) comprises a conductive cylinder, or any other desired operational configuration that provides a disruptor area (e.g., its interior area). As illustrated in FIGURE 13A, the disruptor element 1351 comprises a conductive cylinder. The disruptor element 1351 is located along the central axis CA in the disruptor motion volume MV, which extends on opposite sides of the coil board configuration 1390, and is coupled to a stylus suspension portion by a coupling configuration (e.g., comprising at least an upper portion of a moving member 1312 that is similar to the moving member 412 of FIGURE 3). For purposes of explanation, the disruptor element 1350 moves relative to the undeflected position illustrated in FIGURE 13A (e.g., similar to the undeflected position UNDF, in FIGURE 3) in response to a deflection of a stylus suspension portion 1307 and/or a stylus 1306 and/or the moving member 1312 (e.g., which may be similar or identical to the stylus suspension portion 407, stylus 406 and moving member 412 of FIGURE 3). The disruptor element 1351 may be described as moving with displacement increments $\Delta Z$ over an operating motion range +/- Rz along the axial direction in response to axial motion, and with respective displacement increments $\Delta X$ and $\Delta Y$ over respective operating motion ranges +/- Rx and +/- Ry along orthogonal X and Y directions that are orthogonal to the axial direction (Z direction) in response to rotary motion.

The coil board configuration 1390 includes a top coil board portion 1390T and a bottom coil board portion 1390B. The top coil board portion 1390T includes a top axial sensing coil configuration TASCC (e.g., comprising the single illustrated individual coil in this implementation), at least a first top field generating coil configuration 1361T, N top rotary sensing coils TRSC (e.g., as illustrated TRSC1-TRSC4, where N=4), and a top normalization coil configuration $TR_N$. The bottom coil board portion 1390B includes a bottom normalization coil configuration $BR_N$, N bottom rotary sensing coils BRSC (e.g., as illustrated BRSC1-BRSC4, where N=4), at least a first bottom field generating coil configuration 1361B, and a bottom axial sensing coil configuration BASCC (e.g., comprising the single illustrated individual coil in this implementation).

The coil board configuration 1390 is mounted in a fixed relationship to the frame of the scanning probe (e.g., frame 408 of FIGURE 4) with the bottom coil board portion 1390B closer to the stylus 1306 and/or the stylus suspension portion 1307. It should be appreciated with respect to the various sensing coils shown in FIGURE 13A, all coils comprise at least one of windings or conductors that have first and second connection ends (e.g., as represented in FIGURE 6) that are configured to operate as one or more inductively coupled "turns." As illustrated, the top and bottom axial sensing coil configurations TASCC and BASCC, as well as the top and bottom rotary sensing coil configurations TRSC and BRSC, are nominally symmetrically spaced with respect to the disruptor configuration 1350 and the corresponding position of the disruptor element 1351. Other configurations are possible (e.g., the rotary sensing coil configurations TRSC and BRSC may not be nominally centered relative to the disruptor configuration 1350 in some implementations).

As illustrated in FIGURE 13A, the at least a first top field generating coil configuration comprises a single field generating coil 1361T, which has an area larger than an area of the disruptor element 1351, the at least a first bottom field generating coil configuration comprises a single field generating coil 1361B, which has an area larger than an area of the disruptor element 1351. The top coil board portion 1390T, and the bottom coil board portion 1390B are nominally planar, nominally parallel to each other and nominally orthogonal to the central axis CA.

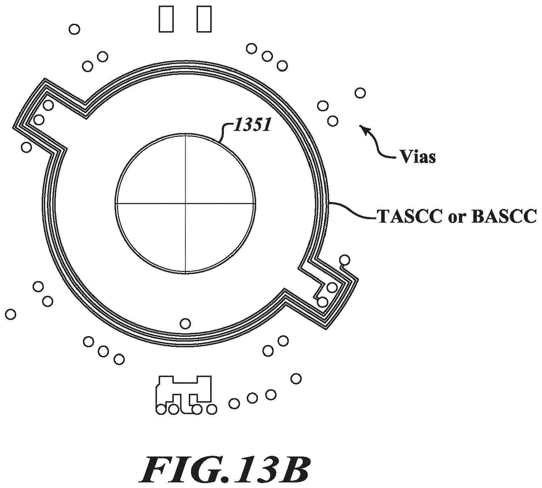

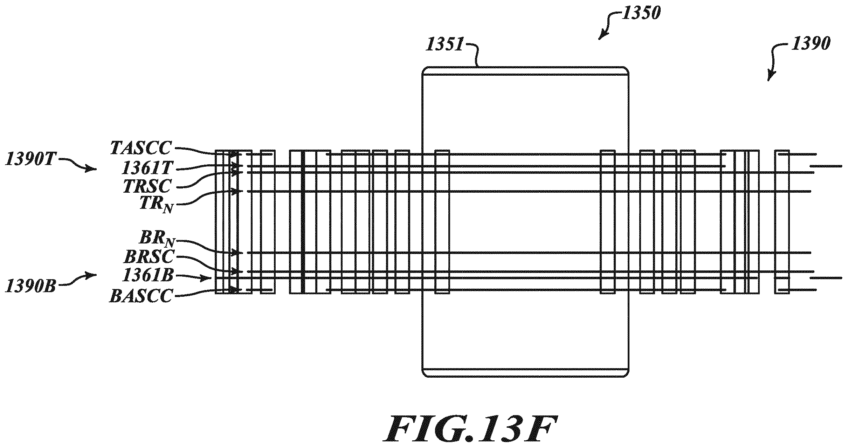

FIGURES 13B to 13E illustrate example implementations of coils of the coil board configuration 1390 of FIGURE 13A. FIGURE 13F illustrates an example layering of the coils in the coil board configuration 1390 of Figure 13A. FIGURES 13A to 13E illustrate connecting pads or vias (see FIGURE 13B), which may be similar to connecting pads or vias as discussed above in the description of FIGURE 11.

In FIGURE 13B, an example implementation of the top axial sensing coil configuration TASCC or of the bottom sensing axial coil configuration BASCC is shown. As illustrated, a single coil is employed as the top axial coil configuration TASCC and a single coil is employed as the bottom axial coil configuration BASCC.

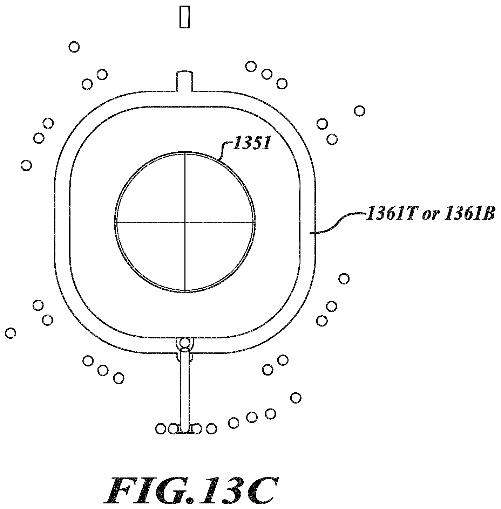

In FIGURE 13C, an example implementation of the top field generating coil configuration 1361T or of the bottom field generating coil configuration 1361B is shown. As illustrated, a single coil is employed as the top field generating coil configuration 1361T and a single coil is employed as the bottom field generating coil configuration 1361B.

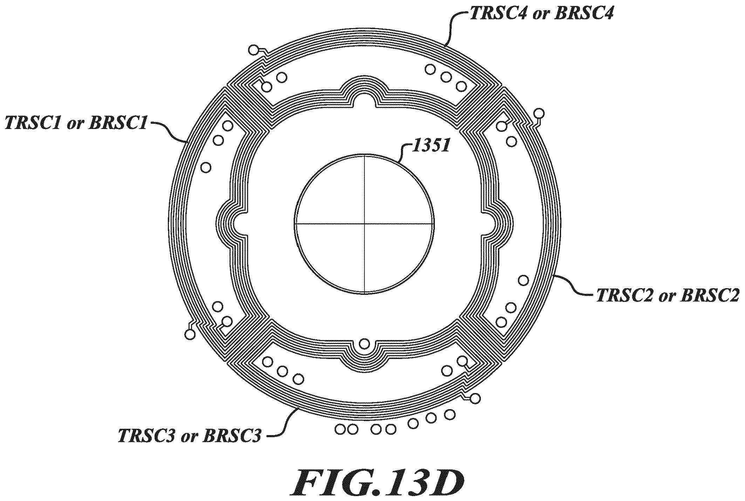

In FIGURE 13D, an example implementation of the top rotary sensing coil configuration TRSC or of the bottom rotary sensing coil configuration BRSC is shown. As illustrated, four coils TRSC1-4 are employed as the top rotary sensing coil configuration TRSC and four coils BRSC1-4 are employed as the bottom rotary sensing coil configuration BRSC.

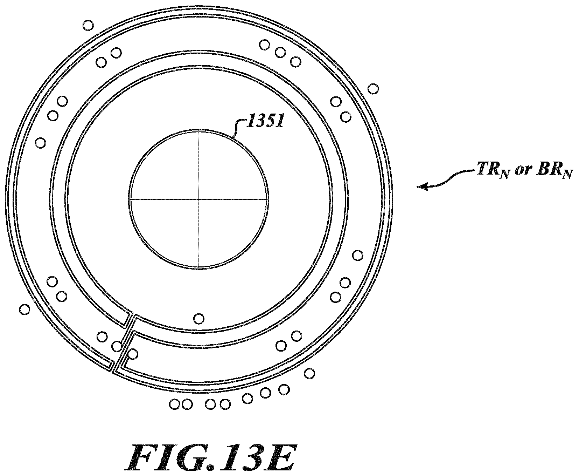

In FIGURE 13E, an example implementation of the top normalization coil configuration $TR_N$ or of the bottom normalization coil configuration $TR_B$ is shown. As illustrated, a single coil is employed as the top normalization coil configuration $TR_N$ and a single coil is employed as the bottom normalization coil configuration $TR_B$.

In FIGURE 13F, an example implementation of layers of the coil configuration 1390 is shown. As discussed above with reference to FIGURE 13A, the coil board configuration 1390 includes a top coil board portion 1390T and a bottom coil board portion 1390B. The top coil board portion 1390T, in order, includes a first layer having a top axial sensing coil configuration TASCC, a second layer including at least a first top field generating coil configuration 1361T, a third layer including N top rotary sensing coils TRSC, and fourth layer including a top normalization coil configuration $TR_N$. The bottom coil board portion 1390B generally mirrors the top coil board configuration, and includes a first layer having a bottom normalization coil configuration $BR_N$, a second layer having N bottom rotary sensing coils BRSC, a third layer having at least a first bottom field generating coil configuration 1361B, and a fourth layer having a bottom axial sensing coil configuration BASCC. The disruptor element 1351 as illustrated is a conductive cylinder that extends above and below the coil board configuration.

As discussed above, in the illustrated implementations of FIGURES 3, 4 and 5, the disruptor element is positioned inside the field generating coil elements (e.g., disruptor element 551 of FIGURE 4 fits inside the field generating coil 561), and an area of the disruptor element is smaller than an area of the field generating coil elements. In the illustrated implementations of FIGURES 9A, 9B and 10, the disruptor elements are positioned parallel to the field generating coil elements (e.g., the disruptor elements 1051T, 1051B are positioned above and below the field generating coil 1061). In the illustrated implementations of FIGURES 12A, 12B, and 13A to 13F, the single tall cylindrical disruptor element 1251/1351 fits within the hole 1291 which is surrounded by the coil elements, and for which the configuration provides increased flexibility with respect to the relative sizes and positions of the coil configuration board elements, while also utilizing a single printed circuit board (e.g., for which the top board portion and the bottom board portion may comprise portions of a single multilayer printed circuit board) which may reduce cost and complexity relative to configurations utilizing multiple printed circuit boards. In addition, as discussed in more detail below with respect to FIGURES 14A to 14D, in the implementations of FIGURES 12A, 12B, and 13A to 13F, significant reductions in the resonant frequency change (RFC) occurring as a result of displacements along the Z axis, as well as reductions in off-axis cross talk, may be obtained, resulting in better overall performance of the CMM.

The implementations of FIGURES 12A, 12B, and 13A to 13F may facilitate employing fewer mechanical components, as in some implementations only one board needs to be mounted (e.g., flexible cables between separate boards may not be needed), and a single tall disruptor element may be employed, which does not need to be disassembled to install or remove the board. Such implementations also may facilitate improved repeatability and lower assembly costs as the receiver coils may have fewer degrees of freedom with respect to alignment, and thus may be less sensitive to tilt and rotation issues that may arise in multi-board implementations, for example, with respect to XY positioning signals. Such implementations also may improve off-axis cross talk, frequency stability, and linearity.

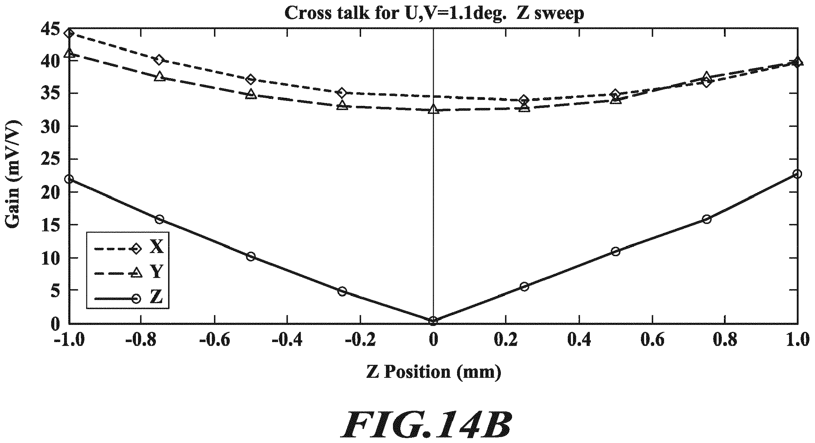

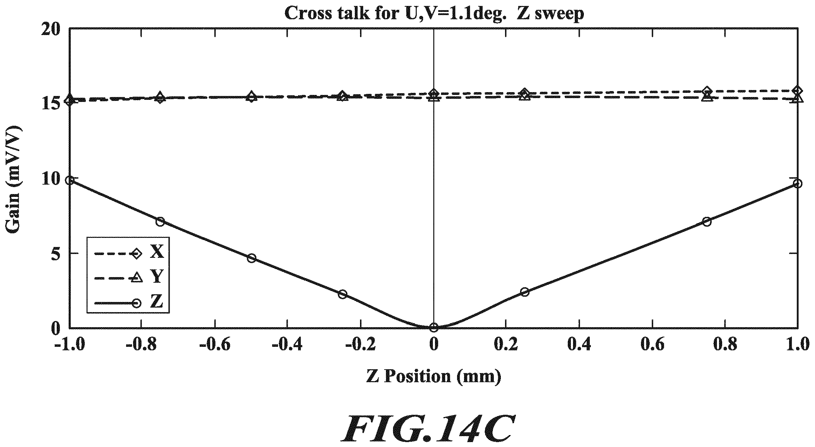

FIGURES 14A to 14C illustrate example frequency shift and off-axis cross talk errors for the embodiments illustrated in FIGURES 3, 4 and 5, the embodiments illustrated in FIGURES 9A, 9B and 10, and the embodiments illustrated in FIGURES 12A, 12B, and 13A to 13F. FIGURE 14A illustrates an example off-axis cross talk error of the embodiments illustrated in FIGURES 3, 4 and 5 as the displacement of the disruptor (e.g., disruptor 551 of FIGURE 4) along the Z axis is swept from -1 mm to +1 mm, and with U,V = 1.1 degrees. FIGURE 14B illustrates an example off-axis cross talk error of the embodiments illustrated in FIGURES 9A, 9B and 10 as the displacement of the disruptor (e.g., disruptor 950 of FIGURE 9A) along the Z axis is swept from -1 mm to +1 mm, and with U,V = 1.1 degrees. FIGURE 14C illustrates an example off-axis cross talk error of the embodiments illustrated in FIGURES 12A, 12B and 13A to 13F as the displacement of the disruptor (e.g., disruptor 1250 of FIGURE 12A) along the Z axis is swept from -1 mm to +1 mm, and with U,V = 1.1 degrees. In each of the FIGURES 14A-14C, the V-shaped Z signal is the primary (linear) positioning signal, and the X and Y signals illustrate the size of the cross talk in the U,V directions. As can be seen, the off-axis cross talk error is highest for the embodiments of FIGURES 9A, 9B and 10, and is in the range of 32-45 mV/V for the X and Y axes, for which 40% of the nominal signal range is thus cross talk (i.e., (45-32)/32 = 40%). The embodiments of FIGURES 3, 4 and 5 have off-axis cross talk error in the range of 16-20 mV/V for the X and Y axes, for which 25% of the nominal signal range is thus cross talk (i.e., (20-16)/16 = 25%), providing some improvement. The off-axis cross talk error is lowest for the embodiments of FIGURES 12A, 12B and 13A to 13F, and is in the range of 15-16 mV/V for the X and Y axes, for which 7% of the nominal signal range is thus cross talk (i.e., (16-15)/15 = 7%).

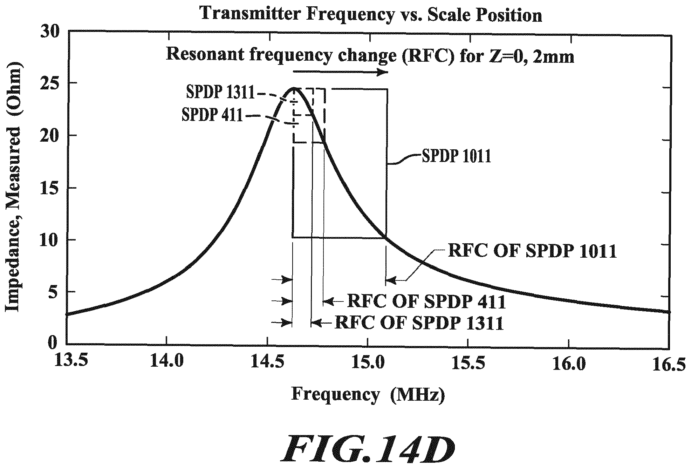

FIGURE 14D illustrates example resonant transmitter frequency changes as the stylus position detection portion (SPDP) displacement is varied between zero mm and 2 mm for the embodiments illustrated FIGURES 3, 4 and 5, the embodiments illustrated in FIGURES 9A, 9B and 10, and the embodiments illustrated in FIGURES 12A, 12B, and 13A to 13F. At a displacement of zero mm, the resonant frequency is the same for the various embodiments. The resonant frequency change (RFC) at an SPDP displacement of 2 mm is largest for the embodiments of FIGURES 9A, 9B and 10 (labeled as SPDP 1011 in FIGURE 14D), is smallest for the embodiments of FIGURES 12A, 12B and 13A-13F (labeled as SPDP 1311 in FIGURE 14D), with the embodiments of FIGURES 3, 4, and 5 (labeled as 411 in FIGURE 14D) having a RFC slightly larger than that of the embodiments of FIGURES 12A, 12B and 13A to 13F, but significantly smaller than that of the embodiments of FIGURES 9A, 9B and 10. As can be seen, the embodiments of FIGURES 12A, 12B and 13A to 13F have less change in inductance as the displacement along the Z axis is varied, resulting in a small RFC with disruptor position, in addition to having the smallest off-axis cross talk.

In various implementations, at least some signal offset errors may occur due to printed circuit board (PCB) manufacturing tolerances, such as layer to layer coil registration errors, particularly for single board implementations. For example, misalignments between field generating coil configurations and rotary sensing coil configurations (RSC) may occur due to PCB manufacturing tolerances. In accordance with principles disclosed herein, one or more misalignment compensation elements may be added to a coil board configuration to compensate for misalignments of coils (e.g., coils of the coil configurations of the first, second and/or center board portions, etc.) with respect to each other. More specifically, as will be described in more detail below, in various implementations one or more misalignment compensation element may be configured/utilized to reduce a signal offset that results from a misalignment of at least one coil of the coil board configuration (e.g., the coil board configuration may comprise a PCB with a plurality of layers in which the coils are located and the misalignment of the at least one coil may result from a registration error, such as within manufacturing tolerances, in a layer to layer registration as part of a fabrication process).

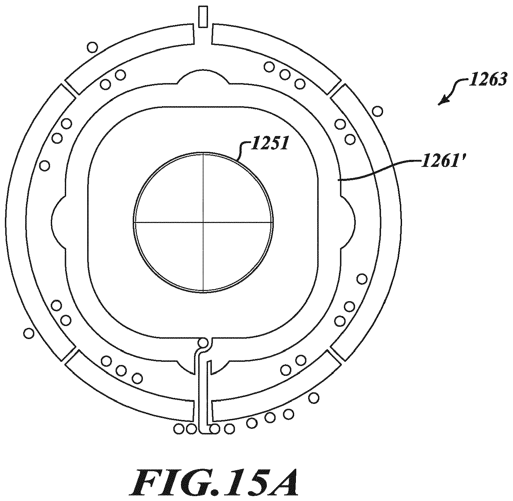

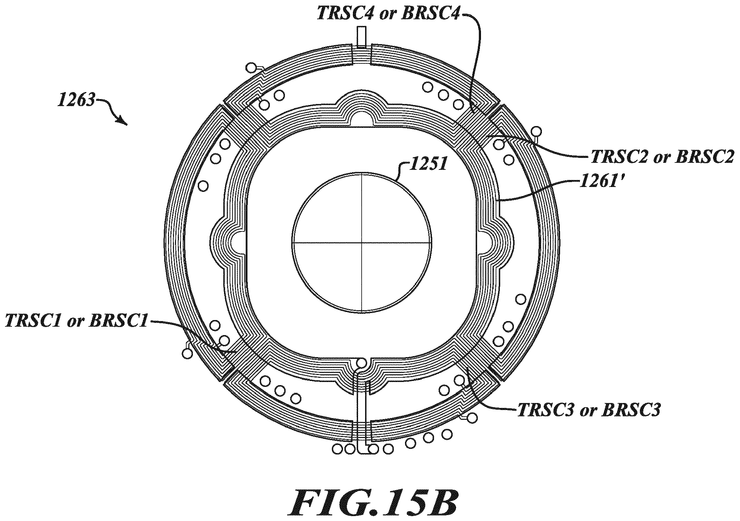

FIGURES 15A to 15C illustrate an embodiment in which misalignment compensation elements take a form of shielding added to reduce the effect of registration errors between a field generating coil configuration (e.g., field generating coils 1261T and 1261B of FIGURE 12B) and a rotary sensing coil configuration (e.g., TRSC1-4 and BRSC1-4 of FIGURE 12B). FIGURE 15A illustrates an inner shielding 1261' in which copper pads are added to the field generating coils (e.g., 1261T and 1261B of FIGURE 12B) and an outer shielding 1263, in which copper pads are positioned outside the shielded field generating coil 1261'. FIGURE 15B is a top view illustrating an alignment of a shielded field generating coil 1261' and outer shielding 1263 with a rotary sensing coil configuration RSC (e.g., TRSC1-4 or BRSC1-4) with respect to the center axis of the stylus position detection portion (e.g., center axis CA of FIGURE 13A). As illustrated, copper pads are added to the field generating coils 1261 to broaden an area of the shielded field generating coils 1261' to generally match an area of inner loops of the rotary sensing coils RSC, and the copper pads of the outer shielding are shaped and positioned to generally match an area of the outer loops of the rotary sensing coils RSC.

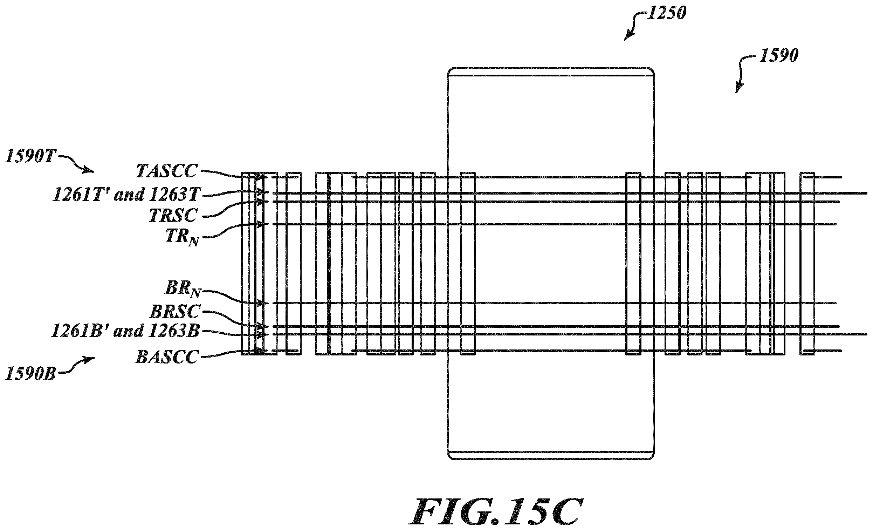

In FIGURE 15C, an example implementation of layers of a coil board configuration 1590 is shown. As illustrated, the coil board configuration 1590 includes a top coil board portion 1590T and a bottom coil board portion 1590B. The top coil board portion 1590T, in order, includes a first layer having a top axial sensing coil configuration TASCC, a second layer including at least a first shielded top field generating coil configuration 1261T' and an outer shielding 1263T, a third layer including N top rotary sensing coils TRSC, and fourth layer including a top normalization coil configuration TR$_N$. The bottom coil board portion 1590B generally mirrors the top coil board configuration, and includes a first layer having a bottom normalization coil configuration BR$_N$, a second layer having N bottom rotary sensing coils BRSC, a third layer having at least a first shielded bottom field generating coil configuration 1261B' and outer shielding 1263B, and a fourth layer having a bottom axial sensing coil configuration BASCC.

Some embodiments may employ inner shielding (e.g., shielded field generating coil 1261') without employing outer shielding (e.g., outer shielding 1263), some embodiments may employ outer shielding (e.g., outer shielding 1263) without employing inner shielding (e.g., shielded field generating coil 1261'), some embodiments may employ both inner shielding (e.g., shielded field generating coil 1261') and outer shielding (e.g., outer shielding 1263). The shielding 1261', 1263, makes the field generated smaller and more uniform at the edges of the rotary sensing coils, reducing the effect of registration errors between the field generating coils and the rotary sensing coils. As shown in the table below, including inner and outer shielding may facilitate reducing offsets by 77% with only a 5% reduction in gain.

| Configuration | XY Gain (mV/V/mm) | Offset per 100um misregistration (%) | XY_L (nH) | Tx_L (nH) | Tx_R (Ohm) |
|---|---|---|---|---|---|
| No Added Shielding | 53.17 | 36.5 | 1656 | 66.3 | 0.127 |
| Inner Shielding | 50.82 | 13.26 | 1621 | 66.3 | 0.152 |
| Inner & Outer Shielding | 50.63 | 8.4 | 1501 | 60.3 | 0.152 |

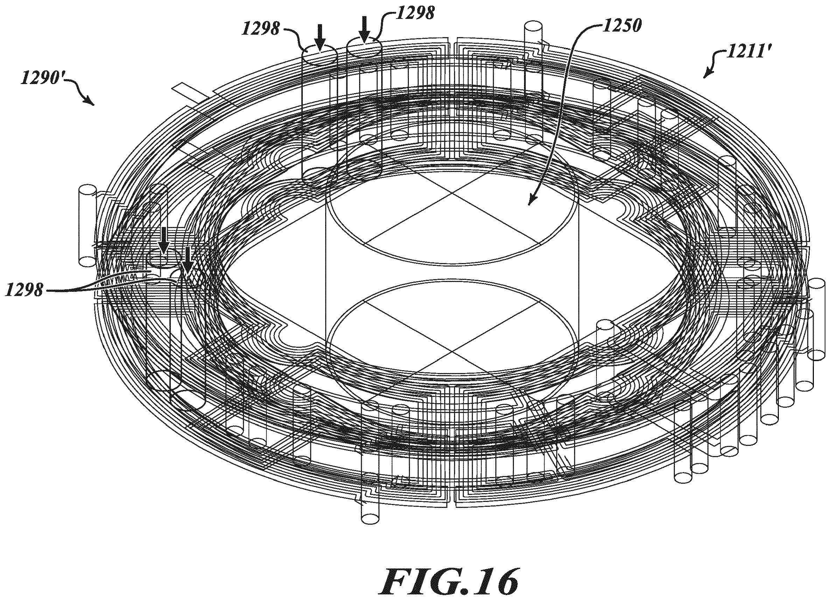

With reference to FIGURE 12B, FIGURE 16 illustrates an exemplary implementation of a stylus position detection portion 1211' in which misalignment compensation elements in the form of pins 1298 (e.g., which in various implementations may comprise pins, pads, etc.) are added to a coil board configuration to compensate for signal offset errors by introducing a compensating offset signal. In various implementations, the pins may extend through the entire coil board configuration or through only a portion thereof, or may be positioned in a layer of the coil board configuration. As illustrated, the one or more pins may comprise a plurality of pins positioned on one side of the coil board configuration 1290' with respect to a plane including the central axis (e.g., see FIGURE 13A), wherein the pins are generally parallel to the central axis and compensate for a misalignment of one or more rotary sensing coils with respect to a field generating coil configuration. More specifically, in various implementations the placement of the pins may be utilized to either increase or decrease the magnetic field through the individual coils, so as to compensate for a misalignment of the coils.

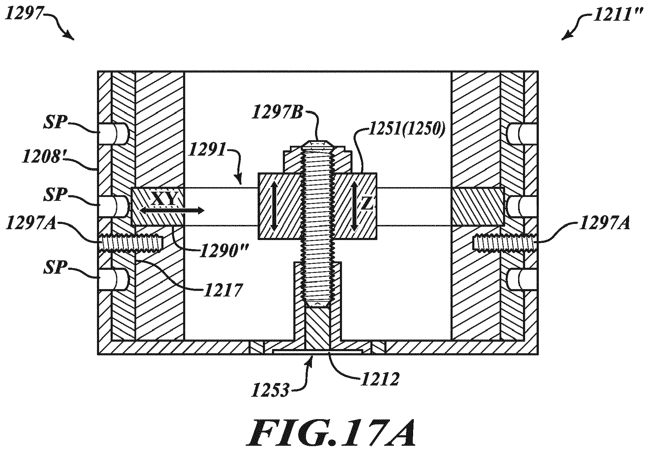

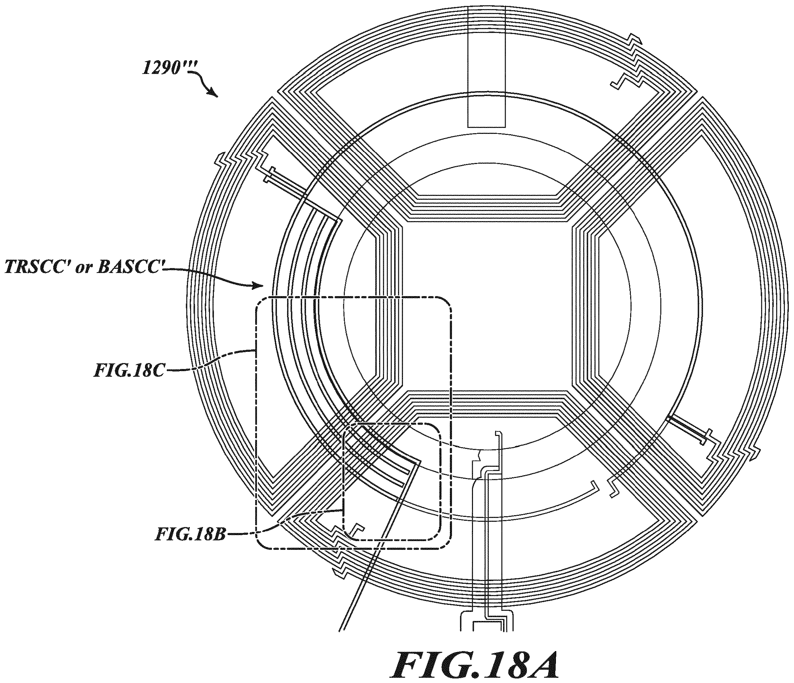

With reference to FIGURE 12B, FIGURE 17A illustrates an exemplary implementation of a stylus position detection portion 1211" in which a mechanical adjustment mechanism 1297 is employed to adjust a relative position of the coil board configuration 1290" and/or the disruptor configuration 1250 (e.g., a relative X, Y and/or Z position of the coil board configuration 1290" or the disruptor configuration 1250 with respect to each other and/or with respect to the housing/enclosure of the coil board configuration, etc.) In various implementations, the coil board configuration 1290" may include additional spacing (e.g., around the edges and/or in the center, etc.) to allow for the adjustable positioning range. It will be appreciated that the mechanical adjustment mechanism 1297 may be utilized to reduce a misalignment condition. In an exemplary embodiment, gross compensation for a misalignment may be provided using one or more other misalignment compensation elements (e.g., pads or pins 1298 of FIGURE 16, the shielding 1261', 1263 of FIGURES 15A to 15C, the adjustable coils TASCC of FIGURES 18A to 18C (discussed below), etc., and/or various combinations thereof), with position fine tuning provided by the mechanical adjustment mechanism 1297, to reduce any residual misalignment errors or improve the effectiveness of other misalignment compensation elements.

As illustrated, the mechanical position adjustment mechanism 1297 comprises set screws 1297A, 1297B. A first set screw 1297A (or multiple first set screws 1297A) facilitate(s) adjusting a relative XY position of the coil board configuration 1290", and a second set screw 1297B facilitates adjusting a Z position of the disruptor configuration 1250 relative to the coil board configuration 1290". In various implementations, the set screw(s) 1297A pass through and adjust the position of an alignment and mounting portion 1217 to which the coil board configuration 1290" is attached or otherwise coupled. An enclosure 1208' (e.g., which may be coupled to or part of a main body frame, such as frame 408 of FIGURE 4) encloses the coil board configuration 1290" and includes spacers SP which operate in relation to the relative movement. As described above (e.g., with respect to FIGURE 12A), the disruptor element 1251 moves within a hole 1291 of the coil board configuration 1290" and is coupled to a stylus suspension portion (e.g., see the suspension portion 307/407/407' of FIGURES 2-4) by a coupling configuration 1253, including an upper portion of a moving member 1212 (e.g., similar to the moving member 412 of FIGURES 3 and 4). In various implementations, the second set screw 1297B may be included as part of, or operate in conjunction with, the coupling configuration 1253 which may thus be at least partially adjustable and for which as noted above the second set screw 1297B facilitates adjusting a Z position of the disruptor element 1251 relative to the coil board configuration 1290".

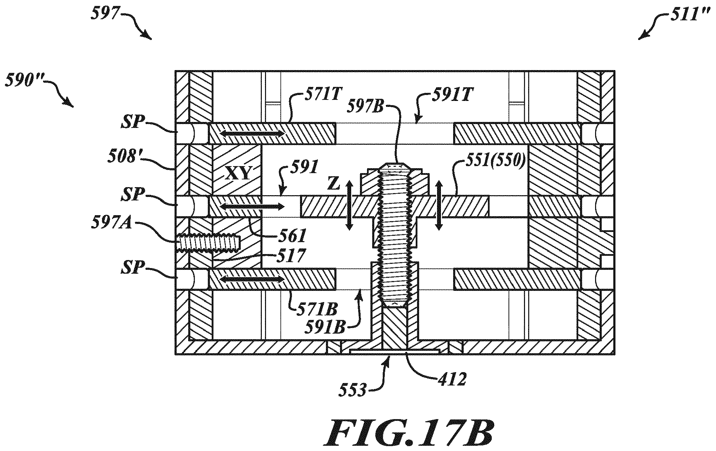

With reference to FIGURE 4, FIGURE 17B illustrates an exemplary implementation of a stylus position detection portion 511" in which a mechanical adjustment mechanism 597 is employed to adjust a relative position of a coil board configuration 590" and/or a disruptor configuration 550 (e.g., a relative X, Y and/or Z position of the coil board configuration or the disruptor configuration 550 with respect to each other and/or the housing/enclosure of the coil board configuration, etc.) In various implementations, the coil board configuration 590" (e.g., including the substrates 571T, 571B, and the field generating coil 561 and/or its substrate) may include additional spacing (e.g., around the edges and/or in the center, etc.) to allow for the adjustable positioning range. It will be appreciated that the mechanical adjustment mechanism 597 may be utilized to reduce a misalignment condition, similar to the operations described above with respect to FIGURE 17A.

As illustrated, the mechanical position adjustment mechanism 597 comprises set screws 597A, 597B. A first set screw 597A (or multiple first set screws 597A) facilitate(s) adjusting a relative XY position of the coil board configuration 590", and a second set screw 597B facilitates adjusting a Z position of the disruptor configuration 550 relative to the coil board configuration 590". In various implementations, the set screw(s) 597A pass through and adjust the position of an alignment and mounting portion 517 to which the coil board configuration 590" is attached or otherwise coupled. An enclosure 508' (e.g., which may be coupled to or part of a main body frame, such as frame 408 of FIGURE 4) encloses the coil board configuration 590" and includes spacers SP which operate in relation to the relative movement. In various implementations, the disruptor element 551 moves within a hole 591 of the coil board configuration 590" (e.g., within the field generating coil 561 and its substrate) and is coupled to a stylus suspension portion (e.g., see the suspension portion 307/407/407' of FIGURES 2-4) by a coupling configuration 553, including an upper portion of a moving member 412. In various implementations, the second set screw 597B may be included as part of, or operate in conjunction with, the coupling configuration 553 which may thus be at least partially adjustable and for which as noted above the second set screw 597B facilitates adjusting a Z position of the disruptor element 551 relative to the coil board configuration 590". In various implementations, a portion of the second set screw 597B, the moving member 412 and/or other portions of the coupling configuration 553 may move within a hole 591B of the substrate 571B (e.g., and for which in some implementations the substrate 571T may include a similar hole 591T, which may provide access to the second set screw 597B for making adjustments). In regard to FIGURES 17A and 17B, it will be appreciated that certain elements that are illustrated with or without hash lines may include holes or openings (e.g., as enabling certain relative movements, etc.) An example of such relative movements for the disruptor elements 551, 1251 within the respective stylus position detection portions 511', 1211' may be understood based at least in part on the illustration of FIGURE 3 with regard to the relative movement of the disruptor element 451 within the stylus position detection portion 411.

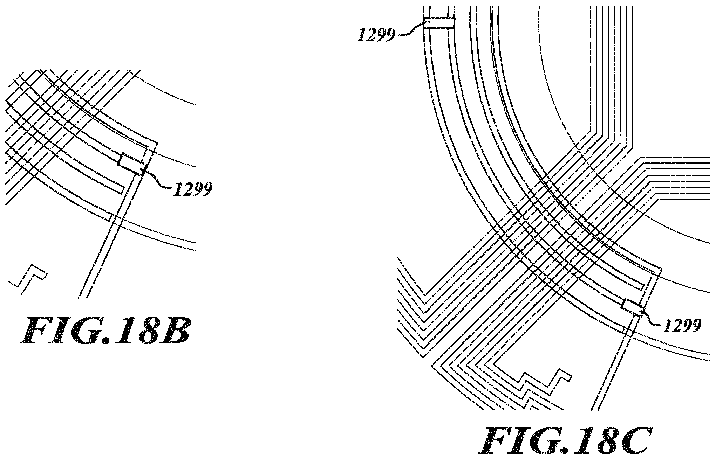

With reference to FIGURE 12B, FIGURES 18A to 18C illustrate an exemplary implementation in which misalignment compensation elements in the form of conductive shorts 1299 (e.g., a zero ohm resistor) may be added to a coil board configuration 1290‴ to compensate for misalignment errors. More specifically, in various implementations the conductive shorts 1299 may be added (e.g., such as at locations as indicated in FIGURES 18B and 18C) to adjust the current path and essentially adjust the coil size of one or more adjustable coils of the coil board configuration 1290‴, so as to effectively zero or otherwise compensate for certain determined offsets. In various implementations, the adjustable coils are at the top and/or bottom of the coil board configuration at the outer layers (e.g., as proximate to or part of the axial sensing coil configurations TASCC' or BASCC' in FIGURE 12B), for which the conductive shorts 1299 may be easily added or removed without requiring access to internal layers of the coil board configuration.

In various implementations, when a coil board configuration is initially manufactured/produced, certain misalignment compensation elements (e.g., the shielding 1261', 1263 of FIGURES 15A to 15C) may be included as part of the manufacturing/production (e.g., as a general technique to reduce any misalignment errors that may occur due to any misalignments of the coils). In various implementations, after the coil board configuration is manufactured/produced, measurements may be taken and/or testing may be performed to determine what offsets may exist (e.g., due to coil misalignments that may have occurred during the manufacturing/production). Based on such testing/measurements, certain determinations may be made regarding the application of one or more offset compensation techniques (e.g., such as those described above with respect to FIGURES 16, 17A, 17B, and 18A to 18C). For example, in regard to the techniques of FIGURES 16, 18B and 18C, based on such testing/measurements, determinations may be made as to where the misalignment compensation elements (e.g., pins, conductive shorts, etc.) should be placed/located/added, in order to compensate for the offsets and to achieve a desired offset compensated configuration. As another example, in regard to the techniques of FIGURES 17A and 17B, based on such testing/measurements (e.g., which may be performed initially and/or after techniques such as of those of FIGURES 16, 18B and 18C have been performed to make larger adjustments and for which the techniques of FIGURES 17A and 17B are then performed to make finer adjustments), determinations may be made as to what and/or how much of an adjustment or adjustments should be made, in order to compensate for the offsets (e.g., remaining offsets) and to achieve a desired offset compensated configuration. In various implementations, multiple iterations of one or more of the compensation techniques (e.g., including repeated testing and/or active monitoring of any indicated offsets, etc.) may be performed, including continuing to make adjustments until a desired offset compensated configuration is achieved (e.g., a configuration in which respective offset errors have been reduced to an acceptable level, etc.)

While FIGURES 15A to 15C, 16, 17A, and 18A to 18C have generally been discussed with reference to FIGURES 12B and 13A, the techniques discussed herein to compensate for and reduce/address offset errors may be employed in other implementations, such as the implementations discussed above with respect to FIGURES 3, 4 and 5, and with respect to FIGURES 9A, 9B and 10.

As noted above, in some implementations the scanning probe includes one or more mechanical position adjustment mechanisms to adjust a position of at least one of the coil board configuration or the disruptor configuration to further reduce the signal offset. In some implementations, the one or more mechanical position adjustment mechanisms may comprise one or more set screws.

In some implementations, a misalignment of at least one coil of the coil board configuration comprises a misalignment of one or more of the rotary sensing coils with respect to the field generating coil configuration.

In some implementations of a scanning probe, the coil board configuration further comprises a normalization coil configuration that is utilized to provide a measurement of the changing magnetic flux that is generated by the field generating coil configuration.

In some implementations of a scanning probe, the field generating coil configuration surrounds a hole in the coil board configuration, and the conductive disruptor element is cylindrical and is configured to move and fit within the hole of the coil board configuration.

In some implementations, a method comprises generating drive control signals to control a drive mechanism that moves a scanning probe as disclosed herein along a surface of a workpiece, and generating three-dimensional position information based on inductive sensing signals generated by the scanning probe as the scanning probe is moved along the surface of the workpiece.

In some implementations, a method comprises adding at least one misalignment compensation element to a coil board configuration of a scanning probe based at least in part on a determination of a signal offset resulting from the misalignment of at least one coil of the coil board configuration, and for which the at least one compensation element is added to reduce the signal offset. The scanning probe is moved along a surface of a workpiece, and three-dimensional position information is generated based on inductive sensing signals generated by the scanning probe as the scanning probe is moved along the surface of the workpiece. In some such implementations, the at least one misalignment compensation element comprises a first misalignment compensation element, and the first misalignment compensation element is added at a first location in the coil board configuration based at least in part on a determination that the addition of the first misalignment compensation element at the first location reduces the signal offset. The first location may be selected from a plurality of possible locations based on a determination that the positioning of the first misalignment compensation element at the first location results in a greater reduction in the signal offset than would result from a positioning of the first misalignment compensation element at other locations of the plurality of possible locations.

While preferred implementations of the present disclosure have been illustrated and described, numerous variations in the illustrated and described arrangements of features and sequences of operations will be apparent to one skilled in the art based on this disclosure. Various alternative forms may be used to implement the principles disclosed herein. In addition, the various implementations described above can be combined to provide further implementations. Aspects of the implementations can be modified, if necessary to employ concepts of the various applications to provide yet further implementations.

These and other changes can be made to the implementations in light of the above-detailed description. In general, in the following claims, the terms used should not be construed to limit the claims to the specific implementations disclosed in the specification.

## Claims

1. A scanning probe (300, 400) for a coordinate measuring machine, the scanning probe comprising:

   a stylus suspension portion (307, 407) that is coupled to a frame (408) of the scanning probe, comprising:

   a stylus coupling portion (342, 442) that is configured to be rigidly coupled to a stylus (306, 406); and
   a stylus motion mechanism (309, 409) that is configured to enable axial motion of the stylus coupling portion along an axial direction (O), and rotary motion of the stylus coupling portion about a rotation center (RC); and

   a stylus position detection portion (1211, 1311) arranged along a central axis that is parallel to the axial direction and nominally aligned with the rotation center, comprising:

   a coil board configuration (1209, 1290', 1290''', 1590) including a plurality of coils comprising:

   a field generating coil configuration (1206) comprising at least one field generating coil (1261);
   a top axial sensing coil configuration (TASCC) comprising at least one top axial sensing coil;
   a bottom axial sensing coil configuration (BASCC) comprising at least one bottom axial sensing coil; and
   N top rotary sensing coils (TRSC) and N bottom rotary sensing coils (BRSC), where N is an integer greater than 3;

   at least one misalignment compensation element (1261', 1263, 1298, 1299) that is configured to compensate a signal offset that results from a misalignment of at least one coil of the coil board configuration, wherein the coil board configuration (1590) comprises a printed circuit board with a plurality of layers in which the coils (TASCC, BASCC, TRSC, BRSC, 1261) are located and the misalignment of the at least one coil results from a registration error in a layer to layer registration as part of a fabrication process;

a disruptor configuration (1250) comprising a conductive disruptor element (1251) that provides a disruptor area, wherein the disruptor element is located along the central axis in a disruptor motion volume (MV) and the disruptor element is coupled to the stylus suspension portion by a coupling configuration, wherein the disruptor element moves in the disruptor motion volume relative to an undeflected position (UNDF) in response to a deflection of the stylus suspension portion, the disruptor element moving over operating motion ranges +/- Rz along the axial direction in response to the axial motion, and over respective operating motion ranges +/- Rx and +/- Ry along orthogonal X and Y directions that are orthogonal to the axial direction in response to the rotary motion, the field generating coil configuration generating a changing magnetic flux generally along the axial direction in the disruptor motion volume in response to a coil drive signal; and

signal processing and control circuitry (380, 480, 680) that is operably connected to the coils of the stylus position detection portion to provide the coil drive signal and configured to input signals from the coil board configuration comprising respective signal components provided by the respective rotary and axial sensing coils of the coil board configuration, and output signals indicative of an axial position and a rotary position of at least one of the disruptor element or the stylus relative to the frame of the scanning probe.

2. The scanning probe of Claim 1, wherein the at least one misalignment compensation element (1298, 1299) is added to the coil board configuration based at least in part on a determination of a signal offset resulting from the misalignment of the at least one coil, and for which the at least one compensation element is added to reduce the signal offset.

3. The scanning probe of Claim 2, wherein the at least one misalignment compensation element comprises a first misalignment compensation element, and the first misalignment compensation element is added at a first location in the coil board configuration based at least in part on a determination that the addition of the first misalignment compensation element at the first location reduces the signal offset.

4. The scanning probe of Claim 3, wherein the first location is selected from a plurality of possible locations based on a determination that the positioning of the first misalignment compensation element at the first location results in a greater reduction in the signal offset than would result from a positioning of the first misalignment compensation element at other locations of the plurality of possible locations.

5. The scanning probe of Claim 2, wherein the at least one misalignment compensation element comprises one or more pads or pins (1298), which, in operation, increase or decrease a magnetic field through at least one coil and which correspondingly reduce the signal offset.

6. The scanning probe of Claim 5, wherein the one or more pads or pins comprise a plurality of pins positioned on one side of the coil board configuration with respect to a plane including the central axis, wherein the pins are generally parallel to the central axis.

7. The scanning probe of Claim 2, wherein the at least one misalignment compensation element comprises one or more conductive shorts (1299), which, in operation, adjust a size of a coil of the coil board configuration.

8. The scanning probe of Claim 1, wherein:

the field generating coil configuration comprises a top field generating coil configuration and a bottom field generating coil configuration; and
the at least one misalignment compensation element comprises one or more conductive shields (1263T) positioned proximate to the top field generating coil configuration and one or more conductive shields (1263B) positioned proximate to the bottom field generating coil configuration.

9. The scanning probe of Claim 8, wherein,

the one or more conductive shields positioned proximate to the top field generating coil configuration comprise:

an inner conductive shield configuration (1261T') having an area generally corresponding to an area of an inner portion of the top rotary sensing coils; and
an outer conductive shield configuration (1263T) having an area generally corresponding to an area of an outer portion of the top rotary sensing coils; and

the one or more conductive shields positioned proximate to the bottom field generating coil configuration comprise:

an inner conductive shield configuration (1261B') having an area generally corresponding to an area of an inner portion of the bottom rotary sensing coils; and
an outer conductive shield configuration (1263B) having an area generally corresponding to an area of an outer portion of the bottom rotary sensing coils.

10. The scanning probe of Claim 1, further comprising one or more mechanical position adjustment mechanisms (597, 1297) to adjust a position of at least one of the coil board configuration or the disruptor configuration to further reduce the signal offset.

11. The scanning probe of Claim 1, wherein the misalignment of the at least one coil of the coil board configuration comprises a misalignment of one or more of the rotary sensing coils with respect to the field generating coil configuration.

12. The scanning probe of Claim 1, wherein the coil board configuration further comprises a normalization coil configuration ($TR_N$, $BR_N$) that is utilized to provide a measurement of the changing magnetic flux that is generated by the field generating coil configuration.

13. The scanning probe of Claim 1, wherein:

the field generating coil configuration surrounds a hole (1291) in the coil board configuration; and
the conductive disruptor element is cylindrical and is configured to move and fit within the hole of the coil board configuration.

14. The scanning probe of Claim 1, wherein the scanning probe is included in a system, comprising:

a drive mechanism (220); and
an attachment portion (224) attaching the scanning probe to the drive mechanism.

15. A method, comprising:

moving a scanning probe (300, 400) along a surface of a workpiece (W); and
generating three-dimensional position information based on inductive sensing signals generated by the scanning probe as the scanning probe is moved along the surface of the workpiece, wherein the scanning probe comprises:

a stylus suspension portion (307, 407) that is coupled to a frame (408) of the scanning probe, comprising:

a stylus coupling portion (342, 442) that is configured to be rigidly coupled to a stylus (306, 406); and
a stylus motion mechanism (309, 409) that is configured to enable axial motion of the stylus coupling portion along an axial direction (O), and rotary motion of the stylus coupling portion about a rotation center (RC); and

a stylus position detection portion (1211, 1311) arranged along a central axis that is parallel to the axial direction and nominally aligned with the rotation center, comprising:

a coil board configuration (1290, 1290', 1290''', 1590) including a plurality of coils comprising:

a field generating coil configuration (1260) comprising at least one field generating coil (1261);
a top axial sensing coil configuration (TASCC) comprising at least one top axial sensing coil;
a bottom axial sensing coil configuration (BASCC) comprising at least one bottom axial sensing coil; and
N top rotary sensing coils (TRSC) and N bottom rotary sensing coils (BRSC), where N is an integer greater than 3;

at least one misalignment compensation element (1261', 1263, 1298, 1299) that is configured to compensate a signal offset that results from a misalignment of at least one coil of the coil board configuration, wherein the coil board configuration (1590) comprises a printed circuit board with a plurality of layers in which the coils (TASCC, BASCC, TRSC, BRSC, 1261) are located and the misalignment of the at least one coil results from a registration error in a layer to layer registration as part of a fabrication process;

a disruptor configuration (1250) comprising a conductive disruptor element (1251) that provides a disruptor area, wherein the disruptor element is located along the central axis in a disruptor motion volume (MV) and the disruptor element is coupled to the stylus suspension portion by a coupling configuration, wherein the disruptor element moves in the disruptor motion volume relative to an undeflected position (UNDF) in response to a deflection of the stylus suspension portion, the disruptor element moving over operating motion ranges +/- Rz along the axial direction in response to the axial motion, and over respective operating motion ranges +/- Rx and +/- Ry along orthogonal X and Y directions that are orthogonal to the axial direction in response to the rotary motion, the field generating coil configuration generating a changing magnetic flux generally along the axial direction in the disruptor motion volume in response to a coil drive signal; and

signal processing and control circuitry (380, 480, 680) that is operably connected to the coils of the stylus position detection portion to provide the coil drive signal and configured to input signals from the coil board configuration comprising respective signal components provided by the respective rotary and axial sensing coils of the coil board configuration, and output signals indicative of an axial position and a rotary position of at least one of the disruptor element or the stylus relative to the frame of the scanning probe.

## Patentansprüche

1. Rastersonde (300, 400) für eine Koordinatenmessmaschine, wobei die Rastersonde Folgendes aufweist:

einen Stiftaufhängungsabschnitt (307, 407), der an einen Rahmen (408) der Rastersonde gekoppelt ist, der Folgendes aufweist:

einen Stiftkopplungsabschnitt (342, 442), der dazu ausgelegt ist, fest mit einem Stift (306, 406) gekoppelt zu sein; und
einen Stiftbewegungsmechanismus (309, 409), der dazu ausgelegt ist, Axialbewegung des Stiftkopplungsabschnitts entlang einer Axialrichtung (O) und Drehbewegung des Stiftkopplungsabschnitts um ein Drehzentrum (RC) zu gestatten; und

einen Stiftpositionsdetektionsabschnitt (1211, 1311), der entlang einer Mittelachse angeordnet ist, die parallel zu der Axialrichtung und nominal mit dem Drehzentrum ausgerichtet ist, und der Folgendes aufweist:
eine Spulenplattenkonfiguration (1209, 1290', 1290'', 1590), die eine Vielzahl an Spulen aufweist, und Folgendes aufweist:

eine felderzeugende Spulenkonfiguration (1206), die mindestens eine felderzeugende Spule (1261) aufweist;
eine obere axiale Sensorspulenkonfiguration (TASCC - Top Axial Sensing Coil Configuration), die mindestens eine obere axiale Sensorspule aufweist;
eine untere axiale Sensorspulenkonfiguration (BASCC - Bottom Axial Sensing Coil Configuration), die mindestens eine untere axiale Sensorspule aufweist; und
N obere Drehsensorspulen (TRSC - Top Rotary Sensing Coil) und N untere Drehsensorspulen (BRSC - Bottom Rotary Sensing Coil), wobei N eine Ganzzahl größer als 3 ist;

mindestens ein Fehlausrichtungskompensierungselement (1261', 1263, 1298, 1299), das dazu ausgelegt ist, einen Signalversatz zu kompensieren, der aufgrund einer Fehlausrichtung mindestens einer Spule der Spulenplattenkonfiguration entsteht, wobei die Spulenplattenkonfiguration (1590) eine gedruckte Leiterplatte mit einer Vielzahl an Schichten aufweist, in denen sich die Spulen (TASCC, BASCC, TRSC, BRSC, 1261) befinden, und die Fehlausrichtung der mindestens einen Spule aufgrund eines Registrierungsfehlers in einer Schicht für Schichtregistrierung als Teil eines Herstellungsprozesses entsteht;
eine Disruptorkonfiguration (1250), die ein leitfähiges Disruptorelement (1251), das einen Disruptorbereich bereitstellt, aufweist, wobei sich das Disruptorelement entlang der Mittelachse in einem Disruptorbewegungsraum (MV - Motion Volume) befindet und das Disruptorelement über eine Kopplungskonfiguration mit dem Stiftaufhängungsabschnitt gekoppelt ist, wobei sich das Disruptorelement in dem Disruptorbewegungsraum in Reaktion auf eine Auslenkung des Stiftaufhängungsabschnitts relativ zu einer nicht ausgelenkten Stellung (UNDF - Undeflected) bewegt, wobei sich das Disruptorelement in Reaktion auf die Axialbewegung über Betriebsbewegungsbereiche +/- Rz entlang der Axialrichtung und in Reaktion auf die Drehbewegung über jeweilige Betriebsbewegungsbereiche +/- Rx und +/- Ry entlang orthogonaler X- und Y-Richtungen, die orthogonal zu der Axialrichtung sind, bewegt, wobei die felderzeugende Spulenkonfiguration in Reaktion auf ein Spulenantriebssignal einen sich ändernden Magnetfluss im Allgemeinen entlang der Axialrichtung in dem Disruptorbewegungsraum erzeugt; und

Signalverarbeitung und Steuerkreis (380, 480, 680), der mit den Spulen des Stiftpositionsdetektionsabschnitts wirkverbunden ist, um das Spulenantriebssignal bereitzustellen, und dazu ausgelegt ist, Signale aus der Spulenplattenkonfiguration, die jeweilige Signalkomponenten, die von den jeweiligen Dreh- und Axialsensorspulen der Spulenplattenkonfiguration bereitgestellt werden, aufweisen, einzugeben und Signale, die eine Axialstellung und eine Drehstellung des Disruptorelements und/oder des Stifts relativ zu dem Rahmen der Rastersonde angeben, auszugeben.

2.  Rastersonde nach Anspruch 1, wobei das mindestens eine Fehlausrichtungskompensierungselement (1298, 1299) basierend zumindest teilweise auf einer Bestimmung eines Signalversatzes, der aufgrund der Fehlausrichtung der mindestens einen Spule entsteht und für den das mindestens eine Kompensierungselement hinzugefügt wird, um den Signalversatz zu reduzieren, zu der Spulenplattenkonfiguration hinzugefügt wird.

3.  Rastersonde nach Anspruch 2, wobei das mindestens eine Fehlausrichtungskompensierungselement ein erstes Fehlausrichtungskompensierungselement aufweist und das erste Fehlausrichtungskompensierungselement basierend zumindest teilweise auf einer Bestimmung, dass das Hinzufügen des ersten Fehlausrichtungskompensierungselements an der ersten Stelle den Signalversatz reduziert, an einer ersten Stelle in der Spulenplattenkonfiguration hinzugefügt wird.

4.  Rastersonde nach Anspruch 3, wobei die erste Stelle aus einer Vielzahl an möglichen Stellen basierend auf einer Bestimmung, dass die Positionierung des ersten Fehlausrichtungskompensierungselements an der ersten Stelle zu einer größeren Reduktion in dem Signalversatz führt, als wäre das Ergebnis von einer Positionierung des ersten Fehlausrichtungskompensierungselements an einer anderen Stelle der Vielzahl an möglichen Stellen, ausgewählt wird.

5.  Rastersonde nach Anspruch 2, wobei das mindestens eine Fehlausrichtungskompensierungselement eine bzw. einen oder mehrere Kontaktflächen bzw. Kontaktstifte (1298) aufweist, die bei Betrieb ein Magnetfeld durch mindestens eine Spule verstärken oder verringern und die entsprechend den Signalversatz reduzieren.

6.  Rastersonde nach Anspruch 5, wobei die eine bzw. der eine oder die mehreren Kontaktflächen oder Kontaktstifte eine Vielzahl an Kontaktstiften aufweisen, die an einer Seite der Spulenplattenkonfiguration hinsichtlich einer Ebene, die die Mittelachse aufweist, positioniert sind, wobei die Kontaktstifte im Allgemeinen parallel zu der Mittelachse sind.

7.  Rastersonde nach Anspruch 2, wobei das mindestens eine Fehlausrichtungskompensierungselement einen oder mehrere leitfähige Kurzschlüsse (1299) aufweist, die bei Betrieb eine Größe einer Spule der Spulenplattenkonfiguration anpassen.

8.  Rastersonde nach Anspruch 1, wobei:

    die felderzeugende Spulenkonfiguration eine obere felderzeugende Spulenkonfiguration und eine untere felderzeugende Spulenkonfiguration aufweist; und
    das mindestens eine Fehlausrichtungskompensierungselement ein oder mehrere leitfähige Schilder (1263T), die nahe der oberen felderzeugenden Spulenkonfiguration positioniert sind, und ein oder mehrere leitfähige Schilder (1263B), die nahe der unteren felderzeugenden Spulenkonfiguration positioniert sind, aufweist.

9.  Rastersonde nach Anspruch 8, wobei,

    das eine bzw. die mehreren leitfähigen Schilder, die nahe der oberen felderzeugenden Spulenkonfiguration positioniert sind, Folgendes aufweisen:

        eine innere leitfähige Schildkonfiguration (1261T'), die einen Bereich, der im Allgemeinen einem Bereich eines inneren Abschnitts der oberen Drehsensorspulen entspricht, aufweist; und

eine äußere leitfähige Schildkonfiguration (1263T), die einen Bereich, der im Allgemeinen einem Bereich eines äußeren Abschnitts der oberen Drehsensorspulen entspricht, aufweist; und

das eine bzw. die mehreren leitfähigen Schilder, die nahe der unteren felderzeugenden Spulenkonfiguration positioniert sind, Folgendes aufweisen:

eine innere leitfähige Schildkonfiguration (1261B‘), die einen Bereich, der im Allgemeinen einem Bereich eines inneren Abschnitts der unteren Drehsensorspulen entspricht, aufweist; und

eine äußere leitfähige Schildkonfiguration (1263B), die einen Bereich, der im Allgemeinen einem Bereich eines äußeren Abschnitts der unteren Drehsensorspulen entspricht, aufweist.

10. Rastersonde nach Anspruch 1, die ferner einen oder mehrere mechanische Positionsanpassungsmechanismen (597, 1297) zum Anpassen einer Position der Spulenplattenkonfiguration und/oder der Disruptorkonfiguration aufweist, um den Signalversatz weiter zu reduzieren.

11. Rastersonde nach Anspruch 1, wobei die Fehlausrichtung der mindestens einen Spule der Spulenplattenkonfiguration eine Fehlausrichtung einer oder mehrerer der Drehsensorspulen bezüglich der felderzeugenden Spulenkonfiguration aufweist.

12. Rastersonde nach Anspruch 1, wobei die Spulenplattenkonfiguration ferner eine Normalisierungsspulenkonfiguration ($TR_N$, $BR_N$) aufweist, die eingesetzt wird, um eine Messung des sich ändernden Magnetflusses, der durch die felderzeugende Spulenkonfiguration erzeugt wird, bereitzustellen.

13. Rastersonde nach Anspruch 1, wobei:

die felderzeugende Spulenkonfiguration ein Loch (1291) in der Spulenplattenkonfiguration umgibt; und
das leitfähige Disruptorelement zylindrisch ist und dazu ausgelegt ist, sich in dem Loch der Spulenplattenkonfiguration zu bewegen und in dieses zu passen.

14. Rastersonde nach Anspruch 1, wobei die Rastersonde in einem System enthalten ist, das Folgendes aufweist:

einen Antriebsmechanismus (220); und
einen Anbringungsabschnitt (224), der die Rastersonde an dem Antriebsmechanismus anbringt.

15. Verfahren, das Folgendes aufweist:

Bewegen einer Rastersonde (300, 400) entlang einer Oberfläche eines Werkstücks (W);
Erstellen dreidimensionaler Positionsinformationen basierend auf induktiven Abtastsignalen, die durch die Rastersonde erstellt werden, während die Rastersonde entlang der Oberfläche des Werkstücks bewegt wird, wobei die Rastersonde Folgendes aufweist:

einen Stiftaufhängungsabschnitt (307, 407), der an einen Rahmen (408) der Rastersonde gekoppelt ist, der Folgendes aufweist:

einen Stiftkopplungsabschnitt (342, 442), der dazu ausgelegt ist, fest mit einem Stift (306, 406) gekoppelt zu sein; und
einen Stiftbewegungsmechanismus (309, 409), der dazu ausgelegt ist, Axialbewegung des Stiftkopplungsabschnitts entlang einer Axialrichtung (O) und Drehbewegung des Stiftkopplungsabschnitts um ein Drehzentrum (RC) zu gestatten; und

einen Stiftpositionsdetektionsabschnitt (1211, 1311), der entlang einer Mittelachse angeordnet ist, die parallel zu der Axialrichtung und nominal mit dem Drehzentrum ausgerichtet ist, und der Folgendes aufweist:

eine Spulenplattenkonfiguration (1290, 1290', 1290''', 1590), die eine Vielzahl an Spulen aufweist, und Folgendes aufweist:

eine felderzeugende Spulenkonfiguration (1260), die mindestens eine felderzeugende Spule (1261) aufweist;

eine obere axiale Sensorspulenkonfiguration (TASCC - Top Axial Sensing Coil Configuration), die mindestens eine obere axiale Sensorspule aufweist;

eine untere axiale Sensorspulenkonfiguration (BASCC - Bottom Axial Sensing Coil Configuration), die mindestens eine untere axiale Sensorspule aufweist; und

N obere Drehsensorspulen (TRSC - Top Rotary Sensing Coil) und N untere Drehsensorspulen (BRSC - Bottom Rotary Sensing Coil), wobei N eine Ganzzahl größer als 3 ist;

mindestens ein Fehlausrichtungskompensierungselement (1261', 1263, 1298, 1299), das dazu ausgelegt ist, einen Signalversatz zu kompensieren, der aufgrund einer Fehlausrichtung mindestens einer Spule der Spulenplattenkonfiguration entsteht, wobei die Spulenplattenkonfiguration (1590) eine gedruckte Leiterplatte mit einer Vielzahl an Schichten aufweist, in denen sich die Spulen (TASCC, BASCC, TRSC, BRSC, 1261) befinden, und die Fehlausrichtung der mindestens einen Spule aufgrund eines Registrierungsfehlers in einer Schicht für Schichtregistrierung als Teil eines Herstellungsprozesses entsteht;

eine Disruptorkonfiguration (1250), die ein leitfähiges Disruptorelement (1251), das einen Disruptorbereich bereitstellt, aufweist, wobei sich das Disruptorelement entlang der Mittelachse in einem Disruptorbewegungsraum (MV - Motion Volume) befindet und das Disruptorelement über eine Kopplungskonfiguration mit dem Stiftaufhängungsabschnitt gekoppelt ist, wobei sich das Disruptorelement in dem Disruptorbewegungsraum in Reaktion auf eine Auslenkung des Stiftaufhängungsabschnitts relativ zu einer nicht ausgelenkten Stellung (UNDF - Undeflected) bewegt, wobei sich das Disruptorelement in Reaktion auf die Axialbewegung über Betriebsbewegungsbereiche +/- Rz entlang der Axialrichtung und in Reaktion auf die Drehbewegung über jeweilige Betriebsbewegungsbereiche +/- Rx und +/- Ry entlang orthogonaler X- und Y-Richtungen, die orthogonal zu der Axialrichtung sind, bewegt, wobei die felderzeugende Spulenkonfiguration in Reaktion auf ein Spulenantriebssignal einen sich ändernden Magnetfluss im Allgemeinen entlang der Axialrichtung in dem Disruptorbewegungsraum erzeugt; und

Signalverarbeitung und Steuerkreis (380, 480, 680), der mit den Spulen des Stiftpositionsdetektionsabschnitts wirkverbunden ist, um das Spulenantriebssignal bereitzustellen, und dazu ausgelegt ist, Signale aus der Spulenplattenkonfiguration, die jeweilige Signalkomponenten, die von den jeweiligen Dreh- und Axialsensorspulen der Spulenplattenkonfiguration bereitgestellt werden, aufweisen, einzugeben und Signale, die eine Axialstellung und eine Drehstellung des Disruptorelements und/oder des Stifts relativ zu dem Rahmen der Rastersonde angeben, auszugeben.

## Revendications

1. Sonde de balayage (300, 400) pour machine de mesure de coordonnées, la sonde de balayage comprenant :

une section de suspension de stylet (307, 407) qui est couplée à un cadre (408) de la sonde de balayage, comprenant :

une section de couplage de stylet (342, 442) qui est configurée pour être couplée rigidement à un stylet (306, 406) ; et

un mécanisme de mouvement de stylet (309, 409) qui est configuré pour permettre un mouvement axial de la section de couplage de stylet dans un sens axial (O), un mouvement rotatif de la section de couplage de stylet autour d'un centre de rotation (RC) ; et

une section de détection de position de stylet (1211, 1311) disposée le long d'un axe central qui est parallèle au sens axial et aligné nominalement avec le centre de rotation, comprenant :

une configuration de panneau de bobines (1209, 1290', 1290''', 1590) incluant une pluralité de bobines comprenant :

une configuration de bobines de génération de champ (1206) comprenant au moins une bobine de génération de champ (1261) ;

une configuration de bobines de détection axiales supérieures (TASCC) comprenant au moins une bobine de détection axiale supérieure ;

une configuration de bobines de détection axiales inférieures (BASCC) comprenant au moins une bobine de détection axiale inférieure ; et

N bobines de détection rotatives supérieures (TRSC) et N bobines de détection rotatives inférieures (BRSC), N étant nombre entier supérieur à 3 ;

au moins un élément de compensation de désalignement (1261', 1263, 1298, 1299) qui est configuré pour compenser un décalage de signal qui résulte d'un désalignement d'au moins une bobine de la configuration de panneau de bobines, la configuration de panneau de bobines (1590) comprenant un circuit imprimé doté d'une pluralité de couches dans lesquelles les bobines (TASCC, BASCC, TRSC, BRSC, 1261) se trouvent et le désalignement de l'au moins une bobine résultant d'une erreur d'enregistrement dans une couche d'enregistrement de couches faisant partie d'un processus de fabrication ;

une configuration de disrupteur (1250) comprenant un élément disrupteur conducteur (1251) qui crée une zone de disruption, l'élément disrupteur étant situé le long de l'axe central dans un volume de mouvement de disrupteur (MV) et l'élément disrupteur étant couplé à la section de suspension de stylet par une configuration de couplage, l'élément disrupteur se déplaçant dans le volume de déplacement de disrupteur par rapport à une position non déviée (UNDF) en réaction à une déflexion de la section de suspension de stylet, l'élément disrupteur se déplaçant sur des plages de mouvement fonctionnelles +/- Rz dans le sens axial en réaction au mouvement axial, et sur des plages de mouvement fonctionnelles respectives +/- Rx et +/- dans les sens orthogonaux X et Y qui sont orthogonaux au sens axial en réaction au mouvement rotatif, la configuration de bobines de génération de champ générant un flux magnétique variable globalement dans le sens axial dans le volume de mouvement de disrupteur en réaction à un signal d'entraînement de bobines ; et

des circuits de traitement et de commande de signal (380, 480, 680) qui sont connectés fonctionnellement aux bobines de la section de détection de position de stylet pour fournir le signal d'entraînement de bobines et configurés pour entrer des signaux de la configuration de panneau de bobines comprenant des composants de signaux respectifs fournis par les bobines de détection rotatives et axiales respectives de la configuration de panneau de bobines, et émettre des signaux indicateurs d'une position axiale et d'une position de rotation d'au moins un parmi l'élément disrupteur ou le stylet par rapport au cadre de la sonde de balayage.

2.  Sonde de balayage selon la revendication 1, dans laquelle l'au moins un élément de compensation de désalignement (1298, 1299) est ajouté à la configuration du panneau de bobines en se basant au moins en partie sur une détermination d'un décalage de signal résultant du désalignement de l'au moins une bobine, et pour laquelle l'au moins un élément de compensation est ajouté pour réduire le décalage de signal.

3.  Sonde de balayage selon la revendication 2, dans laquelle l'au moins un élément de compensation de désalignement comprend un premier élément de compensation de désalignement, et le premier élément de compensation de désalignement est ajouté à un premier emplacement dans la configuration de panneau de bobines en se basant au moins en partie sur une détermination que l'ajout du premier élément de compensation de désalignement au premier emplacement réduit le décalage de signal.

4.  Sonde de balayage selon la revendication 3, dans laquelle le premier emplacement est sélectionné parmi une pluralité d'emplacements possibles en se basant sur une détermination que le positionnement du premier élément de compensation de désalignement au premier emplacement résulte en une plus forte réduction du décalage de signal que celle qui résulterait d'un positionnement du premier élément de compensation de désalignement à d'autres emplacements de la pluralité d'emplacements possibles.

5.  Sonde de balayage selon la revendication 2, dans laquelle l'au moins un élément de compensation de désalignement comprend un ou plusieurs tampons ou broches (1298) qui, en fonctionnement, augmentent ou diminuent un champ magnétique à travers au moins une bobine et réduisent de manière correspondante le décalage de signal.

6.  Sonde de balayage selon la revendication 5, dans laquelle le ou les plusieurs tampons ou broches comprennent une pluralité de broches positionnées sur un côté de la configuration de panneau de bobines par rapport à un plan incluant l'axe central, les broches étant globalement parallèles à l'axe central.

7.  Sonde de balayage selon la revendication 2, dans laquelle l'au moins un élément de compensation de désalignement comprend un ou plusieurs courts-circuits conducteurs (1299) qui, en fonctionnement, règlent une taille d'une bobine de la configuration de panneau de bobines.

8. Sonde de balayage selon la revendication 1, dans laquelle :

la configuration de bobines de génération de champ comprend une configuration de bobines de génération de champ supérieure et une configuration de bobines de génération de champ inférieure ; et
l'au moins un élément de compensation de désalignement comprend un ou plusieurs blindages conducteurs (1263T) positionnés à proximité de la configuration de bobines de génération de champ supérieure et un ou plusieurs blindages conducteurs (1263B) positionnés à proximité de la configuration de bobines de génération de champ inférieure.

9. Sonde de balayage selon la revendication 8, dans laquelle

le ou les plusieurs blindages conducteurs positionnés à proximité de la configuration de bobines de génération de champ supérieure comprennent :

une configuration de blindage conducteur intérieure (1261T') ayant une superficie correspondant globalement à une superficie d'une section intérieure des bobines de détection rotatives supérieures ; et
une configuration de blindage conducteur extérieure (1263T) ayant une superficie correspondant globalement à une superficie d'une section extérieure des bobines de détection rotatives supérieures ; et

le ou les plusieurs blindages conducteurs positionnés à proximité de la configuration de bobines de génération de champ inférieure comprennent :

une configuration de blindage conducteur intérieure (1261B') ayant une superficie correspondant globalement à une superficie d'une section intérieure des bobines de détection rotatives inférieures ; et
une configuration de blindage conducteur extérieure (1263B) ayant une superficie correspondant globalement à une superficie d'une section extérieure des bobines de détection rotatives inférieures.

10. Sonde de balayage selon la revendication 1, comprenant en outre un ou plusieurs mécanismes de réglage de position mécaniques (597, 1297) pour régler une position d'au moins une parmi la configuration de panneau de bobines ou la configuration de disrupteur pour réduire encore le décalage de signal.

11. Sonde de balayage selon la revendication 1, dans laquelle le désalignement de l'au moins une bobine de la configuration de panneau de bobines comprend un désalignement d'une ou plusieurs des bobines de détection rotatives par rapport à la configuration de bobines de génération de champ.

12. Sonde de balayage selon la revendication 1, dans laquelle la configuration de panneau de bobines comprend en outre une configuration de bobines de normalisation ($TR_N$, $BR_N$) qui est utilisée pour fournir une mesure du flux magnétique variable qui est généré par la configuration de bobines de génération de champ.

13. Sonde de balayage selon la revendication 1, dans laquelle :

la configuration de bobines de génération de champ entoure un trou (1291) dans la configuration de panneau de bobines ; et
l'élément disrupteur conducteur est cylindrique et configuré pour se déplacer et s'ajuster dans le trou de la configuration de panneau de bobines.

14. Sonde de balayage selon la revendication 1, la sonde de balayage étant incluse dans un système, comprenant :

un mécanisme d'entraînement (220) ; et
une section de fixation (224) fixant la sonde de balayage au mécanisme d'entraînement.

15. Procédé comprenant :

le déplacement d'une sonde de balayage (300, 400) le long d'une surface d'une pièce usinée (W) ;
la génération d'informations de position tridimensionnelles en se basant sur des signaux de détection inductifs générés par la sonde de balayage lorsque la sonde de balayage est déplacée le long de la surface de la pièce usinée, la sonde de balayage comprenant :

une section de suspension de stylet (307, 407) qui est couplée à un cadre (408) de la sonde de balayage, comprenant :

une section de couplage de stylet (342, 442) qui est configurée pour être couplée rigidement à un stylet (306, 406) ; et
un mécanisme de mouvement de stylet (309, 409) qui est configuré pour permettre un mouvement axial de la section de couplage de stylet dans un sens axial (O), et un mouvement rotatif de la section de couplage de stylet autour d'un centre de rotation (RC) ; et

une section de détection de position de stylet (1211, 1311) disposée le long d'un axe central qui est parallèle au sens axial et aligné nominalement avec le centre de rotation, comprenant :

une configuration de panneau de bobines (1209, 1290', 1290‴, 1590) incluant une pluralité de bobines comprenant :

une configuration de bobines de génération de champ (1260) comprenant au moins une bobine de génération de champ (1261) ;
une configuration de bobines de détection axiales supérieures (TASCC) comprenant au moins une bobine de détection axiale supérieure ;
une configuration de bobines de détection axiales inférieures (BASCC) comprenant au moins une bobine de détection axiale inférieure ; et
N bobines de détection rotatives supérieures (TRSC) et N bobines de détection rotatives inférieures (BRSC), N étant nombre entier supérieur à 3 ;

au moins un élément de compensation de désalignement (1261', 1263, 1298, 1299) qui est configuré pour compenser un décalage de signal qui résulte d'un désalignement d'au moins une bobine de la configuration de panneau de bobines, la configuration de panneau de bobines (1590) comprenant un circuit imprimé doté d'une pluralité de couches dans lesquelles les bobines (TASCC, BASCC, TRSC, BRSC, 1261) se trouvent et le désalignement de l'au moins une bobine résultant d'une erreur d'enregistrement dans une couche d'enregistrement de couches faisant partie d'un processus de fabrication ;
une configuration de disrupteur (1250) comprenant un élément disrupteur conducteur (1251) qui crée une zone de disruption, l'élément disrupteur étant situé le long de l'axe central dans un volume de mouvement de disrupteur (MV) et l'élément disrupteur étant couplé à la section de suspension de stylet par une configuration de couplage, l'élément disrupteur se déplaçant dans le volume de déplacement de disrupteur par rapport à une position non déviée (UNDF) en réaction à une déflexion de la section de suspension de stylet, l'élément disrupteur se déplaçant sur des plages de mouvement fonctionnelles +/- Rz dans le sens axial en réaction au mouvement axial, et sur des plages de mouvement fonctionnelles respectives +/- Rx et +/- dans les sens orthogonaux X et Y qui sont orthogonaux au sens axial en réaction au mouvement rotatif, la configuration de bobines de génération de champ générant un flux magnétique variable globalement dans le sens axial dans le volume de mouvement de disrupteur en réaction à un signal d'entraînement de bobines ; et
des circuits de traitement et de commande de signal (380, 480, 680) qui sont connectés fonctionnellement aux bobines de la section de détection de position de stylet pour fournir le signal d'entraînement de bobines et configurés pour entrer des signaux de configuration de panneau de bobines comprenant des composants de signaux respectifs fournis par les bobines de détection rotatives et axiales respectives de la configuration de panneau de bobines, et émettre des signaux indicateurs d'une position axiale et d'une position de rotation d'au moins un parmi l'élément disrupteur ou le stylet par rapport au cadre de la sonde de balayage.

FIG. 1

200

CMM

224

RPSOut
(e.g. X, Y
signals)

Attachment
Portion

APSOut (e.g. Z
signal)

Signal Processing and Control Circuitry — 380

300

ASigs

311

RSigs

RSC     ASCC

370

DSig

Rotary Sensing
Coils (TRSCi,
BRSCi)
Rotary Position Detection
Configuration

Axial Sensing Coil
Config. (TASCC,
BASCC)
Axial Position Detection
Configuration

302

Receiver Coil Portion

Field Generating Coil Config. — 360

351 (350)

Disruptor Element

307

Stylus Motion Mechanism — 309

Stylus Coupling Portion — 342

Stylus — 306

FIG. 2

*FIG. 3*

400

480

511

402

417 (typical)

407'

409

436A

436B

436C

440

434 → 436

410 → 412

436B

408

436A

SP&C Circuitry

571T

419 (typical)

561 (560)

571B

551

415

412C

O ( axial direction)

412B

RC

412A

414

442

444

406

448

Z

X ⊙ → Y

FIG. 4

FIG. 5

| Comp. Pair CPi | TRSCi | BRSCi |
|---|---|---|
| CP1 = | TRSC1 | BRSC1 |
| CP2 = | TRSC2 | BRSC2 |
| CP3 = | TRSC3 | BRSC3 |
| CP4 = | TRSC4 | BRSC4 |

FIG. 6

EP 4 019 888 B1

770A

CP4 (TRSC4, BRSC4)

751A, (750A)

CP1 (TRSC1, BRSC1)

CP2 (TRSC2, BRSC2)

TASCC, BASCC

TASCC', BASCC'

CP3 (TRSC3, BRSC3)

*FIG. 7A*

770B

CP4 (TRSC4, BRSC4)

751B, (750B)

CP1 (TRSC1, BRSC1)

CP2 (TRSC2, BRSC2)

TASCC, BASCC

CP3 (TRSC3, BRSC3)

Z Y

X

*FIG. 7B*

770C

CP4 (TRSC4, BRSC4)

751C, (750 C)

CP1 (TRSC1, BRSC1)

CP2 (TRSC2, BRSC2)

TASCC, BASCC

CP3 (TRSC3, BRSC3)

*FIG. 7C*

770D

CP4 (TRSC4, BRSC4)

751D (750D)

CP1 (TRSC1, BRSC1)

CP2 (TRSC2, BRSC2)

TASCC, BASCC

CP3 (TRSC3, BRSC3)

*FIG. 7D*

770E

NAA NAA

TRSC4 BRSC4

CP4

751E (750E)

BRSC1 CP1

TRSC1

TRSC2

CP2

BRSC2

TASCC, BASCC

BRSC3 TRSC3

CP3

*FIG. 7E*

FIG. 8A

FIG. 8B

FIG. 8C

FIG. 8D

FIG. 8E

EP 4 019 888 B1

FIG. 8F

FIG. 9A

FIG. 9B

EP 4 019 888 B1

FIG. 10

FIG. 11

FIG.12A

EP 4 019 888 B1

**FIG.12B**

EP 4 019 888 B1

*FIG.13A*

_1351_

Vias

TASCC or BASCC

**FIG.13B**

**FIG.13C**

**FIG.13D**

EP 4 019 888 B1

**FIG.13E**

1390

1350

1351

1390T

TASCC
1361T
TRSC
$TR_N$

$BR_N$
BRSC
1361B
BASCC

1390B

**FIG.13F**

**FIG.14A**

EP 4 019 888 B1

**FIG.14B**

EP 4 019 888 B1

Cross talk for U,V=1.1deg. Z sweep

Gain (mV/V)

Z Position (mm)

X
Y
Z

*FIG.14C*

FIG.14D

EP 4 019 888 B1

**FIG.15A**

**FIG.15B**

*FIG.15C*

**FIG.16**

EP 4 019 888 B1

**FIG.17A**

EP 4 019 888 B1

FIG.17B

*FIG.18A*

1290''''

TRSCC' or BASCC'

FIG.18C

FIG.18B

EP 4 019 888 B1

FIG.18C

FIG.18B

**REFERENCES CITED IN THE DESCRIPTION**

**Patent documents cited in the description**

- US 8438746 B
- US 7652275 B
- US 6971183 B
- US 4810966 A
- US 2020141717 A1
- DE 102011052609 A1